# EUROPEAN PATENT APPLICATION

(11) **EP 4 195 729 A1**
(43) Date of publication of application: **14.06.2023**
(21) Application number: 21863453.3
(22) Date of filing: 05.08.2021
(51) Int. Cl.: H04W 8/20

(54) **METHOD AND APPARATUS FOR MIGRATING PROFILE**

(30) Priority: 01.09.2020 CN 202010905607
(71) Applicant: Huawei Technologies Co., Ltd., Shenzhen, Guangdong 518129 (CN)
(72) Inventor: FAN, Shunan, Shenzhen, Guangdong 518129 (CN); LOWE, Christopher Kevan, Shenzhen, Guangdong 518129 (CN); REN, Qiandong, Shenzhen, Guangdong 518129 (CN)
(74) Representative: Pfenning, Meinig & Partner mbB
(86) International application number: PCT/CN2021/110700
(87) International publication number: WO 2022/048385

(57) **Abstract**

This application relates to a profile transfer method, and an apparatus. A first electronic device includes M profiles of eSIM modules, and determines at least one to-be-transferred profile in response to an operation command for a first transfer interface, where the first transfer interface is used to display transfer of the M profiles; the first electronic device sends a first message to a second electronic device, where the first message includes at least one piece of transfer information, and the transfer information includes at least one of the following: an identifier of a to-be-transferred profile, an address of a profile server corresponding to the to-be-transferred profile, or an identifier of the second electronic device; and the first electronic device displays, in the first transfer interface, that transfer preparation for the at least one to-be-transferred profile on the first electronic device is completed.

## Description

### CROSS-REFERENCE TO RELATED APPLICATIONS

This application claims priority to Chinese Patent Application No. 202010905607.X, filed with the China National Intellectual Property Administration on September 1, 2020 and entitled "PROFILE TRANSFER METHOD AND APPARATUS", which is incorporated herein by reference in its entirety.

### TECHNICAL FIELD

This application relates to the field of terminal technologies, and in particular, to a profile transfer method and an apparatus.

### BACKGROUND

It is an inevitable trend that subscriber identification module (subscriber identification module, SIM) card technologies evolve from conventional universal integrated circuit cards (universal integrated circuit cards, UICCs) to embedded universal integrated circuit cards (embedded universal integrated circuit cards, eUICCs). An eUICC is embedded in a main board of a terminal product and supports remote configuration and writing. A user may purchase a service package from an operator online and download a profile (profile) of an embedded subscriber identification module (embedded subscriber identification module, eSIM) online.

An existing eSIM card switching process is complex and time-consuming, affecting the use of eSIM cards.

### SUMMARY

This application provides a profile transfer method and an apparatus, to simplify the complexity of an eSIM card switching process of a user, and improve user experience.

According to a first aspect, this application provides a profile transfer method, applied to a first electronic device. The first electronic device includes M profiles of electronic subscriber identity modules eSIMs, and M is a positive integer greater than 1. In response to an operation command for a first transfer interface, at least one to-be-transferred profile is determined, where the first transfer interface is used to display transfer of the M profiles. A first message is sent to a second electronic device, where the first message includes at least one piece of transfer information, and the transfer information includes at least one of the following: an identifier of a to-be-transferred profile, an address of a profile server corresponding to the to-be-transferred profile, or an identifier of the second electronic device. That transfer preparation for the at least one to-be-transferred profile on the first electronic device is completed is displayed in the first transfer interface.

According to the foregoing method, the first electronic device may simultaneously send the transfer information of the at least one to-be-transferred profile to the target transfer device (the second electronic device), so as to accurately learn the profile server of the to-be-transferred profile according to the address of the profile server corresponding to the to-be-transferred profile in the at least one piece of transfer information, thereby avoiding a problem that when multiple to-be-transferred profiles are transferred at the same time, the profile server of the to-be-transferred profile may fail to be learned, leading to a transfer failure. In addition, considering that the user may initiate transfer of multiple profiles, the user does not need to initiate transfer of another to-be-transferred profile after transfer of one to-be-transferred profile is completed, so that the complexity of a card switching process of the user may be reduced. For the second transfer device, the user does not need either to actively initiate a transfer request from the second transfer device after the user confirms that a setting on the first device is successful, and may directly initiate transfer according to the received first message from the first electronic device and sequentially the obtained transfer information corresponding to the to-be-transferred profile, further reducing the complexity of a transfer process performed by the user.

In a possible implementation, the first transfer interface further includes a first control, and the first electronic device determines at least one to-be-transferred profile in response to an operation command for the first control, where the first control is used to determine the M profiles as to-be-transferred profiles.

According to the foregoing method, the at least one to-be-transferred profile may be determined from the first electronic device as the to-be-transferred profile based on selection of the first control by the user, so as to implement overall transfer of the at least one to-be-transferred profile, reduce user operations, and improve user experience.

In a possible implementation, before the first electronic device sends the first message to the second electronic device, the method further includes: obtaining a status of the to-be-transferred profile, where the status includes at least one of the following: an activated state, a deactivated state, a default network connection state, a standby network connection state, and a to-be-transferred state; determining a first priority of the to-be-transferred profile according to the status of the to-be-transferred profile; and determining the at least one piece of transfer information based on the first priority of the to-be-transferred profile.

According to the foregoing method, a first priority may be determined according to the status of the to-be-transferred profile, so as to determine a transfer sequence based on the first priority. For example, the first priority may be set by a user, so that the transfer sequence is determined based on a user requirement, or the transfer sequence may be determined based on a default network connection state and a standby network connection state corresponding to the profile. For example, a profile that is not in the default network connection state may be preferentially transferred, and then a profile that is in the default network connection state may be transferred, thereby improving fault tolerance of transfer. When the transfer of the profile that is not in a default network connection state fails, normal use of the first electronic device is not affected, and use experience of the user is improved.

In a possible implementation, the first transfer interface further includes a status control, where the status control is used to control a status of a profile; and in response to an operation command for the status control, determine the status of the to-be-transferred profile.

According to the foregoing method, the status of the to-be-transferred profile is determined in response to an operation command for the status control based on a user requirement, so that a transfer priority may be determined based on the status of the to-be-transferred profile that is determined by the user, thereby transferring the profile based on the user requirement, and improving user experience.

In a possible implementation, the first message further includes a status of at least one to-be-transferred profile.

According to the foregoing method, the second electronic device may determine the status of the at least one to-be-transferred profile by using the first message, so as to determine the priority of the to-be-transferred profile based on the status of the at least one to-be-transferred profile, thereby optimizing a transfer sequence on the second electronic device, and improving a transfer success rate and user experience of transfer.

In a possible implementation, before the first message is sent to the second electronic device, for one of the at least one piece of transfer information, a to-be-transferred profile corresponding to the transfer information of the first electronic device may be further deleted; and a status of the to-be-transferred profile is displayed as transfer preparation completed.

According to the foregoing method, the first electronic device may delete a corresponding profile before the second electronic device performs transfer, so as to improve the reliability of authentication performed by the profile server in a transfer process of the first electronic device and the second electronic device, and avoid a risk that the transfer is considered as illegal, leading to possible transfer failure.

In a possible implementation, a first deletion message is sent to the profile server, where the first deletion message is used to notify the profile server that deletion of the to-be-transferred profile of the first electronic device is completed.

According to the foregoing method, the first electronic device sends the first deletion message for the deleted profile to the profile server, so that the profile server updates a status of a current profile in a timely manner, to prepare for successful transfer of the second electronic device in the profile server, thereby improving the transfer success rate.

In a possible implementation, before the first message is sent to the second electronic device, for one of the at least one piece of transfer information, a first transfer request may be further sent to the profile server, where the first transfer request includes an identifier of the second electronic device and an identifier of the to-be-transferred profile; and a first transfer response from the profile server is received.

According to the foregoing method, the first electronic device may further send the first transfer request to the profile server, so as to notify the profile server to prepare for transfer to the second electronic device, thereby improving the transfer success rate of the second electronic device.

In a possible implementation, the first electronic device displays that the profile server allows the to-be-transferred profile to be transferred.

According to the foregoing method, the user may learn in a timely manner whether the current profile server is successfully authenticated, so as to determine current transfer progress, thereby improving user experience.

In a possible implementation, a first recovery command sent by the profile server is received, where the first recovery command is used to instruct the first electronic device to recover the to-be-transferred profile, the first recovery command includes the to-be-transferred profile, and a status of the to-be-transferred profile is displayed as transfer failure.

According to the foregoing method, when determining that transfer fails, the profile server may receive the first recovery command of the profile server, so as to recover, according to the first recovery command, a profile that fails to be transferred, thereby avoiding a loss that may be caused by a transfer failure, and improving user experience.

In a possible implementation, before the first electronic device sends the first message to the second electronic device, for one of the at least one piece of transfer information, the method further includes: determining an encrypted to-be-transferred profile according to the to-be-transferred profile; and sending the encrypted to-be-transferred profile to the second electronic device.

According to the foregoing method, the encrypted to-be-transferred profile may be sent to the second electronic device, so that the second electronic device is prevented from obtaining a corresponding profile from the profile server, and transfer efficiency is improved.

In a possible implementation, before the deleting a to-be-transferred profile of the first electronic device, the method further includes: receiving a first deletion command sent by the profile server, where the first deletion command is used to instruct the first electronic device to delete the to-be-transferred profile.

According to the foregoing method, after the profile determines that the to-be-transferred profile of the first electronic device can be deleted, that is, the first deletion command sent by the profile server is received, the to-be-transferred profile may be deleted. Therefore, a transfer failure is avoided, and a corresponding profile further needs to be recovered, thereby reducing the power consumption of the first electronic device.

In a possible implementation, the method further includes: receiving a second recovery command sent by the second electronic device, where the second recovery command is used to instruct the first electronic device to recover the to-be-transferred profile, the second recovery command includes the to-be-transferred profile; and displaying that a status of the to-be-transferred profile is transfer failure.

According to the foregoing method, the first electronic device may determine, by using the second recovery command sent by the second electronic device, that a corresponding to-be-transferred profile fails to be transferred, so as to recover the corresponding to-be-transferred profile.

According to a second aspect, this application provides a profile transfer method, applied to a first electronic device. The first electronic device includes M profiles of electronic subscriber identity modules eSIMs, and M is a positive integer greater than 1. In response to an operation command for a login control, an account interface of a user on the cloud server is displayed, where the login control is used by the user to log in to an account of the cloud server. A first query request is sent to the cloud server in response to an operation command for the first query control. The first query control is used by the user to query profile information of an eSIM module of the first electronic device. A first query response returned by the cloud server is received, and information about the M profiles of eSIM modules of the first electronic device managed by the cloud server is displayed. In response to an operation command for a first transfer interface, identifiers of N to-be-transferred profiles are determined, where the first transfer interface is used to determine whether a profile in the information about the M profiles of the eSIM modules is a to-be-transferred profile, and N is a positive integer less than or equal to M. A first transfer request is sent to the cloud server, where the first transfer request includes: the identifiers of the N to-be-transferred profiles and an identifier of the first electronic device. A first transfer response of the cloud server is received, and transfer results of the N to-be-transferred profiles in the first transfer response are displayed.

According to the foregoing method, the first electronic device may determine the profile information in the first electronic device according to the account of the cloud server, so that the first electronic device determines the information about the M to-be-transferred profiles based on the profile information of the first electronic device in the account of the cloud server, so that the first electronic device initiates a first transfer request to the cloud server. Therefore, by using the cloud server, the second electronic device obtains the corresponding M to-be-transferred profiles, thereby completing a process of transferring the M to-be-transferred profiles on the first electronic device to the second electronic device. This process may be implemented without the need for the first electronic device to send related information to the second electronic device, thereby reducing message sending and reducing participation of the first electronic device, and during a transfer process, normal use of the first electronic device is not affected, thereby improving use experience of a user.

In a possible implementation, before receiving the first transfer response of the cloud server, the first device may further receive, for one of the M to-be-transferred profiles, a first deletion command sent by the cloud server, where the first deletion command is used to instruct the first electronic device to delete the to-be-transferred profile; delete the to-be-transferred profile of the first electronic device; display a status of the to-be-transferred profile as a transfer preparation completed state; and send a first deletion message to the cloud server, where the first deletion message is used to notify the cloud server that deletion of the to-be-transferred profile of the first electronic device is completed.

According to the foregoing method, after receiving the first deletion command of the cloud server, the first electronic device may delete a corresponding to-be-transferred profile, so that the profile server may be prevented from generating a new profile, thereby reducing overheads of the profile server.

In a possible implementation, the first electronic device receives a recovery command sent by the cloud server, where the recovery command is used to instruct the first electronic device to recover the to-be-transferred profile, the recovery command includes the to-be-transferred profile, and a status of the to-be-transferred profile is displayed as transfer failure.

According to the foregoing method, the first electronic device determines, by using the recovery command sent by the cloud server, that a corresponding to-be-transferred profile fails to be transferred, so as to recover the to-be-transferred profile in a timely manner.

According to a third aspect, a profile transfer method is provided, applied to a second electronic device (a target transfer device), where the second electronic device supports at least M profiles of eSIM modules, and M is a positive integer greater than 1. The method includes: receiving a first message of a first electronic device, where the first message includes at least one piece of transfer information of the first electronic device, and the transfer information includes at least one of the following: an identifier of a to-be-transferred profile, an identifier of the first electronic device, or an address of a profile server corresponding to the to-be-transferred profile; displaying an identifier of the at least one to-be-transferred profile in a second transfer interface, where the second transfer interface is used to display transfer of the at least one to-be-transferred profile; in response to an operation command for the second transfer interface, obtaining and activating the at least one to-be-transferred profile according to the at least one piece of transfer information; and displaying that transfer of the at least one to-be-transferred profile on the second electronic device is completed.

According to the foregoing method, the second electronic device may determine, based on the first message sent by the first electronic device, the address of the profile server corresponding to the to-be-transferred profile in the at least one piece of transfer information, and accurately learn the profile server of the to-be-transferred profile, thereby improving the transfer success rate and transfer efficiency. The user does not need to actively initiate a transfer request from the second transfer device after confirming that the setting on the first device is successful, and may directly initiate transfer according to the received first message from the first electronic device, so as to initiate transfer according to the obtained transfer information corresponding to the to-be-transferred profile, thereby further reducing the complexity of a transfer process performed by the user. This feature improves the user experience of transferring eSIM cards.

In a possible implementation, before the obtaining and activating the at least one to-be-transferred profile, the method further includes: obtaining a status of the at least one to-be-transferred profile, where the status includes at least one of the following: an activated state, a deactivated state, a default network connection state, a standby network connection state, and a to-be-transferred state; determining a second priority of the at least one to-be-transferred profile according to the status of the at least one to-be-transferred profile; and obtaining and activating the at least one to-be-transferred profile based on the second priority.

According to the foregoing method, a second priority may be determined according to the status of the to-be-transferred profile, so as to determine a transfer sequence on the second electronic device based on the second priority. For example, the second priority may be set by a user, so that a transfer sequence is determined based on a user requirement, or the transfer sequence may be determined based on a default network connection state and a standby network connection state that correspond to the profile. For example, a profile that is in a default network connection state may be preferentially transferred, and then a profile that is not in a default network connection state is transferred, transfer efficiency may be improved, and after the profile that is in a default network connection state is successfully transferred, the second electronic device may be connected to the network in a timely manner, so that the second electronic device enters a normal use state as soon as possible, thereby improving use experience of a user.

In a possible implementation, the first message further includes a status of the at least one to-be-transferred profile.

According to the foregoing method, the second electronic device may determine the status of the at least one to-be-transferred profile by using the first message, so as to determine the priority of the to-be-transferred profile based on the status of the at least one to-be-transferred profile, thereby optimizing the transfer sequence on the second electronic device, and improving the transfer success rate and user experience of transfer.

In a possible implementation, the second transfer interface further includes a status control, where the status control is used to control the status of a profile, a status of the at least one to-be-transferred profile is displayed in the second transfer interface, and the status of the at least one to-be-transferred profile is determined in response to an operation command for the status control.

According to the foregoing method, the status of the to-be-transferred profile is determined in response to an operation command for the status control based on a user requirement, so that a transfer priority may be determined based on the status of the to-be-transferred profile that is determined by the user, thereby transferring the profile based on the user requirement, and improving user experience.

In a possible implementation, a status of the at least one to-be-transferred profile is displayed as transfer completed.

According to the foregoing method, the second electronic device may display the to-be-transferred profile that is transferred in a timely manner, thereby improving user experience.

In a possible implementation, before the at least one to-be-transferred profile is obtained, for one of the at least one to-be-transferred profile, a first transfer request may be further sent to the profile server according to an address of a profile server corresponding to the to-be-transferred profile, where the first transfer request includes an identifier of the first electronic device and an identifier of the to-be-transferred profile; and a first transfer response from the profile server is received, where the first transfer response includes a profile corresponding to the identifier of the to-be-transferred profile, an obtained profile corresponding to the identifier of the to-be-transferred profile on the profile server is displayed.

According to the foregoing method, the second electronic device may send the first transfer request to the profile server based on an address of the profile server, so as to obtain a corresponding to-be-transferred profile according to the profile server, to prepare for subsequent transfer. In addition, a version of a to-be-transferred profile that adapts to the second electronic device may be obtained by using the profile server, and there is no need to update the to-be-transferred profile after the corresponding to-be-transferred profile is downloaded, thereby improving the transfer efficiency and reducing the complexity of user transfer.

In a possible implementation, for one of the at least one to-be-transferred profile, a first encrypted to-be-transferred profile sent by the first electronic device is received, where the first encrypted to-be-transferred profile is generated after being encrypted based on the to-be-transferred profile.

According to the foregoing method, the second electronic device may obtain the to-be-transferred profile by using the first electronic device, and does not need to obtain the to-be-transferred profile by using the profile server, so as to avoid a problem that responding of the profile server may be slow when the profile server is accessed in a large quantity, and consequently, obtaining the to-be-transferred profile may fail or be slow.

In a possible implementation, for one of the at least one to-be-transferred profile, a second transfer request is sent to the profile server according to an address of a profile server corresponding to the to-be-transferred profile, where the second transfer request includes an identifier of the first electronic device and an identifier of the to-be-transferred profile; and a second transfer response from the profile server is received, where the second transfer response is used to indicate the first profile server to activate the to-be-transferred profile.

According to the foregoing method, the second electronic device may activate the to-be-transferred profile from the first electronic device by using the profile server, so as to complete a transfer process, thereby improving the transfer security.

In a possible implementation, the second transfer response further includes an updated profile corresponding to the identifier of the to-be-transferred profile; and the updated profile is activated.

According to the foregoing method, the second electronic device may obtain the version of the to-be-transferred profile of the second electronic device by using the profile server, thereby improving the transfer efficiency.

In a possible implementation, a recovery command is sent to the first electronic device, where the recovery command is used to instruct the first electronic device to recover the to-be-transferred profile, the recovery command includes the to-be-transferred profile, and a status of the to-be-transferred profile is displayed as transfer failure.

According to the foregoing method, when determining that transfer fails, the profile server may send the recovery command to the first electronic device, so that the first electronic device recovers, according to the recovery command, a profile that fails to be transferred, thereby avoiding a loss that may be caused by a transfer failure, and improving user experience.

According to a fourth aspect, this application provides a profile transfer method, applied to a second electronic device, where the second electronic device supports M profiles of electronic subscriber identity modules eSIMs, and M is a positive integer greater than 1. The method includes: displaying an account interface of a user on a cloud server in response to an operation command for a login interface, where the login interface is used by the user to log in to the cloud server; sending a first query request to the cloud server, where the first query request is used to query information about the M profiles of eSIM modules of the first electronic device managed by the cloud server; receiving a first query response returned by the cloud server, and displaying the information about M profiles of eSIM modules of the first electronic device managed by the cloud server; and sending a first transfer request to the cloud server in response to an operation command for a second transfer interface, where the first transfer request includes identifiers of the N to-be-transferred profiles and an identifier of the first electronic device, and the second transfer interface is used to determine whether a profile in the M profiles is a to-be-transferred profile, where N is a positive integer less than or equal to M; receiving a first transfer response of the cloud server, where the first transfer response includes profiles corresponding to identifiers of N to-be-transferred profiles of the first electronic device; obtaining and activating, according to the first transfer response, profiles corresponding to the identifiers of the N to-be-transferred profiles; and displaying activation results of the N profiles.

According to the foregoing method, the second electronic device may determine information about M profiles of eSIM modules of the first electronic device by using the account of the cloud server, so as to send the first transfer request to the cloud server, to obtain information about N profiles from the information about the M profiles of the eSIM modules as profiles to be transferred to the second electronic device. In this way, a corresponding profile is obtained by using the cloud server, so as to complete transfer of the profile. This process may be implemented without the need for the first electronic device to send related information to the second electronic device, thereby reducing message sending and reducing the participation of the first electronic device. Normal use of the first electronic device is not affected during the transfer process, and the use experience of the user is improved.

In a possible implementation, activation results of the N profiles are sent to the cloud server.

According to the foregoing method, the second electronic device may notify the cloud server of the activation results of the N profiles, so that the cloud server may determine transfer results of the N profiles in the transfer process based on the activation results of the N profiles, so that the cloud server synchronizes the transfer process.

According to a fifth aspect, a profile transfer method includes: A cloud server obtains account information of a user, where the account information of the user includes information about M profiles of eSIM modules of a first electronic device and an identifier of a second electronic device. The cloud server receives a first query request, where the first query request is used to query information about the M profiles of the first electronic device. The cloud server returns a first query response, where the first query response is used to indicate the information about M profiles of the first electronic device. The cloud server receives a first transfer request, where the first transfer request is used to request to transfer N profiles of the first electronic device. The cloud server sends a first transfer command to the second electronic device, where the first transfer command includes N profiles corresponding to identifiers of the N to-be-transferred profiles, the N to-be-transferred profiles are N profiles in the M profiles, and N is a positive integer less than M. The cloud server uses the N profiles corresponding to the identifiers of the N to-be-transferred profiles as N profiles of the second electronic device.

According to the foregoing method, the cloud server may determine information about M profiles based on the first query request sent by the first electronic device, and determine, according to the first transfer request sent by the first electronic device or the first transfer request sent by the second electronic device, transfer of the N to-be-transferred profiles, so that the N to-be-transferred profiles in the first electronic device are transferred to the second electronic device by using the N to-be-transferred profiles stored in the cloud server, and the first electronic device and the second electronic device do not need to perform transfer by using the profile server, signaling interaction between the first electronic device, the second electronic device, and the profile server is greatly reduced, power consumption of the electronic device is reduced, and user experience is improved.

In a possible implementation, the cloud server sends a first deletion command to the first electronic device, where the first deletion command is used to instruct the first electronic device to delete the N to-be-transferred profiles. The cloud server receives a first deletion response of the first electronic device, where the first deletion response is used to indicate whether the first electronic device successfully deletes the N to-be-transferred profiles. The cloud server determines, according to the first deletion response, N profiles corresponding to the identifiers of the N to-be-transferred profiles.

According to the foregoing method, the cloud server may send the first deletion command to the first electronic device, so as to prevent the cloud server from regenerating a corresponding profile, thereby reducing overheads of the cloud server.

In a possible implementation, the cloud server uses K to-be-transferred profiles that are successfully deleted by the first electronic device as K profiles corresponding to the identifiers of the N to-be-transferred profiles, where K is a positive integer less than N.

According to the foregoing method, the K to-be-transferred profiles may be successfully deleted, so that the cloud server is prevented from regenerating a corresponding profile, and overheads of the cloud server are reduced.

In a possible implementation, the cloud server changes the status of the K to-be-transferred profiles that are successfully deleted by the first electronic device to deleted.

In a possible implementation, the cloud server generates (N-K) profiles according to identifiers of (N-K) to-be-transferred profiles that are not successfully deleted by the first electronic device.

In a possible implementation, the cloud server sets the N-K to-be-transferred profiles as N-K profiles of the second electronic device.

According to the foregoing method, a corresponding profile may be regenerated according to a to-be-transferred profile that cannot be successfully deleted, thereby improving the transfer success rate.

In a possible implementation, the cloud server receives a transfer result of a first profile that is sent by the second electronic device, where the transfer result is used to indicate that the first profile fails to be transferred, the transfer result includes an identifier of a to-be-transferred profile corresponding to the first profile, and the first profile is one of the N profiles. The cloud server sends a recovery command to the first electronic device, where the recovery command is used to instruct the first electronic device to recover the to-be-transferred profile, and the recover command includes the to-be-transferred profile.

According to the foregoing method, the cloud server may determine, based on transfer results of the second electronic device, that the first profile fails to be transferred, and generate a corresponding recovery command, so that the first electronic device recovers the to-be-transferred profile corresponding to the first profile.

According to a sixth aspect, an embodiment of this application provides an electronic device, including a touchscreen, one or more processors, a memory, multiple application programs, and one or more computer programs. The touchscreen includes a touch-sensitive surface and a display, the one or more computer programs are stored in the memory, the one or more computer programs include instructions, and when the instructions are executed by the electronic device, the electronic device is enabled to perform the method according to any possible design in the first aspect or the second aspect of embodiments of this application.

According to a seventh aspect, an embodiment of this application provides a computer storage medium, where the computer storage medium stores a program, and when the program is run on an electronic device, the electronic device is enabled to perform the method according to any possible design in the first aspect or the second aspect.

According to an eighth aspect, an embodiment of this application provides a computer program product, and when the computer program product is run on an electronic device, the electronic device is enabled to perform the method according to any possible design in the first aspect or the second aspect.

In addition, for technical effects of any possible design in the sixth aspect to the eighth aspect, refer to technical effects of different designs in the first aspect and the second aspect, and details are not described herein again.

According to a ninth aspect, an embodiment of this application provides an electronic device, including a touchscreen, one or more processors, a memory, multiple application programs, and one or more computer programs. The touchscreen includes a touch-sensitive surface and a display, the one or more computer programs are stored in the memory, the one or more computer programs include instructions, and when the instructions are executed by the electronic device, the electronic device is enabled to perform the method according to any possible design in the third aspect or the fourth aspect of embodiments of this application.

According to a tenth aspect, an embodiment of this application provides a computer storage medium, where the computer storage medium stores a program, and when the program is run on an electronic device, the electronic device is enabled to perform the method according to any possible design in the third aspect or the fourth aspect.

According to an eleventh aspect, an embodiment of this application provides a computer program product, and when the computer program product is run on an electronic device, the electronic device is enabled to perform the method according to any possible design in the third aspect or the fourth aspect.

In addition, for technical effects of any possible design in the ninth aspect to the eleventh aspect, refer to technical effects of different designs in the third aspect or the fourth aspect, and details are not described herein again.

According to a twelfth aspect, this application provides a communication apparatus, where the communication apparatus is, for example, a cloud server described above. The communication apparatus includes a processor and a transceiver, where the processor and the transceiver are configured to implement the method according to any one of the fifth aspect or the possible designs in the fifth aspect. For example, the communication apparatus is a chip disposed in a communication device. The transceiver is implemented, for example, by using an antenna, a feeder, a codec and the like in a communication device, alternatively, if the communication apparatus is the chip disposed in the communication device, the transceiver is, for example, a communication interface in the chip, where the communication interface is connected to a radio frequency transceiver component in the communication device, to send and receive information by using the radio frequency transceiver component. The transceiver may be a function module, where the function module can complete both a function of receiving information and a function of sending information. Alternatively, the transceiver may be a general term of a transmitter and a receiver, where the transmitter is configured to complete a function of sending information, and the receiver is configured to complete a function of receiving information.

According to a thirteenth aspect, this application provides a communication apparatus. The communication apparatus may be a cloud server in the foregoing method designs. For example, the communication apparatus is a chip disposed in a communication device. The communication apparatus may include: a communication interface, configured to communicate with another apparatus or device; and a processor, coupled to the communication interface. The communication interface may be a transceiver in the communication apparatus, which is, for example, implemented by using an antenna, a feeder, a codec, and the like in the communication apparatus. Alternatively, if the communication apparatus is a chip disposed in the communication device, the communication interface may be an input/output interface of the chip, for example, an input/output pin.

Optionally, the communication apparatus may further include a memory, configured to store computer-executable program code. The program code stored in the memory includes instructions. When the processor executes the instructions, the communication apparatus is enabled to perform the method in any one of the fifth aspect or possible implementations in the fifth aspect. Alternatively, the communication apparatus may not include a memory. For example, the processor may execute instructions stored in an external memory, so that the communication apparatus performs the method in any one of the fifth aspect or possible implementations in the fifth aspect.

According to a fourteenth aspect, an embodiment of this application provides a computer storage medium, where the computer storage medium stores a program, and when the program is run on an electronic device, the electronic device is enabled to perform the method according to any one of the possible designs in the fifth aspect.

According to a fifteenth aspect, an embodiment of this application provides a computer program product, and when the computer program product is run on an electronic device, the electronic device is enabled to perform the method according to any possible design in the fifth aspect.

### BRIEF DESCRIPTION OF DRAWINGS

FIG. 1a is a schematic diagram of a SIM card switching scenario according to this application;
FIG. 1b is a schematic diagram of a structure of an eUICC according to this application;
FIG. 1c is a schematic diagram of an eSIM card switching scenario according to this application;
FIG. 1d is a schematic diagram of a structure of a multi-SIM module according to this application;
FIG. 2a is a schematic diagram of a structure of an electronic device according to an embodiment of this application;
FIG. 2b is a schematic diagram of a software structure of an electronic device according to an embodiment of this application;
FIG. 3a is a schematic diagram of a system architecture according to an embodiment of this application;
FIG. 3b to FIG. 3d are schematic diagrams of a card switching procedure according to an embodiment of this application;
FIG. 4a and FIG. 4b are schematic diagrams of a possible interface according to an embodiment of this application;
FIG. 5a is a schematic flowchart of transferring a profile according to an embodiment of this application;
FIG. 5b to FIG. 5f are schematic diagrams of a possible interface according to an embodiment of this application;
FIG. 6 is a schematic flowchart of transferring a profile according to an embodiment of this application;
FIG. 7a is a schematic flowchart of transferring a profile according to an embodiment of this application;
FIG. 7b is a schematic diagram of a possible interface according to an embodiment of this application;
FIG. 8a is a schematic flowchart of transferring a profile according to an embodiment of this application;
FIG. 8b is a schematic diagram of a possible interface according to an embodiment of this application;
FIG. 9 is a schematic diagram of a structure of a possible electronic apparatus according to an embodiment of this application;
FIG. 10 is a schematic diagram of a structure of another possible electronic apparatus according to an embodiment of this application;
FIG. 11 is a schematic diagram of a structure of a possible communication apparatus according to an embodiment of this application; and
FIG. 12 is a schematic diagram of a structure of a possible communication apparatus according to an embodiment of this application.

### DESCRIPTION OF EMBODIMENTS

For ease of understanding, some concepts related to embodiments of this application are described for reference by using examples.

### (1) Subscriber identification module (subscriber identification module, SIM) card

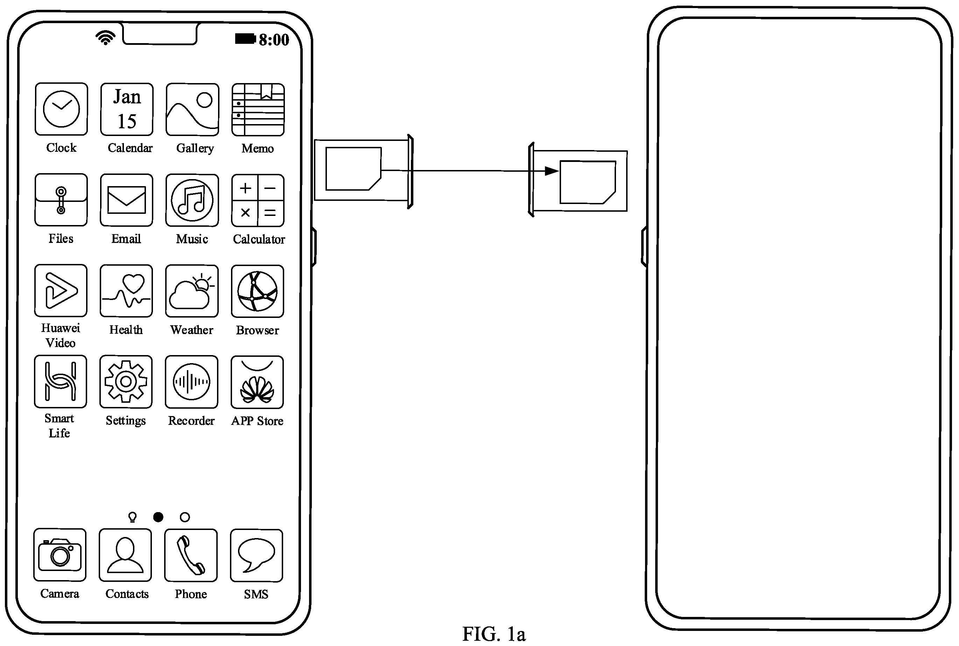

Plug-in SIM module: The plug-in SIM module refers to a conventional SIM module, or referred to as a SIM module chip. This type of SIM module may be used only after a user selects a number to access the network at a customer service center of the operator or through an online customer service center of the operator, and the SIM module is inserted into a physical card slot (or referred to as a SIM module interface) of an electronic device after the SIM module is activated. For example, the electronic device may be connected to a cellular mobile network through the SIM module, to implement functions such as calling and data communication. The size of a SIM card gradually decreases in an evolution process from a Mini SIM card, a Micro SIM card, to a Nano SIM card, and needs to occupy internal space of the electronic device 200. The plug-in SIM module may also be removed from the physical card slot. In embodiments of this application, the SIM card configured on the electronic device may be a physical SIM card inserted into a card slot of the electronic device. Generally, a terminal such as the electronic device 200 may normally use communication functions such as calling and sending/receiving SMS messages only after a SIM card is installed. SIM cards are also called universal integrated circuit cards (universal integrated circuit cards, UICCs). In a card switching scenario such as user equipment maintenance and purchase of a new device, as shown in FIG. 1a, in an existing SIM card electronic device, because software and hardware of the SIM card electronic device are integrated, a SIM card may be freely inserted and removed by a user. When the electronic device is replaced, the SIM card needs to be removed from the original electronic device and inserted into a new electronic device for use. In this manner, an operation of the user is simple, but the operator does not perceive that the SIM card electronic device used by the user is changed, which is not conducive to providing better services and management for the user by the operator.

### (2) Embedded-SIM (embedded-SIM, eSIM) card

Alternatively, the card configured on the electronic device in embodiments of this application may be a surface-mount or integrated eSIM card, for example, an eSIM module, namely, an embedded-SIM, or an embedded SIM module. It is 70% or more smaller than a conventional SIM card, and may be directly welded or integrated into a main board of an electronic device, instead of being inserted into the electronic device as an independent removable component. A pluggable physical entity of a plug-in SIM module is abandoned. A universal integrated circuit card (universal integrated circuit card, UICC) is embedded in an electronic device (the universal integrated circuit card cannot be separated from the electronic device) instead of being added to the electronic device as an independent removable component, and is referred to as an embedded universal integrated circuit card (embedded-UICC, eUICC) or an eSIM module chip.

The eUICC is a third-generation telecommunications smart card. The eSIM card is programmable, and configuration information (that is, a profile, such as a user identity and operator subscription information) of any operator may be written into or erased from the eSIM card, so that a user may enable and change different services provided by different operators online. The eSIM can perform remote profile management or local profile management (for example, profile activation, deactivation, or deletion triggered by a user of an electronic device) in a secure manner. The word eUICC is derived from an embedded (embedded) UICC, and may be embedded in an electronic device in a form of a single chip, or may be used as a part of another single chip in the electronic device. However, this does not mean that the eUICC needs to be embedded in the electronic device and cannot be removed. Alternatively, the eUICC may be in a form of a movable card. In an actual application, after the configuration information is downloaded and the profile (Profile) provided by the mobile network operator is installed, the eUICC may activate the profile, so as to access the operator network (for example, a 2G/3G/4G network). At present, the eSIM technology has been widely used in wearable devices, and has been gradually extended to products such as a tablet, a personal computer (personal computer, PC), and an in-vehicle device. In addition, the eSIM module tends to be used on a mobile phone.

There are two packaging forms of the eUICC. One is a surface-mount device (surface-mount device, SMD) chip packaging process, that is, an eSIM module chip is directly welded to a module of the electronic device. The other is a SIP (Simple in Package) packaging process, that is, the eSIM module chip and a module chip of the electronic device are packaged together, and appear to be one chip on the outside. The eSIM module is an unpluggable SIM module that may be used on any electronic device. A major difference between the eSIM module and the plug-in SIM module is that the eSIM module is fixed in the electronic device and cannot be replaced randomly.

### (3) Hard SIM module

Both the plug-in SIM module and the eSIM module may be referred to as a hard SIM module. An identifier used to identify a plug-in SIM module and an eSIM module may be referred to as an integrated circuit card identifier (Integrated Circuit Card Identifier, ICCID). An identifier used to identify an eSIM may be referred to as an embedded universal integrated circuit card identifier (Embedded UICC Identifier, EID).

(4) SoftSIM (softSIM) module:
or referred to as a virtual-SIM (virtual-SIM, vSIM) module. The softSIM module is a SIM module different from the hard SIM module. The softSIM module is a virtual entity, that is, there is no physical SIM module, and communication is implemented based on software and hardware of a communication module. A communication module with a vSIM function cooperates with underlying software customized for the vSIM to implement built-in encrypted storage of data (such as IMSI and KI). During network login, authentication, and communication, corresponding logic is automatically processed, so that a stable mobile communication experience is provided without a physical SIM module.

### (5) profile (Profile)

The profile (Profile) is a collection of operator data and applications, and generally includes network access application parameters, such as a user key Ki, an international mobile subscriber identity (international mobile subscriber identity, IMSI), a mobile network operator-security domain (mobile network operator-Security domain, MNO-SD), a supplementary security domain (supplementary security domains, SSD), a controlling authority security domain (controlling authority security domain, CASD), an application (for example, an NFC application), a Java card program, another element in a file system, and profile metadata, where the profile metadata includes profile policy rules (Profile Policy Rules). A correspondence between the IMSI and the Ki is used to identify a user who requests network authentication.

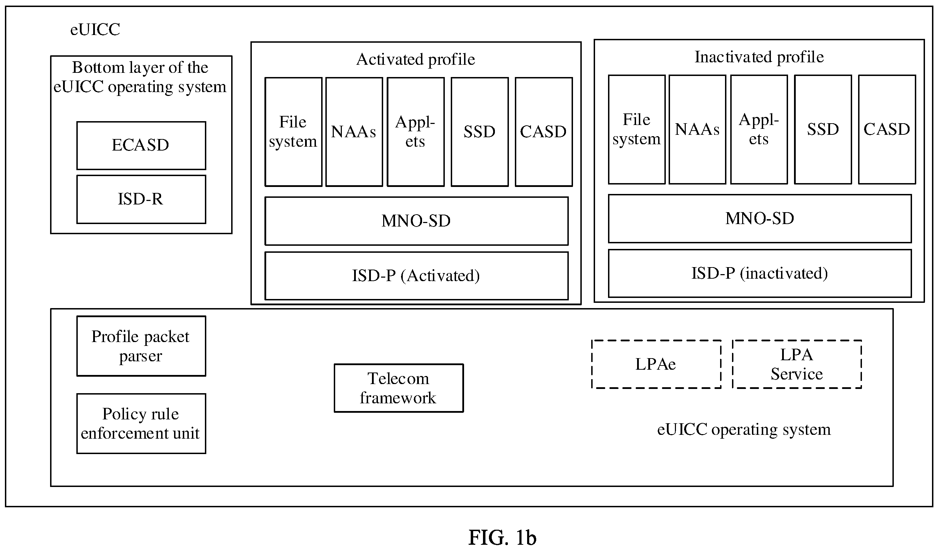

As shown in FIG. 1b, the eUICC may include a profile (Profile) and an eUICC operating system.

In the eUICC, two profiles are shown, where one is an activated profile, and the other is an inactivated profile. Each of the profiles may include a file system, multiple NAA data files, an applet (applet), an SSD, a CASD, and an MNO-SD.

The eUICC operating system includes a platform service manager (platform service manager) and a telecom framework (telecom framework). The platform service manager is configured to provide a platform management function and a policy rule execution mechanism. The telecom framework is configured to provide a standardized authentication algorithm for an NAA, and can further configure an algorithm by using a requirement parameter.

Because the hardware and software of the eSIM card are separated, the eSIM card may be in a form of surface-mount device or may be integrated into the electronic device. The eSIM cannot be removed from the electronic device. A profile in the eSIM card is related to an eUICC chip identifier (eUICC identification, EID) of an original electronic device, and cannot be read or copied.

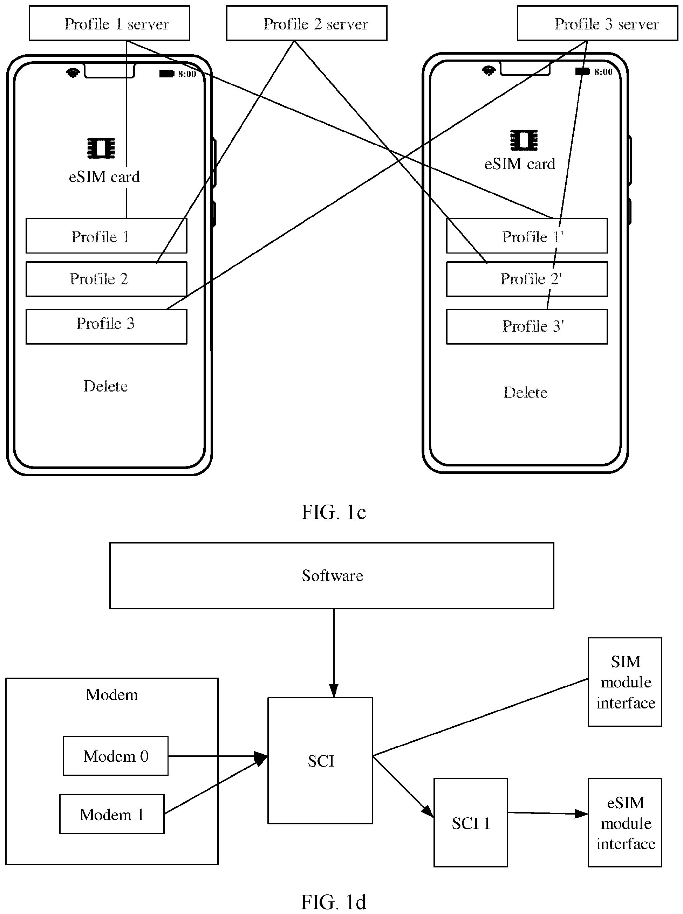

As shown in FIG. 1c, the eUICC may store a plurality of profiles (Profiles) of an operator. For example, the first electronic device stores a profile 1, a profile 2, and a profile 3. The second electronic device stores a profile 1', a profile 2', and a profile 3'. Profile1 and profile 1' are generated by a profile 1 server. Profile2 and profile 2' are generated by a profile 2 server. Profile3 and profile 3' are generated by a profile 3 server. Each profile (Profile) may form a SIM application independently. The SIM application may be referred to as an eSIM module. The eSIM module may implement a function similar to that of the plug-in SIM module. The eSIM module remotely downloads a profile required for accessing a network of an operator, so that a user is allowed to select a service package of an operator more flexibly, or change an operator at any time without unlocking an operator bound to a device or purchasing a new device. In a card switching scenario such as user equipment maintenance and purchase of a new device, according to an existing eSIM standard and process, when replacing an electronic device, a user needs to apply to an operator for an eSIM card switching service, and provide an EID of a new eSIM electronic device to the operator. The operator applies for a profile from a server again, generates a new profile for the new EID, and a phone number of the user remains unchanged. After the operator generates a new profile, a user may remotely download the profile and install it on the new device. The new device uses the new profile to access the original operator network and continues to use the subscribed communication services. For example, after generating the new profile, the operator generates a two-dimensional code used to download the profile, and the user scans the two-dimensional code by using the new terminal, to download the new profile to the new eSIM.

For example, for a server of an operator, for example, a server of a profile, when it is determined that the profile 1 of the first electronic device needs to be transferred to the second electronic device, the profile 1 on the first electronic device may be deleted, and the profile 1' is generated. The second electronic device downloads the profile 1' generated by the server locally and activates the profile 1', to complete transfer. A user number based on the operator may remain unchanged.

A main process of transferring a profile includes: (1) A user takes a new eSIM electronic device to a customer service center of an operator, and goes to a service counter to apply for transferring a user number used by an original eSIM electronic device to the new eSIM electronic device. (2) The user provides the EID of the new eSIM terminal to a counter attendant. (3) The user waits for the attendant to process the eSIM card number transfer request. (4) After processing the transfer request, the operator system prints the activation code of the new profile. (5) The user uses the new eSIM terminal to scan the activation code and download the profile. The profile transfer process has the following disadvantages: The card switching process is an offline process, which is complex and tedious, time-consuming, and poor in experience, and increases offline service operation costs of an operator. The user may also use a mobile customer service center or call the customer service hotline to apply for the service. However, the process of regenerating a profile is complex and tedious, which increases the service costs of the operator. Especially, regenerating a profile, a key or an IMSI in the profile, and binding a new profile to a phone number will cause a waste of code resources and network resources.

### 6) Multi-card

The embodiments disclosed in this application may be applied to an electronic device that may be configured with dual cards or multiple cards, for example, a dual-card dual-standby mobile phone. This application provides a solution of supporting multiple SIM modules. In other words, in embodiments of this application, the electronic device may support multiple eSIM modules (which are mainly an eSIM module at a software layer herein, that is, an independent area is divided for each profile in the eUICC as an eSIM module), and may further support a SIM module, for example, a plug-in SIM module or a softSIM module. Three SIM modules supported by the electronic device are used as an example. A user can randomly select two SIM modules from the three SIM modules to be in a network connection standby state at the same time, or can randomly select one SIM module from the three SIM modules to be in a network connection standby state.

The electronic device in this application may be an electronic device that supports a multi-card single-standby function. In this case, it may mean that an electronic device, for example, a mobile phone, may be connected to multiple SIM modules at the same time, and only one SIM module of the multiple SIM modules may be in a network connection standby state at the same time, that is, the electronic device may be connected to a cellular mobile network by using only one of the SIM modules at the same time, so as to be used for data exchange, and implement functions such as calling and data communication. The electronic device in this application may be an electronic device that supports a multi-card dual-standby function. The multi-card dual-standby function may mean that an electronic device, for example, a mobile phone, may be connected to multiple SIM modules at the same time, and two SIM modules of the multiple SIM modules may be in a network connection standby mode at the same time, that is, the electronic device may be connected to the cellular mobile network through two of the SIM modules at the same time, so as to be used for data exchange, and implement functions such as calling and data communication.

It should be noted that the multiple SIM modules may refer to two or more SIM modules. In addition, each of the multiple SIM modules may be a plug-in SIM module, an eSIM module, or a softSIM module. In this application, each SIM module of the SIM modules supported by the electronic device may be a SIM module that supports any one of a global system for mobile communication (global system for mobile communication, GSM) standard, a universal mobile telecommunications system (universal mobile telecommunications system, UMTS) standard, a time division-synchronous code division multiple access (time division-synchronous code division multiple access, TD-SCDMA) standard, a long term evolution (long term evolution, LTE) standard, a code division multiple access (code division multiple access, CDMA) standard, and the like. A standard supported by a SIM module in the electronic device is not specifically limited in embodiments.

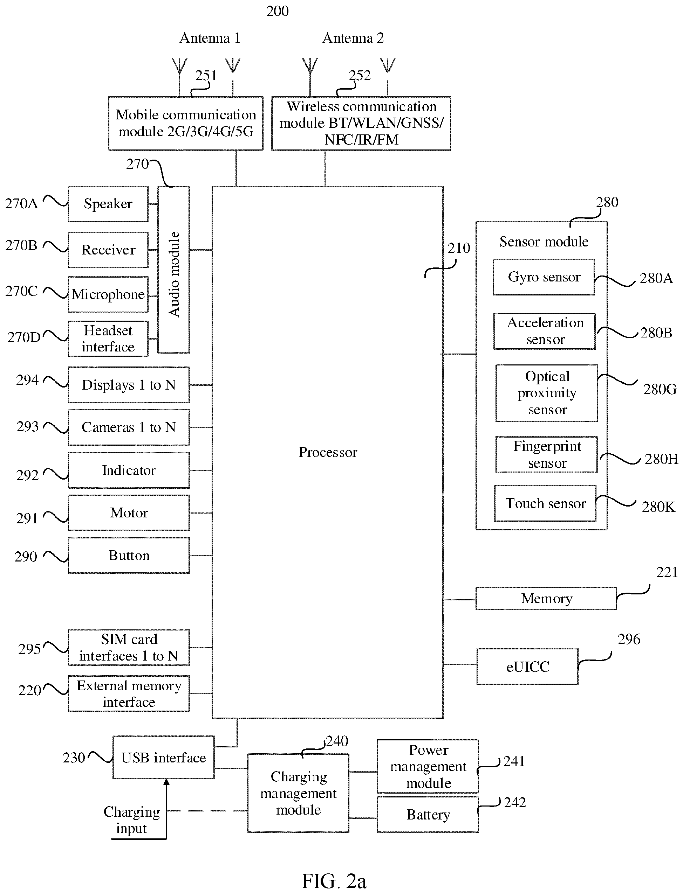

FIG. 1d is a schematic diagram of a structural composition of an electronic device that supports plug-in SIM modules and an eSIM module according to an embodiment of this application. As shown in FIG. 2a, an eUICC (the eUICC is configured to store multiple profiles), a smart card interface (smart card interface, SCI) 1, a plug-in SIM module, a modem (modem) 0, a smart card interface (smart card interface, SCI), and a modem (modem) 1 may be included. The SCI 1 may cooperate with the SCI, and software located at an upper layer of the hardware may control, according to a selection of a user, a connection relationship between the modem 1 and the SIM module by using the SCI. The connection relationship between modem0 and the eUICC is controlled by using SCI 1.

The plug-in SIM module, for example, a SIM module interface 1 (the SIM module interface may also be referred to as a physical card slot, that is, the electronic device may include the physical card slot 1) may be configured to connect to the plug-in SIM module. For example, the SIM module interface 1 may be configured to connect to the plug-in SIM module 1. If the interface of the SIM module is connected to the plug-in SIM module, the electronic device may be connected to the cellular mobile network by using the plug-in SIM module and a modem connected to the plug-in SIM module, so as to perform data exchange and implement functions such as calling and data communication.

If a plug-in SIM module is connected to a SIM module interface (that is, a physical card slot), and the eSIM module is activated, the electronic device may be connected to the cellular mobile network by using two plug-in SIM modules, or one plug-in SIM module and one eSIM module, and a modem connected to the two plug-in SIM modules, so as to perform data exchange, implement functions such as calling and data communication, and implement a dual-card dual-standby function.

Certainly, only the eSIM module in the eUICC may be activated. If no interface of the SIM module is connected to the plug-in SIM module, the electronic device may also be connected to the cellular mobile network by using the activated eSIM module and a modem connected to the activated eSIM module. There may be at least one activated eSIM module. For example, when two eSIM modules are activated, that is, two profiles are respectively connected to the cellular mobile network corresponding to Modem0 and Modem1, to perform a communication service. Alternatively, the eSIM module is activated, and if the SIM module interface 1 is connected to the plug-in SIM module, the electronic device may be separately connected to the cellular mobile network by using the plug-in SIM module, the eSIM module, and a modem connected to the eSIM module. Alternatively, the eSIM module is inactivated, but if the interface of the SIM module is connected to the plug-in SIM module, the electronic device may be separately connected to the cellular mobile network by using the plug-in SIM module and a modem connected to the plug-in SIM module. Alternatively, when only one eSIM module in the eUICC is activated, and an interface of the SIM module is not connected to the plug-in SIM module, the electronic device may also be connected to the cellular mobile network by using the activated eSIM module and a modem connected to the activated eSIM module. Functions of the SCI and the SCI 1 may be implemented by hardware, for example, a physical switch, or may be implemented by software, for example, a logical switch. This is not specifically limited in this embodiment.

In embodiments of this application, access by using a profile is not limited to a cellular mobile network connection provided by an operator, and may also be various networks that provide communication, such as a private network, a home network, and an in-vehicle platform network. That is, a user subscribes to a profile with a communication service provider, downloads the profile to an eSIM module in an electronic device, activates the profile, and accesses a corresponding network to use a network communication service.

It should be noted that, in some other embodiments, the eUICC may also be connected to the SIM module interface 1 in hardware. In this way, only one of the eUICC and the plug-in SIM module 1 inserted into the SIM module interface 1 can be in a network connection standby state. In this case, if the dual-card dual-standby function is implemented, the inserted SIM module interface 2 needs to be additionally added. That is, the plug-in SIM module 2 inserted into the SIM module interface 2 and the eUICC or the plug-in SIM module 1 inserted into the SIM module interface 1 implement the dual-standby function, or the multi-card multi-standby function is implemented by using an eSIM module (Profile) that is additionally added in the eUICC.

It should be understood that, in some embodiments of this application, the electronic device may be a portable electronic device including a function such as a personal digital assistant and/or a music player, for example, a mobile phone, a tablet computer, or a wearable device (for example, a smartwatch) with a wireless communication function. An example embodiment of a portable electronic device includes but is not limited to a portable electronic device using iOS^{®}, Android^{®}, Microsoft^{®}, or another operating system. Alternatively, the portable electronic device may be another portable electronic device, for example, a laptop (laptop) computer with a touch-sensitive surface (for example, a touch panel). It should be further understood that, in some other embodiments of this application, the electronic device may alternatively be, instead of a portable electronic device, a desktop computer with a touch-sensitive surface (for example, a touch panel). The electronic device may alternatively be a cellular phone, a cordless phone, a smartwatch, a smartphone, a portable computer, a handheld communication device, a handheld computing device, a satellite radio apparatus, a wearable device, a tablet device, an uncrewed aerial vehicle, a vending machine, a sensor device, a session initiation protocol (session initiation protocol, SIP) phone, a wireless local loop (wireless local loop, WLL) station, a personal digital assistant (personal digital assistant, PDA), a handheld device with a wireless communication function, a computing device, and an in-vehicle communication module, a smart home device or another processing device connected to a wireless modem and/or any other suitable device configured to perform communication in a wireless communication system, or the like.

Generally, the electronic device supports multiple applications, for example, one or more of a drawing application, a presentation application, a word processing application, a game application, a telephony application, a video player application, a music player application, an email application, an instant message receiving and sending application, a photo management application, a camera application, a browser application, a calendar application, a clock application, a payment application, and a health management application.

The following uses an example in which the electronic device is a multi-card multi-standby electronic device having a touchscreen for a specific description.

Referring to FIG. 2a, an electronic device 200 according to an embodiment of this application is described. A person skilled in the art may understand that the electronic device 200 shown in FIG. 2a is merely an example, and does not constitute a limitation on the electronic device 200. In addition, the electronic device 200 may have more or fewer components than those shown in the figure, or may combine two or more components, or may have different component configurations. Components shown in FIG. 2a may be implemented by hardware including one or more signal processing and/or application-specific integrated circuits, software, or a combination of hardware and software.

The electronic device 200 may include a processor 210, an external memory interface 220, a memory 221, a USB interface 230, a charging management module 240, a power management module 241, a battery 242, an antenna 1, an antenna 2, a mobile communication module 251, a wireless communication module 252, an audio module 270, a speaker 270A, a receiver 270B, a microphone 270C, a headset interface 270D, a sensor module 280, a button 290, a motor 291, an indicator 292, a camera 293, a display 294, a SIM card interface 295, an eUICC 296 (the eUICC is configured to store an eSIM module), and the like. A universal integrated circuit card is embedded in the electronic device, which is referred to as an eUICC. The eUICC may store multiple types of eSIM profiles of an operator, and each type of eSIM profile may independently form a SIM application. The SIM application may be referred to as an eSIM module. The electronic device may be connected to the network by using the eUICC 296, to implement functions such as calling and data communication. The sensor module 280 may include a gyro sensor 280A, an acceleration sensor 280B, an optical proximity sensor 280G, a fingerprint sensor 280H, and a touch sensor 280K (certainly, the electronic device 200 may further include other sensors such as a temperature sensor, a pressure sensor, a distance sensor, a magnetic sensor, an ambient light sensor, a barometric pressure sensor, and a bone conduction sensor, which are not shown in the figure).

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (Neural-network Processing Unit, NPU), and/or the like. Different processing units may be independent components, or may be integrated into one or more processors. The controller may be a nerve center and instructions center of the electronic device 200. The controller may generate an operation control signal based on instructions operation code and a time sequence signal, to complete control of reading and execution instructions.

A memory may be further disposed in the processor 210, and is configured to store commands and data. In some embodiments, the memory in the processor 210 is a cache. The memory may store commands or data just used or cyclically used by the processor 210. If the processor 210 needs to use the commands or the data again, the processor 210 may directly invoke the commands or the data from the memory. This avoids repeated access, reduces the waiting time of the processor 210, and improves system efficiency.

In addition to the foregoing solution in which the eUICC is separately disposed, the processor 210 may be further integrated with the eUICC. For example, the processor 210 may include an application processing circuit, a baseband processing circuit, and an eUICC. The application processing circuit may include a processor, a memory, and the like. The memory stores a program required by a local profile assistant (local profile assistant, LPA) module. The processor runs the program stored in the memory, to implement a function of the LPA module. The LPA module may alternatively be located in another memory of the terminal. The baseband processing circuit includes a radio frequency transceiver, a baseband processor, and a memory. The baseband processing circuit is mainly configured to implement wireless communication. By running a program stored in the memory, the baseband processor may support communication in networks of multiple standards, for example, may support communication in networks of standards such as 2G/3G/4G/5G. The baseband processing circuit and the application processing circuit may be integrated, or may be separately implemented by using different modules. The baseband processing circuit and the application processing circuit may share a memory, or each may include a memory.

In some embodiments, the processor 210 may include one or more processing units. The processor 210 may further integrate an application processor and a modem processor. The application processor mainly processes an operating system, a user interface, an application program, and the like, and the modem processor mainly processes wireless communication. It may be understood that alternatively, the modem processor may not be integrated into the processor 210. In some other embodiments of this application, the processor 210 may further include a fingerprint verification chip, which is configured to verify a collected fingerprint. In some embodiments, the processor 210 may include one or more processing units. The processor 210 may further integrate an application processor and a modem processor. The application processor mainly processes an operating system, a user interface, an application program, and the like, and the modem processor mainly processes wireless communication. It may be understood that alternatively, the modem processor may not be integrated into the processor 210. For example, the processor 210 may be a Kirin 970 chip manufactured by Huawei Technologies Co., Ltd. In some other embodiments of this application, the processor 210 may further include a fingerprint verification chip, which is configured to verify a collected fingerprint. The processor 210 may run the method according to embodiments of this application, so as to reduce the operation complexity of a user, improve the intelligence degree of an electronic device, and improve user experience. The processor 210 may include different components. For example, when a CPU and a GPU are integrated, the CPU and the GPU may cooperate to perform a method according to embodiments of this application. For example, in the method, some algorithms are performed by the CPU, and the other algorithms are performed by the GPU, to obtain relatively high processing efficiency.

The display 294 may be a touchscreen. In this case, the display 294 may include a touch-sensitive surface. The touch-sensitive surface (for example, a touch panel) may collect a touch event performed by a user of the electronic device 200 on or near the touch-sensitive surface (for example, an operation performed by the user on or near the touch-sensitive surface by using any suitable object such as a finger or a stylus), and send collected touch information to another component such as the processor 210. The touch event performed by the user near the touch-sensitive surface may be referred to as a floating touch. The floating touch may mean that the user does not need to directly touch a touchpad for selecting, moving, or dragging a target (for example, an app icon), and the user only needs to be located near an electronic device to perform a desired function. In an application scenario of the floating touch, terms such as "touch" and "contact" do not implicitly mean to directly touch the touchscreen, but to be near or close to the touchscreen. The touch-sensitive surface that can implement a floating touch may be implemented by using a capacitive type, an infrared light sensing type, an ultrasonic wave type, or the like.

The touch-sensitive surface may include two parts: a touch detection apparatus and a touch controller, where the touch detection apparatus detects a touch orientation of the user, detects a signal generated by a touch operation, and transmits the signal to the touch controller. The touch controller receives touch information from the touch detection apparatus, converts the touch information into touch point coordinates, and sends the touch point coordinates to the processor 210, and the touch controller may further receive instructions sent by the processor 210, and execute the command. In addition, the touch-sensitive surface may be implemented in multiple types such as a resistive type, a capacitive type, an infrared type, and a surface acoustic wave type.

It should be understood that the touch-sensitive surface may cover the display 294. After detecting a touch event on or near the touch-sensitive surface, the touch-sensitive surface transmits the touch event to the processor 210 to determine a type of the touch event. Then, the processor 210 may provide corresponding visual output on the display 294 according to the type of the touch event. In FIG. 2a, the touch-sensitive surface and the display 294 are used as two independent components to implement input and output functions of the electronic device 200. However, in some embodiments, the touch-sensitive surface and the display 294 may be integrated to implement the input and output functions of the electronic device 200. It may be understood that the touchscreen is formed by stacking multiple layers of materials. In embodiments of this application, only the touch-sensitive surface (layer) and the display (layer) are shown, and another layer is not described in detail in embodiments of this application. In addition, in some other embodiments of this application, the touch-sensitive surface may cover the display 294, and a size of the touch-sensitive surface is greater than a size of the display 294, so that the display 294 is completely covered by the touch-sensitive surface. Alternatively, the touch-sensitive surface may be disposed on a front of the electronic device 200 in a form of a full panel, in other words, touch of the user on the front of the electronic device 200 may be sensed by the electronic device 200. In this way, a full touch experience of the front of the electronic device 200 may be implemented. In some other embodiments, the touch-sensitive surface is disposed on a front side of the electronic device 200 in a form of a full panel, and the display 294 may also be disposed on the front side of the electronic device 200 in the form of a full panel. In this way, a bezel-less structure may be implemented on the front side of the electronic device 200. In some other embodiments of this application, the touchscreen may further include a series of pressure sensor arrays, so that the electronic device 200 may sense pressure exerted on the touchscreen by a touch event.

The display 294 is configured to display a picture, a video, or the like. The display 294 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a Miniled, a MicroLed, a Micro-oLed, a quantum dot light emitting diode (quantum dot light emitting diode, QLED), or the like. In some embodiments, the electronic device 200 may include one or N display screens 294, where N is a positive integer greater than 1. The display 294 may be configured to display information input by a user or information provided to a user, and various graphical user interfaces (graphical user interfaces, GUIs). For example, the display 294 may display a photo, a video, a web page, a file, or the like. For another example, the display 294 may display a graphical user interface of the electronic device shown in FIG. 1a. The graphical user interface shown in FIG. 1a includes a state bar, a Dock bar, a hidden navigation bar, a time and weather widget (widget), and an application icon such as a browser icon. The state bar includes an operator name (for example, China Mobile), a mobile network (for example, 4G), time, and a battery level. The navigation bar may include a back (back) key icon, a home (home) key icon, and a forward key icon. In addition, it may be understood that, in some embodiments, the state bar may further include a Bluetooth icon, a Wi-Fi icon, an icon of an externally-connected device, and the like. It may be further understood that in some other embodiments, the graphical user interface shown in FIG. 1a may further include a Dock bar, where the Dock bar may include a common application icon and the like. After the processor 210 detects a touch event of a user on an application icon by using a finger (a stylus or the like), in response to the touch event, the processor 210 starts a user interface of an application corresponding to the application icon, and displays the user interface of the application on the display 294.

In embodiments of this application, the display 294 may be one integrated flexible display screen, or may be a spliced display screen including two rigid screens and one flexible screen located between the two rigid screens.

The camera 293 (which may be a front-facing camera, a rear-facing camera, or a camera that may serve as both a front-facing camera and a rear-facing camera) is configured to capture a static image or a video. Usually, the camera 293 may include a photosensitive element such as a lens group and an image sensor, where the lens group includes multiple lenses (convex lenses or concave lenses), and is configured to: collect an optical signal reflected by a to-be-photographed object, and transfer the collected optical signal to the image sensor. The image sensor generates an original image of the to-be-photographed object according to the optical signal.

The memory 221 may be configured to store computer-executable program code, where the executable program code includes commands. The processor 210 executes various function applications and data processing of the electronic device 200 by running instructions stored in the memory 221. The memory 221 may include a program storage area and a data storage area. The program storage area may store code of an operating system, an application program (for example, a camera application or a WeChat application), and the like. In this application, the data storage area may store data generated when the electronic device 200 runs a program according to an embodiment of this application, for example, related information of a profile, for example, metadata information of the profile, configuration information of an eSIM, eSIM capability information, an ICCID, an address of a profile server (for example, SM DP+) corresponding to the profile, and state information (activated, inactivated, deleted, to be deleted, encrypted, transferred, to be transferred, and the like) of the profile, encrypted profile file, and the like. It should be noted that, in embodiments of this application, the related information of the profile may be further stored in a cloud, and the electronic device 200 obtains the related information of the profile from the cloud, and the like. The data storage area may further store data (for example, an image or a video collected by the camera application) created during use of the electronic device 200 and the like.

The memory 221 may further store one or more computer programs corresponding to the method according to embodiments of this application. The one or more computer programs 1 are stored in the memory 221 and are configured to be executed by the one or more processors 210. The one or more computer programs include commands, and the commands may be used to perform the methods according to embodiments of this application. In addition, the memory 221 may include a high-speed random access memory, or may include a nonvolatile memory, for example, at least one magnetic disk storage component, a flash memory, or a universal flash storage (universal flash storage, UFS). Certainly, code of any method according to embodiments of this application may alternatively be stored in an external memory. In this case, the processor 210 may run, by using the external memory interface 220, the code stored in the external memory, and the processor 210 may control the device to change the status of the profile, to update the status of the profile, so as to communicate with the network device according to the updated profile.

The following describes functions of the sensor module 280.

The gyro sensor 280A may be configured to determine a motion posture of the electronic device 200. In some embodiments, an angular velocity of the electronic device 200 around three axes (namely, axes x, y, and z) may be determined through the gyro sensor 280A. To be specific, the gyro sensor 280A may be configured to detect a current motion state of the electronic device 200, for example, a shaking state or a static state.

When the display screen in embodiments of this application is a foldable screen, the gyro sensor 280A may be configured to detect a folding or unfolding operation performed on the display 294. The gyro sensor 280A may report the detected folding or unfolding operation as an event to the processor 210, to determine whether the display 294 is in a folding state or an unfolding state.

The acceleration sensor 280B may detect magnitudes of accelerations in various directions (usually on three axes) of the electronic device 200. To be specific, the gyro sensor 280A may be configured to detect a current motion state of the electronic device 200, for example, a shaking state or a static state. When the display screen in embodiments of this application is a foldable screen, the acceleration sensor 280B may be configured to detect a folding or unfolding operation performed on the display 294. The acceleration sensor 280B may report the detected folding or unfolding operation as an event to the processor 210, to determine whether the display 294 is in a folding state or an unfolding state.

The optical proximity sensor 280G may include a light emitting diode (LED) and an optical detector, for example, a photodiode. The light emitting diode may be an infrared light emitting diode. The electronic device emits infrared light by using the light-emitting diode. The electronic device detects reflected infrared light from a nearby object by using the photodiode. When detecting sufficient reflected light, the electronic device may determine that there is an object near the electronic device. When detecting insufficient reflected light, the electronic device may determine that there is no object near the electronic device. When the display screen in embodiments of this application is a foldable screen, the optical proximity sensor 280G may be disposed on a first screen of the foldable display 294, and the optical proximity sensor 280G may detect a magnitude of an angle between the first screen and a second screen in a folding or unfolding state according to an optical path difference between infrared signals.

The gyro sensor 280A (or the acceleration sensor 280B) may send detected motion state information (for example, the angular velocity) to the processor 210. The processor 210 determines, based on the motion state information, whether the electronic device 200 is currently in a handheld state or a tripod state (for example, when the angular velocity is not 0, it indicates that the electronic device 100 is in the handheld state).

The fingerprint sensor 280H is configured to collect a fingerprint. The electronic device 200 may use a feature of the collected fingerprint to implement fingerprint-based unlocking, application lock access, fingerprint-based photographing, fingerprint-based call answering, and the like.

The touch sensor 280K is also referred to as a "touch panel". The touch sensor 280K may be disposed on the display 294. The touch sensor 280K and the display 294 constitute a touchscreen, which is also referred to as a "touchscreen". The touch sensor 280K is configured to detect a touch operation performed on or near the touch sensor 280K. The touch sensor may transfer the detected touch operation to the application processor to determine a type of the touch event. The display 294 may provide a visual output related to the touch operation. In some other embodiments, the touch sensor 280K may alternatively be disposed on a surface of the electronic device 200, or disposed in a position different from the display 294.

For example, the display 294 of the electronic device 200 displays a home screen, where the home screen includes icons of multiple applications (for example, a camera application and a WeChat application). The user taps an icon of the camera application on the home screen via the touch sensor 280K, to trigger the processor 210 to start the camera application and turn on the camera 293. The display 294 displays an interface of the camera application, for example, a viewfinder interface.

The wireless communication function of the electronic device 200 may be implemented through the antenna 1, the antenna 2, the mobile communication module 251, the wireless communication module 252, the modem processor, the baseband processor, and the like.

The antenna 1 and the antenna 2 are configured to transmit and receive an electromagnetic wave signal. Each antenna in the electronic device 200 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 251 may provide a solution, applied to the electronic device 200, to wireless communication including 2G, 3G, 4G, 5G, or the like. The mobile communication module 251 may include at least one filter, a switch, a power amplifier, a low noise amplifier (low noise amplifier, LNA), and the like. The mobile communication module 251 may receive an electromagnetic wave through the antenna 1, perform processing such as filtering or amplification on the received electromagnetic wave, and transmit a processed electromagnetic wave to the modem processor for demodulation. The mobile communication module 251 may further amplify a signal modulated by the modem processor, and convert an amplified signal into an electromagnetic wave for radiation through the antenna 1. In some embodiments, at least some function modules of the mobile communication module 251 may be disposed in the processor 210. In some embodiments, at least some function modules of the mobile communication module 251 may be disposed in a same device as at least some modules of the processor 210. In embodiments of this application, the mobile communication module 251 may be further configured to exchange information with another electronic device, for example, send an audio output request to the another electronic device, or the mobile communication module 251 may be configured to receive an audio output request, and encapsulate the received audio output request into a message in a specified format.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 270A, the receiver 270B, and the like), or displays an image or a video by using the display 294. In some embodiments, the modem processor may be an independent component. In some other embodiments, the modem processor may be independent of the processor 210, and is disposed in a same component as the mobile communication module 251 or another function module.

The wireless communication module 252 may be configured to receive and send a wireless signal in an information receiving and sending process or a calling process. Specifically, after receiving downlink data from a base station, the wireless communication module 252 may send the downlink data to the processor 210 for processing. In addition, the wireless communication module 252 may further send uplink data to the base station. Generally, the wireless communication module 252 includes but is not limited to an antenna, at least one amplifier, a transceiver, a coupler, a low noise amplifier, a duplexer, and the like. A wireless communication solution that is applied to the electronic device 200 and that includes a wireless local area network (wireless local area network, WLAN) (such as wireless fidelity (wireless fidelity, Wi-Fi) Network), Bluetooth (bluetooth, BT), a global navigation satellite system (global navigation satellite system, GNSS), frequency modulation (frequency modulation, FM), NFC, and an infrared technology (infrared, IR) may be provided. The wireless communication may use any communication standard or protocol, including but not limited to a global system for mobile communication, a general packet radio service, code division multiple access, wideband code division multiple access, long-term evolution, an e-mail message, a short message service, and the like. The wireless communication module 252 may be one or more components integrating at least one communication processor module. The wireless communication module 252 receives an electromagnetic wave through the antenna 2, performs frequency modulation and filtering processing on an electromagnetic wave signal, and sends a processed signal to the processor 210. The wireless communication module 252 may further receive a to-be-sent signal from the processor 210, perform frequency modulation and amplification on the signal, and convert a processed signal into an electromagnetic wave for radiation through the antenna 2. The wireless communication module 252 may further communicate with another device through wireless communication. In embodiments of this application, the wireless communication module 252 is configured to establish a connection to the to-be-transferred device or server, and receive and send related data by using the to-be-transferred device or server. Alternatively, the wireless communication module 252 may be configured to access an access point device, and send a message corresponding to a data request to another electronic device, or receive a message corresponding to a data request sent by another electronic device. Optionally, the wireless communication module 252 may be further configured to receive data from another electronic device. For example, the wireless communication module 252 is configured to obtain related information of a profile, for example, a profile list (including an activated profile and an inactivated profile), profile state information, SM DP+ address information corresponding to the profile, and an identifier of a to-be-transferred profile. The related information of the profile may be obtained from the eUICC, another app in the electronic device, or the server, and may be further used to send and receive a request and a response of the server.

In some embodiments, in the electronic device, the antenna 1 and the mobile communication module 251 are coupled, and the antenna 2 and the wireless communication module 252 are coupled, so that the electronic device may communicate with a network and another device by using a wireless communication technology. The wireless communication technology may include a global system for mobile communication (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In addition, the electronic device 200 may implement audio functions by using the audio module 270, the speaker 270A, the receiver 270B, the microphone 270C, the headset interface 270D, the application processor, and the like. For example, music playing and recording, and the like. The electronic device 200 may receive a button 290 input, and generate a button signal input related to a user setting and function control of the electronic device 200. The electronic device 200 may generate a vibration prompt (for example, an incoming call vibration prompt) by using the motor 291. The indicator 292 in the electronic device 200 may be an indicator light, may be configured to indicate a charging state and a battery level change, and may be further configured to indicate a message, a missed call, a notification, and the like. The SIM card interface 295 in the electronic device 200 is configured to connect to a SIM card. The SIM card may be inserted into the SIM card interface 295 or removed from the SIM card interface 295, to implement contact with or separation from the electronic device 200. For example, the electronic device 200 may include two subscriber identity module card slots, where each card slot may be used to insert a SIM card provided by an operator. The SIM card interface 295 may be configured to couple the external input/output peripheral device to the processor 210 and the memory 221.

The electronic device 200 may further include a charging management module 240 (for example, a battery 242 and a power management module 241) that supplies power to each component. The battery may be logically connected to the processor 210 by using the power management module, so that functions such as charging and discharging management and power consumption management are implemented by using the charging management module 240.

Although not shown in FIG. 2a, the electronic device 200 may further include a Bluetooth apparatus, a positioning apparatus, a camera (for example, a front-facing camera or a rear-facing camera), a flashlight, a micro projection apparatus, a near field communication (near field communication, NFC) apparatus, and the like. Details are not described herein. The front-facing camera may be configured to capture facial characteristic information. The processor 210 may perform face recognition based on the facial characteristic information, and then perform subsequent processing.

The following embodiments may be all implemented by the electronic device 200 having the foregoing hardware structure. The following describes embodiments of this application in detail by using the electronic device 200 as an example.

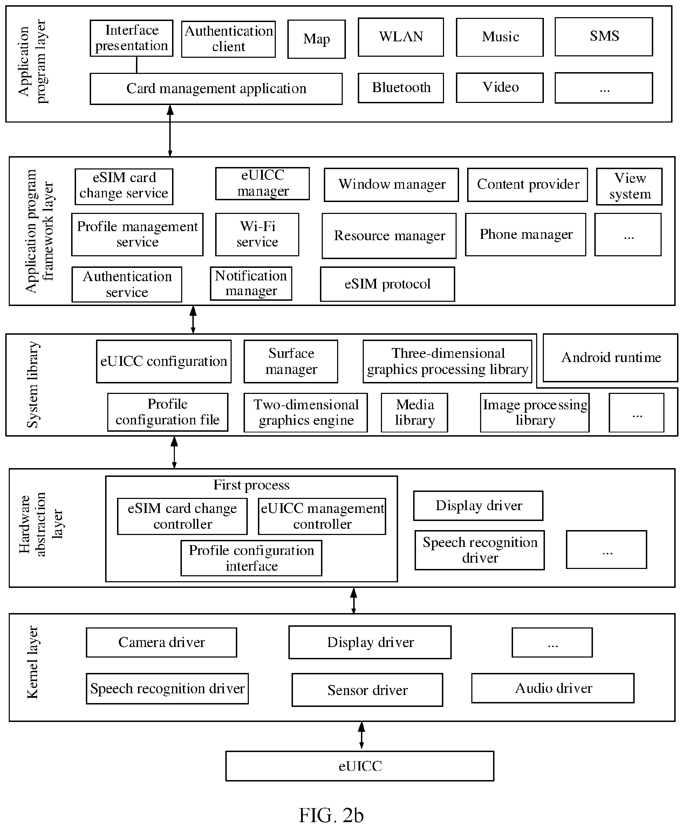

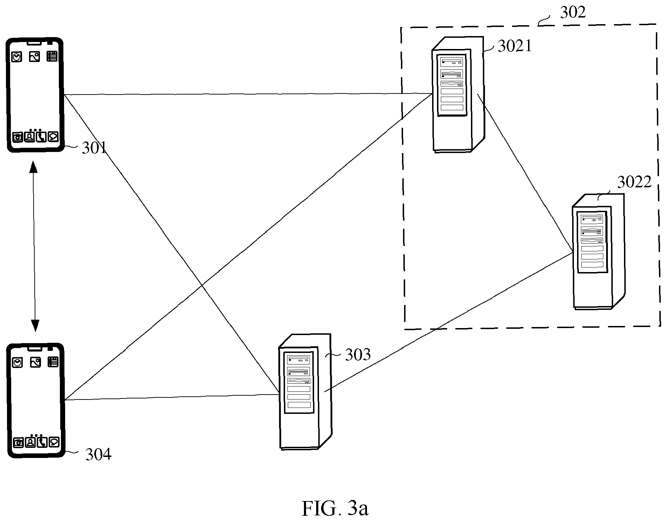

A software system of the electronic device may use a layered architecture, an event-driven architecture, a micro-kernel architecture, a micro-service architecture, or a cloud architecture. In embodiments of the present invention, an Android system of a layered architecture is used as an example to illustrate the software structure of the electronic device. FIG. 2b is a block diagram of a software structure of an electronic device according to an embodiment of the present invention. For example, FIG. 3a is a schematic diagram of a software architecture that may be run in the foregoing electronic device. In a layered architecture, software is divided into several layers, and each layer has a clear role and task. The layers communicate with each other through a software interface. As shown in FIG. 3a, the software architecture may be divided into five layers: an application program layer, an application program framework layer, an Android runtime and system library, a hardware abstraction layer, and a Linux kernel layer.

The application layer is an uppermost layer of the operating system, and includes native applications in the operating system, such as an email client, SMS, Phone, Calendar, Browser, and Contacts. An application in embodiments of this application is referred to as an App for short, and is a software program that can implement one or more specific functions. The application layer may include a series of application packages. For example, the application program package may include a card management application, an authorization client application, and the like. The authorization client application may be configured to display related information such as an authorization state of a profile in the electronic device, and may further send an authorization request to a corresponding authorization server in response to a configuration operation that is performed by the user based on the profile in the authorization client application interface, so as to configure the authorization state of the profile. Usually, multiple applications may be installed in the electronic device. For example, a camera application, a mailbox application, and a smart home device control application. The application mentioned in the following may be a system application installed before delivery of the electronic device, or may be a third-party application downloaded from a network or obtained from another electronic device by a user in a process of using the electronic device.

Certainly, a developer may compile an application and install the application at the layer. The application framework layer may include a window manager, a content provider, a view system, a telephony manager, a resource manager, a notification manager, and the like. The window manager is configured to manage a window program. The window manager may obtain a size of the display, determine whether there is a state bar, perform screen locking, take a screenshot, and the like.

In some embodiments of this application, the application layer may be configured to implement presentation of a settings interface, where the settings interface may be used by the user to set a card switching function of the electronic device 200. For example, the user may enable or disable the card switching function on the settings interface, and may further configure the card switching function on the settings interface, for example, the eSIM card switching function. For example, the settings interface may be content in a state bar or a notification bar displayed on the touchscreen of the electronic device 200, or may be an eSIM local user interaction interface (local user interface, LUI), a transfer interface, or the like displayed on the touchscreen of the electronic device 200.

In a possible implementation, the application program may be developed by using a Java language, and is completed by invoking an application programming interface (application programming interface, API) provided by an application program framework layer. A developer may interact with a bottom layer (for example, a hardware abstraction layer or a kernel layer) of an operating system by using the application program framework, to develop an application program of the developer. The application program framework layer mainly includes a series of services and management systems of the operating system.

The card management application may provide various card management functions and corresponding management interfaces for the user. For example, the card management application may provide a management function and a corresponding interface of the SIM module and/or the eSIM module for the user, so that the user performs multi-card management, for example, sets the eSIM module. For another example, during startup, the card management application may provide a startup navigation service and a corresponding interface for the user, so that the user may add a profile and the like during startup.

The application framework (framework) layer provides an application programming interface (application programming interface, API) and a programming framework for an application at the application layer. The framework is a base of an operating framework of the electronic device. For example, in embodiments of this application, the framework may include a telephony manager (telephony manager), a telephony service (telephony service), an eUICC manager (eUICC manager), an eUICC service (eUICC service), a profile management service, and the like.

The telephony manager, the telephony service, the eUICC manager, the profile management service, and the eUICC service may provide an API related to a card operation for an upper-layer card management application. The upper-layer card management application may implement a corresponding card management function by invoking the API related to the card operation. For example, the card management application may invoke a related API according to settings of the eSIM module by the user, and perform corresponding configuration on the eSIM module by using the eUICC manager and an eUICC service (for example, an eSIM local profile download (local profile download, LPD) service or an eSIM local profile assistant (local profile assistant, LPA) service) in cooperation with the eSIM protocol (protocol). The card management application may further invoke a related API according to the settings of the plug-in SIM module by the user, and perform corresponding configuration on the plug-in SIM module by using the telephony manager, the telephony service, and the SIM protocol (protocol).

In this application, the card management application may further invoke a local profile download (local profile download, LPD) service according to a user operation by using a profile management service, to download a profile from a profile server (for example, subscription data manager-data preparation (subscription manager-data preparation+, SM-DP+)), and may write the downloaded profile into the eUICC by invoking a related API and by using the eUICC manager and the eUICC service in cooperation with the eSIM protocol. The LPD of the electronic device may establish communication connections to the ES and the profile server, to provide a secure data transmission channel. The profile management service may also be used to update the eSIM profile. The profile may form an independent SIM application, that is, it is stored in an independent eSIM module.

The card management application may invoke an authentication service to send an authentication request to the server, so as to obtain an authentication result of the profile. The authentication result may include: whether the authentication is successful, an SM DP+ address corresponding to the profile, and the like.

When only one profile in the eUICC is activated, the electronic device may be connected to the cellular mobile network by using the activated profile and a modem connected to the activated profile. When two profiles in the eUICC are activated, the electronic device may be connected to the cellular mobile network by using the two activated profiles and a modem connected to the two activated profiles, to perform data exchange, implement functions such as calling and data communication, and implement a dual-card dual-standby function. Alternatively, when a plug-in SIM module is connected to an interface of the SIM module and a profile is activated, the electronic device may implement a multi-card dual-standby function.

The card management application may also invoke the eSIM card switching service to implement eSIM card switching functions. For example, for the first profile, the profile transfer service may include a first profile information generation service, a first profile deletion service, and a first profile encryption service. The first profile information generation service is used to generate related information of the to-be-transferred profile, including information such as an iccid, an SM DP+ address, a profile status, and profile information that has been deleted. The first profile deletion service is used to trigger profile deletion, confirm that the profile is successfully deleted, and record a deleted state of the profile. The first profile encryption service is configured to: obtain an encrypted file obtained after the eUICC encrypts each profile, and generate an encrypted profile, so as to send the encrypted profile to another electronic device of the to-be-transferred eSIM card.

In embodiments of this application, the application program framework layer may further include a WI-FI service and a notification manager, and is mainly responsible for cooperating with the eUICC management service to provide a profile transfer function. For example, the WI-FI service is used to monitor whether an electronic device is connected to a wireless access point. For another example, the notification manager is configured to transmit a notification message to the upper layer, so that the notification message is presented on the touchscreen of the electronic device.

The system library may include multiple functional modules. For example, a surface manager, a media library, a three-dimensional graphics processing library (for example, OpenGL ES), and a two-dimensional graphics engine (for example, SGL). The surface manager is configured to manage a display subsystem and provide a fusion of two-dimensional and three-dimensional layers for multiple application programs. The media library supports playback and recording in multiple commonly used audio and video formats, and static image files. The media library may support multiple audio and video coding formats such as MPEG-4, H.264, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

In some embodiments of this application, the system library may further include an eUICC configuration, a profile configuration file, and the like. The eUICC configuration may be used to provide a service interface for communicating with the application program framework layer, and may be further used to manage a profile transfer service, a profile configuration file, an encryption key of a profile, and the like. The profile configuration file may be used to store related information of the profile. For example, authentication information of the profile may be used to store information such as a username and a password for login authentication.

The hardware abstraction layer (Hardware Abstraction Layer, HAL) is a support of the application framework, and is an important link between the application framework layer and the Linux kernel layer. The hardware abstraction layer may provide services for developers through the application framework layer.

For example, functions of the profile transfer service and the eSIM management service in embodiments of this application may be implemented by configuring a first process at the hardware abstraction layer, where the first process may be a subprocess independently constructed at the hardware abstraction layer. The first process may include modules such as an interface, an eUICC management controller, a profile transfer controller, and a profile configuration interface. The interface is the service interface used for communication with the application framework layer. The eUICC management controller may be configured to monitor an upper-layer eUICC management service configuration, for example, to control whether authentication needs to be performed on a profile. The profile transfer controller may be configured to monitor whether the related information of the profile in the electronic device needs to be cached or updated. When the related information of the profile needs to be cached or updated, the profile transfer controller may instruct an upper layer to cache or update the related information of the profile. The hardware abstraction layer may further include a daemon process, where the daemon process may be configured to cache data in the first process, and the daemon process may be a subprocess independently constructed at the hardware abstraction layer.

The Linux kernel (Linux Kernel) layer provides a core system service of the operating system. For example, security, memory management, process management, a network protocol stack, and a driver model are all based on a Linux kernel. For example, in embodiments of this application, the kernel layer may be a layer between a hardware-inserted SIM module and an eUICC, and an upper-layer framework and an application layer. The Linux kernel is also used as an abstraction layer between hardware and software stacks. The layer has many drivers related to the electronic device, and has the following main drivers: a display driver, a Linux-based frame buffer driver, a Flash driver based on a memory technology device, a camera driver, an audio driver, a Bluetooth driver, a WI-FI driver, and the like. In some embodiments of this application, the Linux kernel layer depends on a local file system. The local file system may be accessed by using the profile transfer service, and related data of the profile in the local file system may be configured by using a service interface at the hardware abstraction layer.

All methods in the following embodiments may be implemented in an electronic device having the foregoing hardware structure and software architecture.

With reference to the electronic device 200 in FIG. 2a, refer to FIG. 3a. FIG. 3a is a schematic diagram of an architecture of a profile transfer system according to an embodiment of this application. The profile transfer system includes electronic devices 301 and 304, a subscription management server 302, and a profile server 303. The electronic device 301 is an electronic device from which a profile is to be transferred, and is referred to as a first electronic device below for ease of description. The electronic device 304 is a target electronic device to which a profile is transferred, and is referred to as a second electronic device below for ease of description. The electronic device 200 may be the first electronic device or the second electronic device in embodiments of this application. In embodiments of this application, an example in which the first electronic device 301 is the electronic device 200 is used herein. The subscription management server 302 may include an entitlement server (entitlement server, ES) 3021 and a business support system (business support system, BSS) 3022. The entitlement server 3021 may be a server deployed and maintained by an operator, or may be independently deployed. For example, the entitlement server 3021 may be a server deployed and maintained by a terminal vendor, and is configured to verify a user identity of the electronic device. The business support system 3022 is a background support system oriented to resources (network, device, and computer system), including a professional network management system, a resource management system, a professional provisioning system, a service assurance system, and the like, and provides a support means for reliable, secure, and stable running of the network. In the following description, the ES and BSS are separately deployed. The profile server 303 may be a subscription manager-data preparation plus server (subscription manager-data preparation plus server, SM-DP+), and may be configured to generate a profile for the electronic device to download. Optionally, the profile transfer system may further include a cloud server and another electronic device. The entitlement server 3021 and the profile server 303 may be a server physically or logically.

The following specifically describes possible profile transfer manners by using a manner a1 to a manner a3.

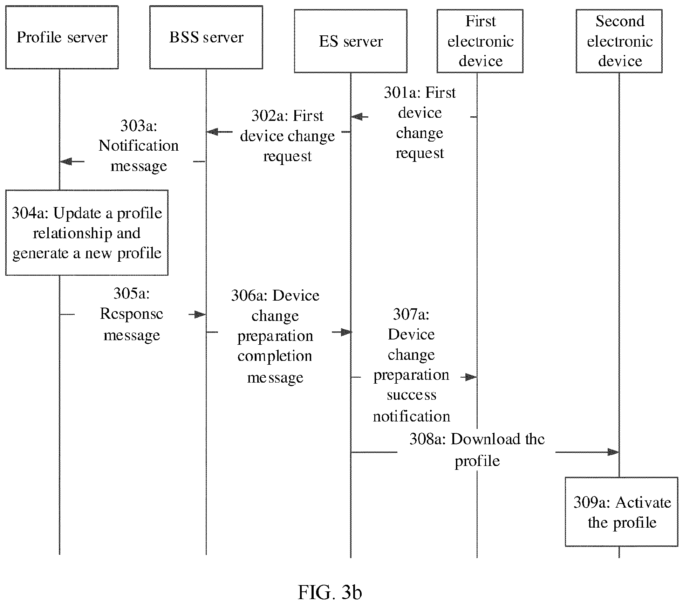

As shown in FIG. 3b, the manner a1 may include the following steps:
Step 301a: A first electronic device sends a first device change request to an ES server.

The first device change request includes a user account, a password, a user number, and an EID of the first electronic device. In a specific implementation, the terminal device may log in to the cloud server, and send a recovery request to the cloud server. After receiving the recovery request, the cloud server returns multiple user numbers, and the terminal device selects, from the multiple numbers, a user number that needs to be recovered. Alternatively, the terminal device may receive a user number entered by the user. Alternatively, the terminal device may select content that needs to be copied, and send a copying request to another terminal device (for example, an original terminal device). After receiving the copying request, the another terminal device returns the copied content. In this cloning mode, user numbers are transferred online from another terminal device. The user number is a mobile station international subscriber directory number (mobile station international subscriber directory number, MSISDN), and the user number may be a user number used on the original terminal device. In addition, the terminal device may receive a user account and a password entered by the user, where the user account may be an account registered by the user, and may be an email address, a user name, a mobile number, or the like. The terminal device may obtain the EID from the configuration information, where the EID may be a sequence number.

S302a: The ES server receives a first device change request of the first electronic device, and sends a second device change request to a BSS.

In a possible implementation, the second device change request may be a device change request that is forwarded by the ES server to the BSS and that is received from the ES server. In this case, the second device change request may include the user account, the password, the user number, and the EID of the first electronic device. The second device change request is used to request to obtain a new eSIM profile.

In another possible implementation, the second device change request may be a second device change request that is sent by the ES server to the BSS after the ES server successfully performs verification according to the user identity in the first device change request, where the second device change request may include the user number and the EID of the first electronic device.

S303a: After receiving the second device change request sent by the ES, the BSS determines that an eSIM profile of the first electronic device is invalid, and deletes a relationship between the user number and the eSIM profile. The BSS reserves the user number, generates new eSIM card data, binds the user number and the generated eSIM card data, and completes the eSIM card switching, so that the second electronic device uses the original user number to perform a communication service, where the eSIM card data may include an integrated circuit card identifier (integrated circuit card identity, ICCID) and the like, and sends a notification message to the profile server.

Optionally, the BSS may verify a user identity of the terminal device according to the user account and the password. If the verification succeeds, S303a is performed. If the verification fails, verification may be performed again according to the step in S302a.

S304a: The profile server may generate an eSIM profile according to the eSIM card data in the notification message, and associate the eSIM profile with the EID. The eSIM profile is a new eSIM profile generated after the second electronic device accesses the network.

S305a: The profile server sends a response message to the BSS. The BSS receives a response message sent by the profile server, where the response message is used to indicate that the eSIM profile is ready.

S306a: The BSS sends a device change preparation completion notification to the ES. The ES receives a device change preparation completion notification sent by the BSS, where the device change preparation completion notification includes an activation code.

S307a: The ES sends a device change preparation success notification to the first electronic device. The first electronic device receives a device change preparation success notification sent by the ES.

The device change preparation success notification may include an activation code.

S308a: The second electronic device downloads the eSIM profile from the profile server.

In a specific implementation, the second electronic device may send, to the profile server, a download request that carries the user account, the password, and the user number. After receiving the download request, the profile server may obtain, according to the user account, the password, and the user number, an eSIM profile associated with the user account or the user number, and send the eSIM profile to the second electronic device.

S309a: After receiving the eSIM profile, the second electronic device activates the eSIM profile according to the activation code received on the first electronic device, so that the second electronic device may access the network for communication.

In this method, each time a device is changed, a server needs to generate a new profile, which wastes an operator code number resource. In a multi-card multi-standby scenario, a user needs to trigger a transfer action for each profile. After the transfer, the user needs to reset a primary traffic card. The operation is complex. In addition, a problem that the primary traffic card fails to be transferred may occur, causing a network connection failure and a transfer failure of another profile.

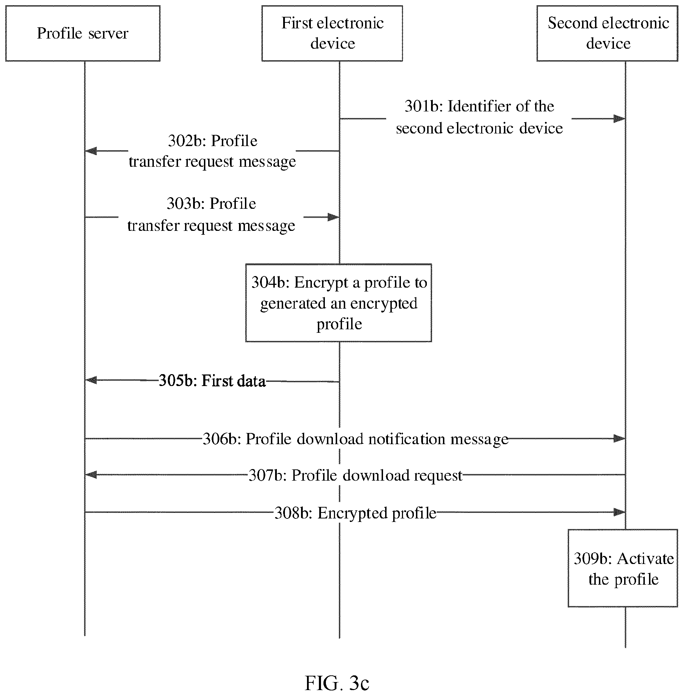

As shown in FIG. 3c, the manner a2 may include the following steps:
S301b: A first electronic device scans a second electronic device to obtain an identifier of the second electronic device, for example, an EID 2.
S302b: The first electronic device sends a profile transfer request message to the profile server.
S303b: The profile server returns a profile transfer response message to the first electronic device,
where the response message may include a first key for encrypting the profile.
S304b: The first electronic device encrypts the profile according to the first key.
S305b: The first electronic device sends a first data to the profile server. The first data includes an encrypted profile, an identifier of the second electronic device, and an EID2.

The first electronic device deletes a local profile.

S306b: The profile server sends a profile download notification message to the second electronic device.

The profile server may determine a profile according to the received first data and the first key, and associate the profile with the EID2 according to the identifier of the second electronic device. Therefore, the profile download notification message is sent to the second electronic device.

S307b: The second electronic device sends a download request to the profile server according to the profile download notification message.

The download request may include an EID2 and an activation code of the second electronic device.

S308b: The second electronic device downloads the profile from the profile server.

In a specific implementation, after receiving the download request, the profile server may obtain, according to the EID2 of the second electronic device, the eSIM profile associated with the user account or the user number, and send the eSIM profile to the second electronic device.

S309b: After receiving the profile, the second electronic device activates the eSIM profile according to the activation code, so as to access the network for communication.

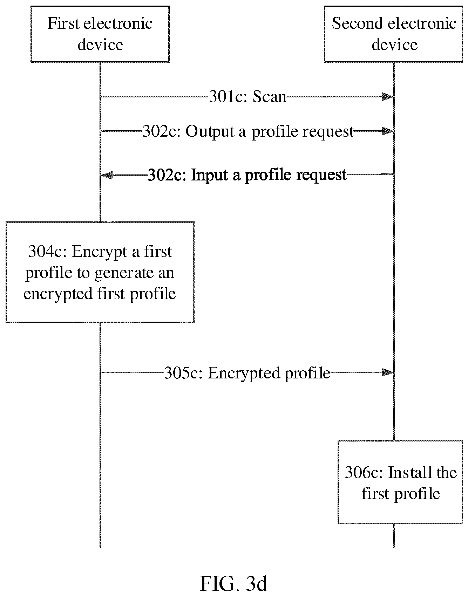

In another possible scenario, for example, the first electronic device needs to be repaired, and in this case, a profile in the first electronic device needs to be temporarily transferred to the second electronic device. As shown in FIG. 3d, a possible solution may include the following steps:
S301c: A first electronic device scans a second electronic device, so as to discover the second electronic device.
S302c: The first electronic device initiates a profile output request to the second electronic device.
S303c: The second electronic device initiates a profile input request to the first electronic device.

Therefore, the first electronic device establishes a P2P connection with the second electronic device. Further, the second electronic device may send a second key to the first electronic device.

S304c: The first electronic device encrypts the first profile according to the second key.

The first electronic device may further set the status of the first profile to invalid.

S305c: The encrypted first profile is sent to the second electronic device.

S306c: The second electronic device receives the encrypted first profile of the first electronic device, performs decryption according to the second key to obtain the first profile, and installs the first profile.

After the repair is completed, roles of the first electronic device and the second electronic device are exchanged, and the foregoing steps are performed, so as to complete transfer of the first profile from the second electronic device to the second electronic device.

Based on the foregoing method, during each profile transfer, although the server does not need to generate a new profile, in a multi-card multi-standby scenario, the user needs to trigger a transfer action for each profile. After the transfer, the user needs to reset the primary traffic card. The operation is complex. In addition, the primary traffic card may fail to be transferred, causing a network connection failure and a transfer failure of another profile.

Based on the foregoing problem, the method according to embodiments of this application may be applied to supporting an electronic device having an eSIM module. The electronic device may further include another SIM module, for example, a plug-in SIM module. This is not limited herein. In the following embodiments, an example in which the electronic device is a mobile phone and a structural composition of the electronic device is shown in FIG. 2a is used for description. In the following embodiments, only an eSIM card switching procedure in an electronic device is used as an example for description. In some other possible implementations, the electronic device may further include a plug-in SIM module. In this case, the SIM module settings interface may further include a corresponding setting control of the plug-in SIM module. For settings of the plug-in SIM module (physical card), refer to a setting manner of the eSIM module. Details are not described herein again.

In some embodiments of this application, for an electronic device based on multiple eSIM modules, a user may set the multiple eSIM modules. The multiple eSIM modules may include at least two types of eSIM modules, or the multiple eSIM modules may be eSIM modules of a same type. This is not limited herein. A card 1 and a card 2 are used as an example. The card 1 and the card 2 may be eSIM cards of different operators, or may be eSIM cards of different packages, or may be eSIM cards of different network standards, or may be a combination of at least one of the foregoing. This is not limited herein.

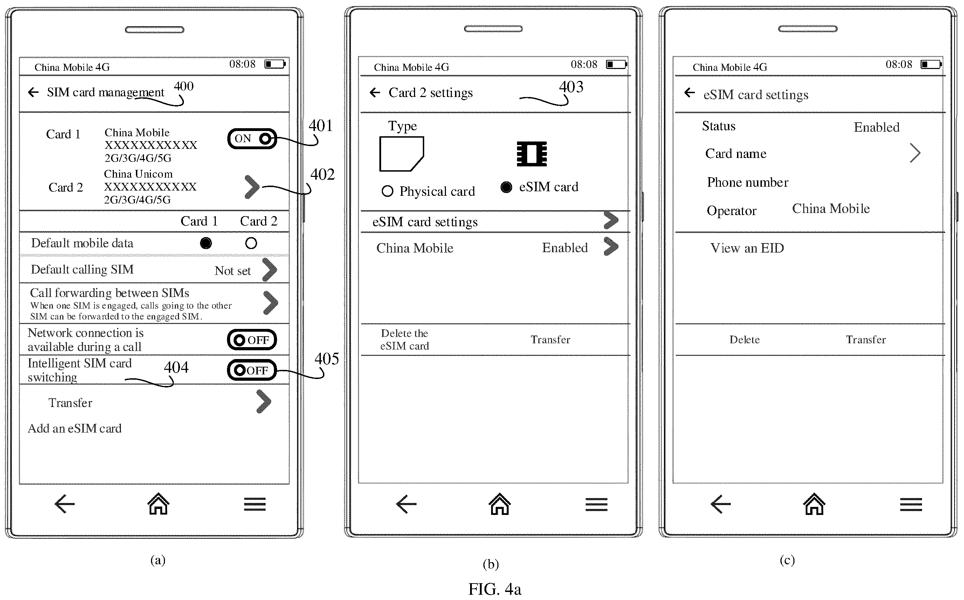

In a possible implementation, the SIM card management interface may be shown in (a) in FIG. 4a. For presentation of the SIM card management interface 400, an icon "card 1" corresponds to the eSIM module 1 in the eUICC, and a control corresponding to the icon "card 1", for example, a button 401, may be configured to set the eSIM module 1. An icon "card 2" corresponds to the eSIM module 2, and a control corresponding to the icon "card 2", for example, a button 402, may be configured to set the eSIM module 2.

As shown in (a) in FIG. 4a, the user may enable or disable the eSIM module 1 by clicking the button 401 corresponding to the icon "card 1" in the SIM card management interface 400. For another example, in the SIM card management interface 400 shown in (a) in FIG. 4a (the SIM card management interface 400 may be the second interface in this application), a display state of the button 401 (the button 401 may be the third button in this application) is used to indicate that the eSIM module 1 is currently in an enabled state. If the user wants to disable the eSIM module 1, the user may perform an operation on the button 401. In response to an operation on the button 401, the electronic device changes the eSIM module 1 from an enabled state to a disabled state. In this case, the electronic device cannot be connected to the network by using the eSIM module 1, that is, the user cannot make a call or access the Internet by using the eSIM module 1. The electronic device may further change a display state (not shown in the figure) of the button 401, and a changed display state is used to indicate that the eSIM module 1 is in a disabled state. In addition, if the user wants to re-enable the eSIM module 1, the user may perform a tap operation on the button 401 again, and in response to an operation performed by the user on the button 401 again, the electronic device changes the eSIM module 1 from the disabled state to the enabled state.

In some embodiments of this application, to help the user control a function of the electronic device 200, an option 404 of intelligent SIM card switching and a virtual button 405 may be further added to the SIM card management interface shown in FIG. 4a, where the virtual button 405 is used to enable or disable the intelligent SIM card switching function. For example, when the virtual button 405 is disabled (OFF), the SIM card management interface may be shown in (a) in FIG. 4a.

In some embodiments, when only one eSIM card, such as the card 1, is installed in the electronic device 200, a related option of the card 2 in the SIM card management interface shown in (a) in FIG. 4a, for example, a card 2 option of default mobile data is dimmed, a call forwarding option between two cards is enabled, an option 404 of intelligent eSIM card switching, and a virtual button 405 thereof are dimmed, and the user cannot perform operations on dimmed options or virtual buttons. If no SIM card is installed in the electronic device 200, both options and virtual buttons on the SIM card management interface shown in (a) in FIG. 4a are dimmed, and the user cannot perform an operation on the options and the virtual buttons on the SIM card management interface.

In some embodiments, when the eSIM module is selected to be in a network connection standby state, to enable the user to learn that the eSIM card is currently selected, in the SIM card management interface shown in (a) in FIG. 4a, the icon "card 2" corresponding to the eSIM module 2 may include a word "eSIM card".

The user may select the button 402 on the SIM card management interface shown in (a) in FIG. 4a, and in response to an operation of the user, the electronic device 200 may jump to the card 2 settings interface shown in (b) in FIG. 4a. In some other embodiments, content included in the card 2 settings interface 403 shown in (b) in FIG. 4a may also be included in the SIM card management interface 400. In this implementation, the content included in the card 2 settings interface 403 may be temporarily hidden from display, and displayed after an operation of the user is received. For example, after receiving a tap operation performed by the user on the control 402 corresponding to the icon "card 2", the electronic device 200 displays a menu on the SIM card management interface 400, where the menu includes content included in the card 2 settings interface.

As shown in (b) in FIG. 4a, the card 2 settings interface may further include a type of the SIM card, which is used to indicate that the current card 2 is the eSIM module in the network connection standby state. With reference to FIG. 1b, when the eSIM module is connected to the plug-in SIM module in hardware, that is, the eSIM module and the plug-in SIM module cannot be in standby mode at the same time, the electronic device 200 may control the eSIM module to be connected to the modem when the physical card button is not selected and the eSIM button is selected, so as to implement the eSIM module in network connection standby mode.

The card 2 settings interface further includes an "eSIM card settings" option, which is used by the user to perform related settings on the eSIM module 2. For example, the user may perform an operation on a control included in the eSIM card settings option to enable or disable the eSIM module 2. When the physical card control is not selected and the eSIM card control is selected, the eSIM module 2 may be in an enabled state by default.

In a possible implementation, after receiving an operation performed by the user on the control set for the eSIM card, the electronic device 200 may change the eSIM module 2 from an enabled state to a disabled state, or change the eSIM module 2 from a disabled state to an enabled state. In another possible implementation, the user may select, on the card 2 settings interface shown in (b) in FIG. 4a, a control for setting the eSIM card, and in response to an operation of the user, the electronic device 200 may jump to the eSIM card settings interface shown in (c) in FIG. 4a. In some other embodiments, content included in the eSIM card settings interface shown in (c) in FIG. 4a may also be included in the card 2 settings interface. The eSIM card settings interface may further provide a setting option or a view option for related information of the eSIM module. For example, the related information of the eSIM module may include related information such as a card name setting option, a card number setting option, card information, a card size, a card network capability, a card version, an activated state of the card, and an operator of the card. The card information may include a card type and a card identifier. The card type may be a plug-in SIM module or an eSIM module, and the card identifier may be an ICCID of the SIM module (for example, the plug-in SIM module or the eSIM module). The eSIM card settings interface may further include an EID view button. When the user wants to view an EID of the eUICC that stores the eSIM profile corresponding to the eSIM module, the user may tap the EID view button. The electronic device 200 may display an interface including the EID in response to a tap operation on the EID view button. The user may set related information of the eSIM module by using a corresponding setting option. For example, the user may set a card name and a card number of the eSIM module. In embodiments of this application, the activated state of the eSIM module may be determined according to a quantity of activated eSIM profiles that are recorded in the electronic device 200, and is displayed in the card state. The card state, the card type, the card identifier (ICCID, EID), and the address of the profile server corresponding to the card of the eSIM module may be recorded in the electronic device 200 after the application framework layer of the electronic device 200 queries the card account information after the kernel layer reports a SIM_SLOT_STATUS_CHANGED event.

In some other embodiments, an example in which the user deletes the original activated eSIM module is used. After a user deletes an activated eSIM module, the status of the eSIM module is updated to deleted. For example, for an originally activated eSIM module in the electronic device 200, if the user wants to delete the eSIM module, as shown in (b) in FIG. 4a, the user may perform an operation on the deletion control. In response to an operation on the delete control, the electronic device 200 may delete the eSIM module 2 from the electronic device 200.

For example, the user may further add and activate a new eSIM module in the electronic device. A control for adding the new eSIM module may be disposed in an "Add an eSIM card" control shown in (a) in FIG. 4a.

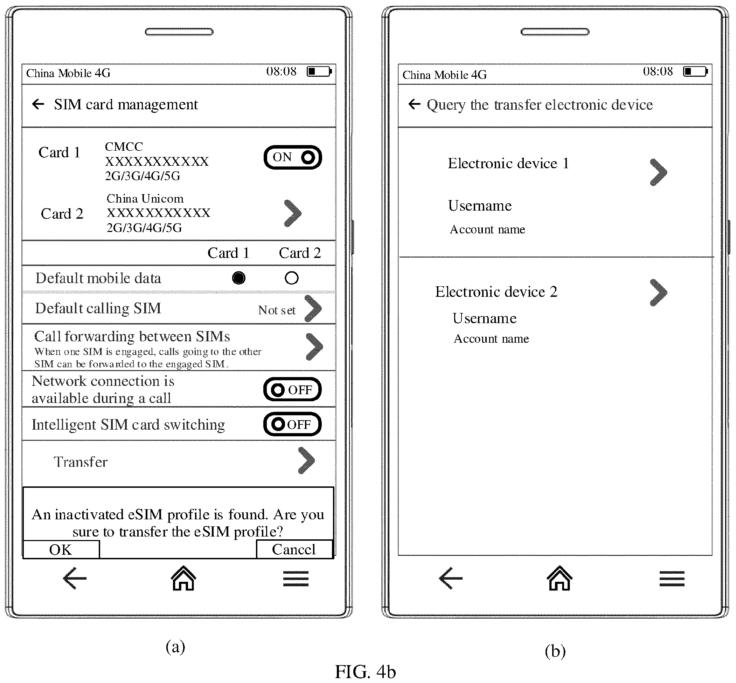

If the user wants to add a new eSIM module to the electronic device 200, as shown in (a) in FIG. 4a, the user may perform a tap operation on a control for adding an eSIM card, or when the electronic device 200 is powered on for the first time, the electronic device 200 may provide, in a startup wizard process, an entry for adding an eSIM module, and the user may perform a tap operation on a button for adding an eSIM module in a startup wizard interface. The electronic device 200 queries, in response to a tap operation on the control for adding the eSIM module, whether there is an available eSIM profile, and may display a waiting interface for adding the e SIM module. If the electronic device 200 finds that there is an available eSIM profile, as shown in (a) in FIG. 4b, the electronic device 200 may display a display interface for querying an eSIM card, and display an eSIM module that can be currently found, or may display a prompt interface and a prompt box as shown in (b) in FIG. 4b. The prompt box is used to prompt the user that an available eSIM profile has been found, and ask the user whether to activate the eSIM profile. In this case, the user can click the activate button. The electronic device 200 may activate the eSIM profile in response to a tap operation performed by the user on the direct activation button. Optionally, the electronic device 200 may further display a waiting interface for activating the eSIM module. If the electronic device 200 finds that there is no available eSIM profile, the camera of the electronic device 200 may be opened, and a scan interface is displayed, so that the user scans, by using the electronic device 200, a corresponding two-dimensional code provided by an operator, to obtain the eSIM profile from a server of the operator, or the user may select a two-dimensional code stored in a gallery or manually enter a corresponding number, so that the electronic device 200 obtains the eSIM profile. After obtaining the eSIM profile, the electronic device 200 may activate the eSIM profile. The electronic device 200 may also display a waiting interface for activating the eSIM module. After the eSIM profile is successfully activated, as shown in (c) in FIG. 4a, the electronic device 200 may display a newly added eSIM module on the SIM card management interface. For example, a card 3 in the figure is the newly added eSIM module. Alternatively, a prompt interface may further be displayed, to prompt the user that the new eSIM module is successfully added and a related function of the eSIM module can be used.

In a scenario in which there are multiple eSIM modules, a primary card and a secondary card may be set for multiple activated eSIM modules.

In some embodiments, the eSIM module 1 in the electronic device is activated. In this case, the eSIM module 1 in the electronic device may be used as a primary card. After an eSIM module 2 is currently installed and activated, the electronic device 200 obtains card information of the SIM module 2, for example, a card type and a card identifier of the SIM module 2. For example, if the obtained card type is the eSIM module, the ICCID is the ICCID 2. The ICCID 2 is an ICCID of the eSIM module 2. The electronic device 200 may send a prompt interface to the user, to prompt that the eSIM module 1 is a current primary card and an activated eSIM module 2 is discovered.

Further, the user may be prompted whether to set the eSIM module 2 as a secondary card. If the user selects to use the eSIM module 2 as the secondary card, the eSIM module 1 is kept as the primary card, and the eSIM module 2 is added as the secondary card. If the user selects to use the eSIM module 2 as the primary card, the eSIM module 2 may be set as the primary card, and the eSIM module 1 is updated as the secondary card. When the user selects single-card standby and selects the eSIM module 2 as the primary card, the eSIM module 1 may be deactivated, and the eSIM module 2 is set as the primary card.

In some other embodiments, the user may be further prompted whether to set the eSIM module 2 as the primary card and the eSIM module 1 as the secondary card. If the user selects to use the eSIM module 2, the eSIM module 1 may be deactivated, and the eSIM module 2 is set as a primary card. If the user selects not to use the eSIM module 2, the eSIM module 1 may continue to be set as a primary card.

In some embodiments, the SIM module set as the primary card may be used by the electronic device 200 to transmit mobile data, and the eSIM module set as the secondary card cannot be used by the electronic device 200 to transmit mobile data. In some other embodiments, both the eSIM module set as the primary card and the eSIM module set as the secondary card may be used by the electronic device 200 to transmit mobile data, and the eSIM module set as the primary card is preferentially used. For example, when the network state of the eSIM module set as the primary card is good, the electronic device 200 transmits the mobile data by using the eSIM module set as the primary card; or when the network state of the eSIM module set as the primary card is poor, the electronic device 200 transmits the mobile data by using the eSIM module set as the secondary card.

In addition, if an activated eSIM module deleted by the user is currently set as the primary card, after the user deletes the eSIM module, the electronic device 200 may further obtain card information (the card information may include a card type and a card identifier) of the eSIM module, and record the obtained card information. After the eSIM module is subsequently re-activated, the electronic device 200 may set the eSIM module as the primary card according to the recorded card information.

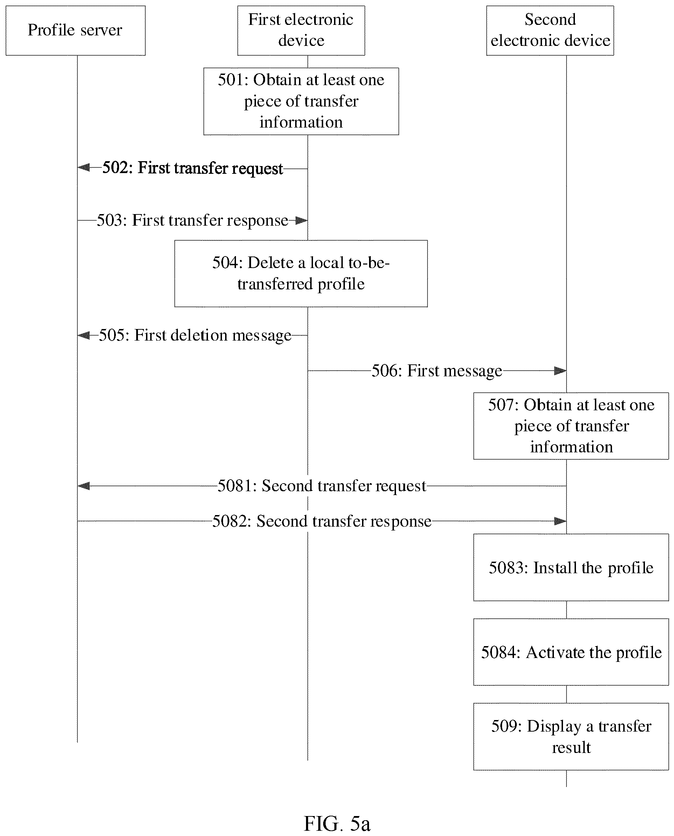

The following uses an example in which the electronic devices are a first electronic device and a second electronic device, where the first electronic device is a to-be-transferred electronic device, and the second electronic device is a target electronic device to which the transfer is performed. The first electronic device may include at least M profiles of eSIM modules. The following uses an example in which the first electronic device includes M0 profiles of eSIM modules. The profile transfer method according to embodiments of this application is specifically described. As shown in FIG. 5a, the method specifically includes the following steps.

Considering that there are multiple scenarios of eSIM modules in the electronic device, the first electronic device or the user may initiate a request for transferring the eSIM module based on different scenarios, to trigger an eSIM card transfer scenario.

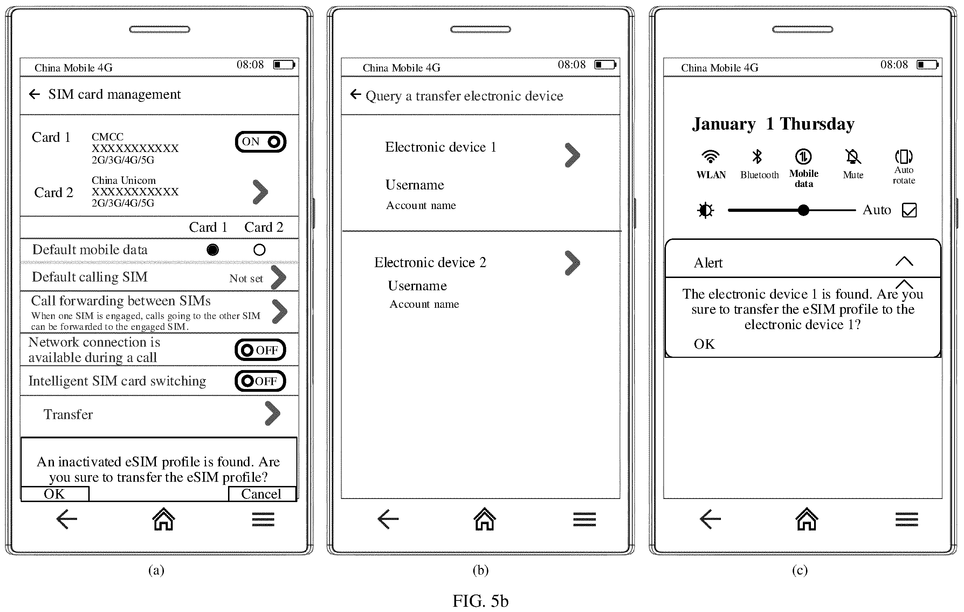

For example, as shown in (a) in FIG. 5b, the first electronic device may display, based on a current state of M0 (M0 is greater than or equal to M) eSIM modules, for example, when there is at least one inactivated (disabled) eSIM module, a prompt box on a display interface of the first electronic device, to prompt the user that there is at least one inactivated eSIM module and whether the inactivated eSIM module needs to be transferred. Alternatively, as shown in (b) in FIG. 5b, the first electronic device may display a query interface for querying the second electronic device. The query interface is used to display an electronic device that can be found and that can be used for transfer. The first electronic device and the second electronic device may search, by using a locally established secure connection or a secure connection established on the Internet, for an electronic device that can be used for transfer. For example, the first electronic device discovers the second electronic device by using a local area network; for example, the first electronic device and the second electronic device may be located in a same local area network, so that the first electronic device searches for all second electronic devices in the local area network in which the first electronic device is located. Alternatively, the second electronic device may be an electronic device to which a same account is logged in with the first electronic device. The account may be an account provided by an operator or an electronic device vendor for a user, for example, an Honor account or a Huawei account, or may be an application account, for example, a social application account or a video application account. The WI-FI frame may further carry the account, so that the first electronic device learns, according to the WI-FI frame, whether the second electronic device and the first electronic device are logged in by using the same account. For example, when the first electronic device and the second electronic device establish the connections to the same WI-FI hotspot, the first electronic device obtains a second user identifier of the second electronic device, for example, a Huawei account used to log in to the second electronic device, and determines whether the second user identifier of the second electronic device is the same as a first user identifier stored in the first electronic device, for example, a Huawei account used to log in to the first electronic device. If the first electronic device determines that the second user identifier is the same as the first user identifier, it indicates that the first electronic device and the second electronic device trust each other. In this case, the first electronic device may determine that an electronic device that needs to be transferred may exist, and trigger a transfer scenario.

After the transfer scenario is triggered, the first electronic device may display an eSIM transfer management interface (the first transfer interface) on the display screen.

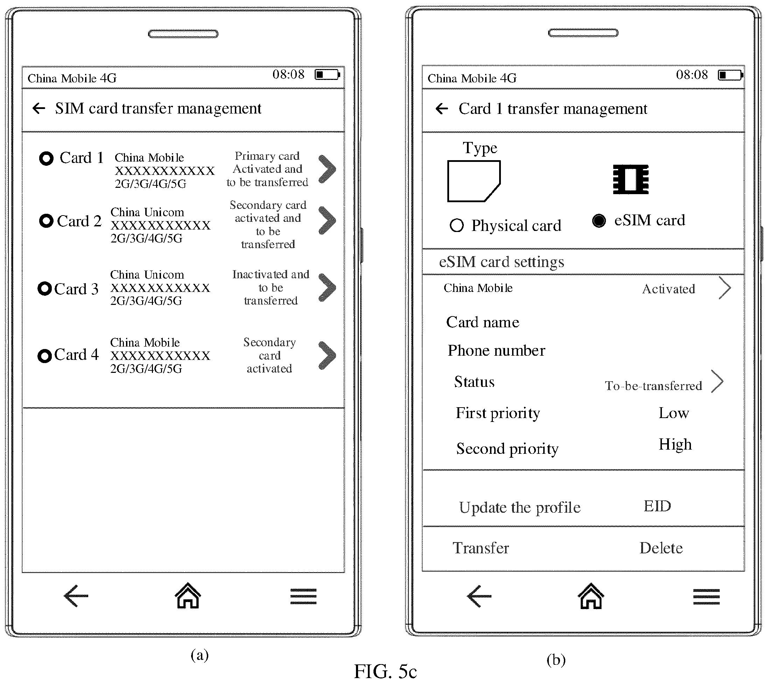

In a possible implementation, with reference to (b) in FIG. 5b, or (c) in FIG. 5b, the first electronic device may first display a prompt box on the display screen. The prompt box may include prompt information, a transfer control, and the like. The prompt information may include "The electronic device 1 is found. Are you sure to transfer the eSIM card to the electronic device 1?" In response to an operation on a confirmation control, the first electronic device may jump to the eSIM transfer management interface (for example, for the first electronic device, an eSIM transfer settings interface of the first electronic device may be the first transfer interface, and for the second electronic device (the electronic device 1), the eSIM transfer settings interface may be the second transfer interface), to enable a transfer scenario. In this way, the user may select multiple to-be-transferred eSIM cards in the first transfer interface of the first electronic device according to a requirement.

Alternatively, the second electronic device may discover the first electronic device in an NFC manner, so as to trigger a transfer scenario of the first electronic device and the second electronic device. In this case, the first electronic device and the second electronic device are not limited to accessing the local area network, and the first electronic device may also be discovered. For example, the first electronic device is not connected to the network, and the second electronic device accesses the mobile network by using data traffic. In this case, the second electronic device may find the first electronic device in an NFC manner.

For example, the first electronic device may trigger a communication connection request, that is, the first electronic device sends the communication connection request to the second electronic device. For example, the user may scan an identifier such as a two-dimensional code of the second electronic device by using a scanning function of the first electronic device, so that the first electronic device sends, according to the obtained identifier of the second electronic device, a communication connection request to the second electronic device; or the user may obtain an NFC identifier of the second electronic device by using an NFC function of the first electronic device, so as to send the communication connection request to the second electronic device. The second electronic device may send a communication connection response to the first electronic device in response to an operation performed on the found communication connection request of the first electronic device. The first electronic device determines, according to the sent communication connection response, to establish a communication connection to the first electronic device, so as to enable a transfer scenario.

For another example, the second electronic device may trigger a communication connection request, to trigger a transfer scenario between the second electronic device and the first electronic device. For example, the user may obtain a Bluetooth identifier of the first electronic device by using the Bluetooth function of the second electronic device, so as to send the communication connection request to the first electronic device. After receiving the communication connection request, the first electronic device sends a communication connection response to the second electronic device. The second electronic device determines, according to the sent communication connection response, to establish a communication connection to the first electronic device. In addition, before sending a communication connection response to the second electronic device, the first electronic device may further display a connection request interface on the first electronic device, and in response to an operation performed on the communication connection request interface, determine to establish a communication connection to the second electronic device, and trigger a transfer scenario.

In another possible implementation, the first electronic device may store a second electronic device that has historically established a communication connection, and the first electronic device may use the second electronic device as a trusted second electronic device. In this case, an interface of the first electronic device may display an identifier list of the trusted second electronic device, and in response to a selection operation performed on the identifier list of the trusted second electronic device, determine the second electronic device that currently establishes a communication connection to the first electronic device, so as to send a communication connection request to the second electronic device, and receive a communication connection response returned by the second electronic device, so as to complete establishment of the communication connection between the first electronic device and the second electronic device. Optionally, a notification message may also be displayed on the display screen of the first electronic device, for example, a first connection message is displayed on the first electronic device, where the first connection message is used to prompt the user that the second electronic device establishes a communication connection to the first electronic device. Similarly, a notification message may also be displayed on the touchscreen of the second electronic device, to notify the user that the second electronic device establishes a communication connection to the first electronic device. For example, a first connection message is displayed on the second electronic device, where the first connection message is used to prompt the user that the second electronic device establishes a communication connection to the first electronic device. Therefore, the first electronic device may determine, based on an electronic device that establishes a communication connection, a target electronic device (the second electronic device) to which transfer is performed, so as to obtain an identifier of the second electronic device, to prepare for subsequent transfer.

In another possible implementation, the user may actively initiate a transfer operation and confirm the second electronic device. For example, in response to an operation of the user on the transfer control of the SIM card management interface shown in (a) in FIG. 4a, a transfer scenario is triggered, and the eSIM transfer management interface is displayed. The eSIM transfer management interface may include an interface for confirming the second electronic device. Therefore, the user may enter related information of the second electronic device by scanning the second electronic device or logging in to the second electronic device, so that the first electronic device confirms information such as an identifier of the second electronic device. The user may further jump to the eSIM transfer settings interface by using a transfer control in each SIM card settings interface, or may jump to the eSIM transfer settings interface in another manner. This is not limited herein.

Step 501: Determine at least one to-be-transferred profile in response to an operation command for a first transfer interface.

The first transfer interface is used to display transfer of at least M profiles of eSIMs.

As shown in (a) in FIG. 5c, an example in which a quantity of profiles of an eSIM in the first electronic device is 4 is used. The first transfer interface displays related information related to 4 profiles of the eSIMs included in the first electronic device in a transfer process. The user may select the to-be-transferred eSIM card on the eSIM transfer settings interface, to determine the to-be-transferred eSIM card. For example, in response to an operation command for a first control, the first control is configured to determine whether the M profiles of eSIMs are to-be-transferred profiles.

In a possible implementation, the first control may be a multi-selection control. In response to an operation on the multi-selection control of the eSIM card in the eSIM transfer settings interface, a multi-selection interface may be displayed. In the multi-selection interface, multiple eSIM cards may be selected at the same time. For example, card 1, card 2, and card 3 are selected as the to-be-transferred eSIM cards. In response to an operation on a multi-selection control of the eSIM card in the eSIM transfer settings interface, M eSIM cards (for example, a card 1, a card 2, and a card 3) are determined as to-be-transferred eSIM cards.

Further, to improve the transfer success rate, a first priority may be set for the eSIM module. For example, when the first electronic device is not used, the primary card may be set as the to-be-transferred eSIM card. When the first electronic device is used normally, the secondary card and the disabled card may be set as the to-be-transferred eSIM cards. In another possible implementation, the user may simultaneously select all eSIM cards that need to be transferred as the multiple to-be-transferred eSIM cards. The first electronic device sets a transfer priority (the first priority) for each eSIM card, so that the eSIM cards are transferred based on the first priorities of the eSIM cards, thereby improving the transfer success rate.

As shown in (a) in FIG. 5c, the eSIM transfer settings interface may further include a status control, where the status control is configured to control a status of a profile of the eSIM; and in response to an operation command for the status control, the electronic device may determine a status of the to-be-transferred profile. The status control may further include a state display bar. The state display bar may add a to-be-transferred state to the status of the to-be-transferred eSIM card. For example, a status of the card 1 (primary card) is activated and to-be-transferred, a status of the card 2 (secondary card) is activated and to-be-transferred, a status of the card 3 is inactivated and to-be-transferred, and a status of the card 4 (secondary card) is activated.

After determining the to-be-transferred eSIM card, the electronic device may obtain information about the to-be-transferred eSIM card. For example, the LPA may obtain the profile identifier of the to-be-transferred eSIM card and the status of the to-be-transferred profile. The status includes at least one of the following: an activated state (or an enabled state), a deactivated state (or a disabled state), a default network connection state (or a primary card state), a standby network connection state (or a secondary card state), a to-be-transferred state, a transfer preparation completed state, a transfer success state, a transfer failure state, a deleted state, a configuring state (Provisioning), an operational state (Operational), a test state, and the like.

The electronic device may set a transfer priority for the eSIM card according to the card information of the eSIM card. The eSIM card may display a corresponding first priority. The priority may be actively set by the user. For a specific setting manner, refer to a setting manner of another settings interface of the eSIM card. Details are not described herein again. Alternatively, the electronic device may determine the priority of a to-be-transferred profile based on the status of the to-be-transferred profile, so that the electronic device may determine the priority of the to-be-transferred profile based on the status of the to-be-transferred profile. For example, as shown in (b) in FIG. 5c, the transfer settings interface of the card 1 may include the first priority that is set when the card 1 is used as the to-be-transferred eSIM card, and may further include the second priority that is set when the card 1 is used as the transfer target.

For example, if the LPA determines that the eSIM module corresponding to the primary card is an activated profile, for example, a card 1 (the first profile), the LPA may set the first priority of the first profile to a low priority. If the LPA determines that the eSIM module corresponding to the secondary card is an activated profile, for example, a card 2 (the second profile), the LPA may set the first priority of the second profile to a medium priority. If the LPA determines that the eSIM module is an inactivated profile, for example, a card 3 (the third profile), the LPA may set the first priority of the third profile to a high priority.

A transfer sequence of the to-be-transferred eSIM card is determined based on the first priority of the to-be-transferred profile (with reference to the foregoing example, the to-be-transferred profile may be transferred in a sequence of the card 3, the card 2, and the card 1), so that the to-be-transferred profile is transferred in sequence according to the transfer sequence. For a profile that currently needs to be transferred, the first electronic device may obtain transfer information of the to-be-transferred profile (Profile), so as to perform step 502.

Step 502: The first electronic device sends a first transfer request to a profile server.

The first transfer request includes an identifier of the second electronic device and an identifier of a to-be-transferred profile. The identifier of the second electronic device may include a type allocation code (Type Allocation Code, TAC), an EID, and the like. The identifier of the to-be-transferred profile may be an ICCID or the like.

Optionally, the first transfer request may further include state information of the to-be-transferred profile. Therefore, the profile server may determine, according to the state information of the to-be-transferred profile and the identifier of the second electronic device, whether a version of the to-be-transferred profile needs to be updated, so that the profile server prepares a transfer profile (Profile) to be sent to the second electronic device in advance.

Optionally, the first transfer request may be further used to obtain an address of a profile server corresponding to the to-be-transferred profile.

The third profile is used as an example. When sending the first transfer request to the profile server, the first electronic device carries related information for requesting to obtain the profile server address, so as to obtain the profile server address based on the first transfer response returned by the profile server. Alternatively, the first electronic device may send, to the ES server, a request message for obtaining the profile server address of the third profile, so that the ES server determines the profile server address of the third profile based on information such as the identifier of the third profile and the user information of the third profile, and returns the profile server address of the third profile to the first electronic device.

Step 503: After determining that the to-be-transferred profile is allowed to be transferred, the profile server sends a first transfer response to the first electronic device.

The process in which the profile server determines that the to-be-transferred profile is allowed to be transferred may include sending a transfer request to the BSS server, to complete authentication of the to-be-transferred profile. For example, the BSS server may also request, according to the identifier of the to-be-transferred profile in the transfer request sent by the profile server, to verify a user account and a password of the to-be-transferred profile corresponding to the first electronic device, so as to verify a user identity of the first electronic device. After receiving the authentication success result of the BSS server, the profile server determines that the transfer profile is allowed to be transferred. Further, the profile server may update the relationship between the identifier (for example, an EID) of the first electronic device and the identifier (for example, an ICCID) of the to-be-transferred profile to a relationship between the identifier (for example, an EID) of the second electronic device and the identifier (for example, an ICCID) of the to-be-transferred profile.

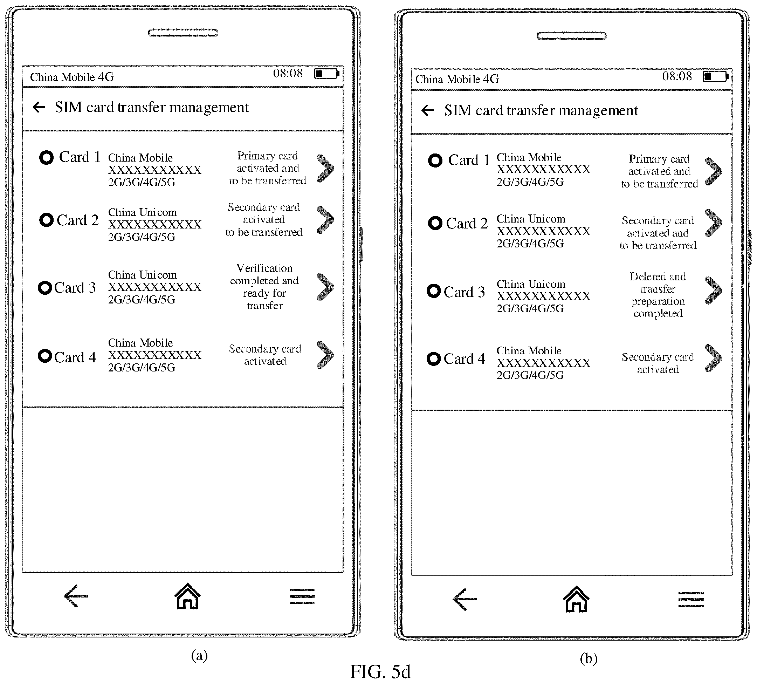

The first transfer response may include a notification message, to notify the first electronic device that the profile server determines that the to-be-transferred profile is allowed to be transferred. After receiving the first transfer response from the profile server, the first electronic device may display, on the first electronic device, that the profile server allows the to-be-transferred profile to be transferred. Further, a status of the to-be-transferred profile (for example, the third profile) may be further changed to verification completed, ready to transfer. As shown in (a) in FIG. 5d, a status of the card 3 is changed to "Verification completed and ready for transfer", that is, the transfer preparation is completed.

Step 504: The first electronic device deletes a local to-be-transferred profile according to the first transfer response.

In this case, in the first transfer interface, a status of the to-be-transferred profile may be displayed as deleted and transfer preparation completed. For example, as shown in (b) in FIG. 5d, in this case, the status of the card 3 may be changed to "Deleted and transfer preparation completed". In a specific embodiment, to improve security, the to-be-transferred profile in the eUICC may be deleted based on the LPA. Because the LPA is a system-level App, security is relatively high. The LPA ensures that profiles can be successfully deleted, eliminating operator concerns about card cloning and copying and improving product security.

Step 505: The first electronic device may send a first deletion message to the profile server.

The first deletion message is used to notify the profile server that deletion of the to-be-transferred profile of the first electronic device is completed.

The first electronic device repeats step 502 to step 505, to complete a transfer preparation process of all to-be-transferred profiles, and deletes all local to-be-transferred profiles. In another possible implementation, step 502 to step 503 may be repeated, and step 504 and step 505 are performed after transfer responses of all to-be-transferred profiles are completed. Then, step 506 may be performed again, so as to notify the second electronic device that transfer preparation for the first electronic device is completed.

Alternatively, step 506 may be directly performed, and after the second electronic device completes transfer of the corresponding to-be-transferred profile, the second electronic device returns to step 502 to perform a transfer preparation process of a next to-be-transferred profile. This is not limited herein.

Step 506: The first electronic device sends a first message to the second electronic device.

The first message includes at least one piece of transfer information, and the transfer information includes at least one of the following: an identifier of a to-be-transferred profile, an address of a profile server corresponding to the to-be-transferred profile, or an identifier of a second electronic device. Further, the first message may further include a status of the to-be-transferred profile.

The profile server is not limited to a profile storage and management server, and may be an eSIM card registration server.

With reference to the foregoing example, the first message may be sent to the second electronic device for each to-be-transferred profile, or may be sent to the second electronic device by aggregating transfer information of some to-be-transferred profiles, or may be sent to the second electronic device by sending all transfer information of all to-be-transferred profiles. This is not limited herein.

Step 507: The second electronic device receives the first message, so as to obtain at least one piece of transfer information.

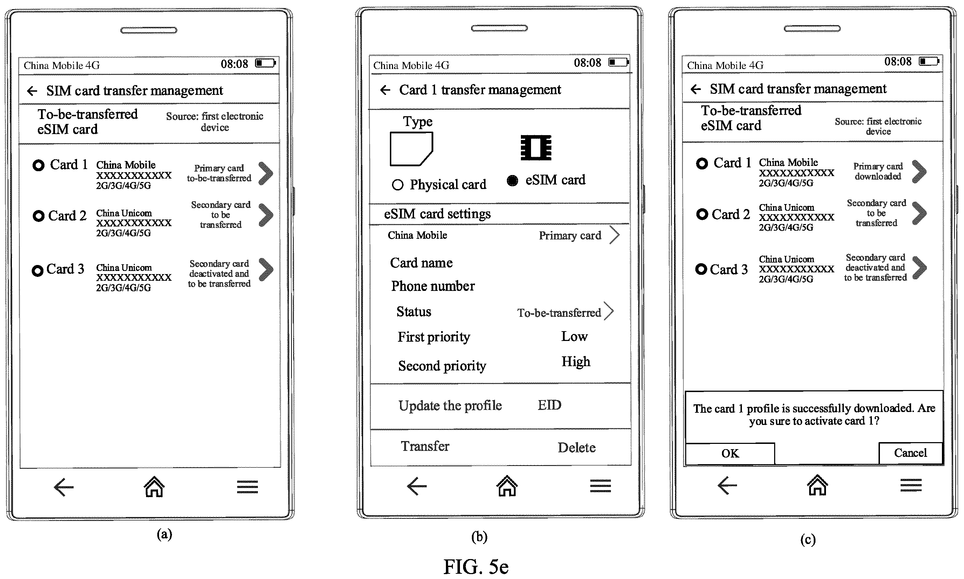

The second electronic device receives the first message, so that the second electronic device may display the transfer information of the at least one to-be-transferred profile in a second transfer interface, where the second transfer interface is used to display transfer of the at least one to-be-transferred profile. As shown in (a) in FIG. 5e, with reference to the foregoing example, it may be determined that the to-be-transferred profile includes a card 1, a card 2, and a card 3. The second transfer interface may further display related information of the to-be-transferred profile. For example, the second transfer interface may further display transfer information of the to-be-transferred profile, for example, information such as a status of the to-be-transferred profile, an identifier of the to-be-transferred profile, a server address corresponding to the to-be-transferred profile, and metadata information of the to-be-transferred profile (Profile Metadata). The state of the to-be-transferred profile may include at least one of the following: an activated state, a deactivated state, a default network connection state, a standby network connection state, and a to-be-transferred state. With reference to the foregoing example, the card 1 is in a primary card (default network connection) state, the card 2 is in a secondary card (standby network connection) state, and the card 3 is in a deactivated state.

In addition, the second transfer interface may further display the transfer state of the to-be-transferred profile. For example, with reference to the foregoing example, the transfer state of the card 1 is a to-be-transferred state, the transfer state of the card 2 is a to-be-transferred state, and the transfer state of the card 3 is a to-be-transferred state.

After step 507, the second electronic device may obtain and activate the at least one to-be-transferred profile according to the at least one piece of transfer information.

The user may determine, based on the transfer information of the to-be-transferred profile displayed in the second transfer interface, and in response to an operation command for the second transfer interface, a process of starting to install and activate the profile, or the second electronic device may directly start, based on the received at least one piece of transfer information, a process of installing and activating the profile without a user's active operation. A specific implementation may be determined based on a transfer setting manner of the user, or may be determined based on a default transfer manner. This is not limited herein.

A state of the at least one to-be-transferred profile is obtained; a second priority of the at least one to-be-transferred profile is determined according to the status of the at least one to-be-transferred profile; and the at least one to-be-transferred profile is obtained and activated based on the second priority of the at least one to-be-transferred profile.

For example, if it is determined, based on the status of the to-be-transferred profile, that the to-be-transferred profile is correspondingly in a default network connection state (primary card), for example, a card 1 (the first profile), the second priority of the first profile may be set to a high priority. If it is determined, based on the status of the to-be-transferred profile, that the to-be-transferred profile is correspondingly in a standby network connection state (secondary card), for example, a card 2 (the second profile), the second priority of the second profile may be set to a medium priority. If it is determined, based on the status of the to-be-transferred profile, that the to-be-transferred profile is correspondingly in an inactivated state, for example, a card 3 (the third profile), the second priority of the third profile may be set to a low priority. For example, as shown in (b) in FIG. 5e, the second priority of the card 1 is a high priority.

A transfer sequence of the to-be-transferred eSIM card of the second electronic device is determined based on the second priority of the to-be-transferred profile (with reference to the foregoing example, the to-be-transferred profile may be transferred in a sequence of the card 1, the card 2, and the card 3), so that the to-be-transferred profile is transferred in sequence according to the transfer sequence. For a profile that currently needs to be transferred, the second electronic device may obtain transfer information of the to-be-transferred profile (Profile), so as to perform step 5081.

Step 5081: Send a second transfer request to the profile server.

Step 5082: The profile server determines a profile corresponding to the identifier of the to-be-transferred profile, and sends a second transfer response to the second electronic device.

The second transfer response may include a profile that is corresponding to the identifier of the to-be-transferred profile and that is determined by the profile server.

The profile server may determine, according to the version information (DeviceInfo) of the second electronic device, whether the to-be-transferred profile needs to be updated, and if the to-be-transferred profile needs to be updated, generate, according to the version information of the second electronic device, a profile corresponding to the to-be-transferred profile for the second electronic device to download.

Step 5083: The second electronic device installs the to-be-transferred profile according to the received to-be-transferred profile.

After successfully installing the to-be-transferred profile, the second electronic device sends a transfer success notification to the profile server.

The second electronic device repeats steps 5081 to 5083 to download all to-be-transferred profiles.

Step 5084: Activating the to-be-transferred profile according to the transfer information of the to-be-transferred profile.

The profile server may be different profile servers to which different profiles belong. According to the obtained transfer information, the second electronic device may obtain addresses of different profile servers to which different profiles belong, establish a secure connection, and complete downloading and installation of a corresponding to-be-transferred profile.

A prompt interface may be displayed, and a prompt box is displayed. The prompt box is used to prompt the user that the to-be-transferred profile has been successfully downloaded, and ask the user whether to activate the to-be-transferred profile. As shown in (c) in FIG. 5e, a prompt box may be displayed in the second transfer interface, and the prompt box includes prompt information. For example, the prompt information is "The card 1 profile is successfully downloaded. Are you sure to activate card 1?" Further, the prompt box may further include an activation control. In this case, the user may tap to directly activate the control. In response to a tap operation performed by the user on the direct activation button, the electronic device 200 may activate the to-be-transferred profile. Specifically, the second electronic device activates the to-be-transferred profile according to the transfer information, for example, according to information such as the ICCID and the operator identifier. The electronic device 200 may also display a waiting interface for activating the eSIM module. After the eSIM profile is successfully activated, the second electronic device may send a transfer success notification to the first electronic device.

The second electronic device may activate the profile (Profile) of the primary card after the second electronic device is connected to the network by using Wi-Fi, so that the card 1 is directly set as the primary card in a status of activating the primary card (the card 1). This avoids a user from resetting the primary card. In addition, because the primary card has been set, the second electronic device may connect to the mobile network based on the primary card, thereby facilitating successful network stationing of the primary card of the second electronic device. Further, in a state in which the primary card is successfully set, the another to-be-transferred profile continues to be downloaded, so that the transfer success rate of the another to-be-transferred profile may also be improved.

Step 509: Display a transfer result of the at least one to-be-transferred profile on the second electronic device.

For example, the second transfer interface may display that transfer of the at least one to-be-transferred profile on the second electronic device is completed. Alternatively, a prompt box may be used to prompt that transfer of the at least one to-be-transferred profile on the second electronic device is completed. This is not limited herein.

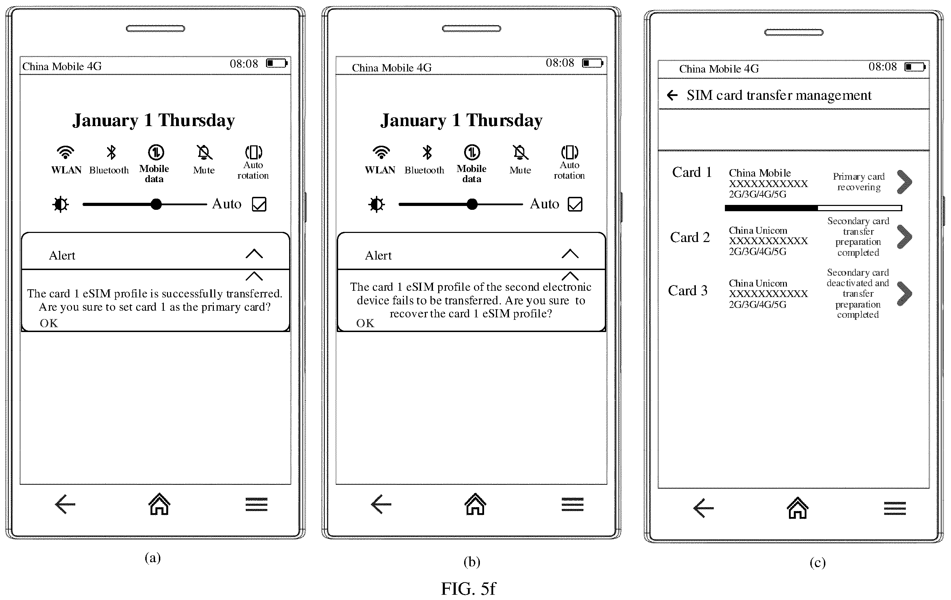

After the eSIM profile is successfully activated, as shown in (a) in FIG. 5f, the electronic device 200 may display a prompt interface, to prompt the user that the card 1 has been successfully transferred and a related function of the card 1 can be used. In addition, the electronic device 200 may change the status of the profile to transfer success. Further, the user may be prompted, on a prompt interface, whether to set the card 1 as the primary card. In this way, the user is prompted to set the card 1 as the primary card, or the user may be prompted, on the prompt interface, to set the card 1 as the primary card and successfully station on the network. In this way, the user may access the mobile network by using the card 1, thereby improving the use experience of the user.

If the transfer fails, for example, downloading fails, or activation fails, it may be considered that the second electronic device fails to transfer the profile. In this case, a transfer failure notification may be sent to the first electronic device, or a transfer failure notification may be sent to the profile server. After determining that the second electronic device fails to transfer, the profile server may send the transfer failure notification to the first electronic device. Further, a prompt interface may be displayed on the second electronic device, and a prompt box is displayed. This prompt box is used to prompt the user that the to-be-transferred profile fails to be transferred, and ask the user whether to transfer the to-be-transferred profile again. Further, the prompt box may further include a retry control and a cancellation control. In this case, the user may tap the direct retry control to perform step 508 again.

After the first electronic device determines that the to-be-transferred profile fails to be transferred, the first electronic device may display, in the first transfer interface, that the status of the to-be-transferred profile is a transfer failure state, so that the first electronic device may trigger a procedure of recovering the to-be-transferred profile, so that the first electronic device recovers the to-be-transferred profile. For example, as shown in (b) in FIG. 5f, a prompt interface may be further displayed on the second electronic device, and a prompt box is displayed. This prompt box is used to prompt the user that the profile to be transferred fails to be transferred and ask the user whether to recover the profile to be transferred. Further, the prompt box may further include a recovery control and a cancellation control. In this case, the user may tap the direct recovery control, and the first electronic device recovers the to-be-transferred profile in response to an operation on the recovery control. Considering that the first electronic device has deleted the to-be-transferred profile in a process of completing transfer preparation, in a possible implementation, the deletion is merely temporary deletion, the to-be-transferred profile is still reserved in the backup storage area, and the first electronic device may be recovered by using the to-be-transferred profile stored in the backup storage area. In another possible implementation, the first electronic device has permanently deleted the to-be-transferred profile. In this case, the profile server may send a first recovery command to the first electronic device, where the first recovery command is used to instruct the first electronic device to recover the to-be-transferred profile, and the first recovery command includes the to-be-transferred profile. In this way, the first electronic device recovers the to-be-transferred profile according to the received to-be-transferred profile.

As shown in (c) in FIG. 5f, the first electronic device displays a recovery interface of the to-be-transferred profile, where the recovery interface may display recovery progress of the to-be-transferred profile.

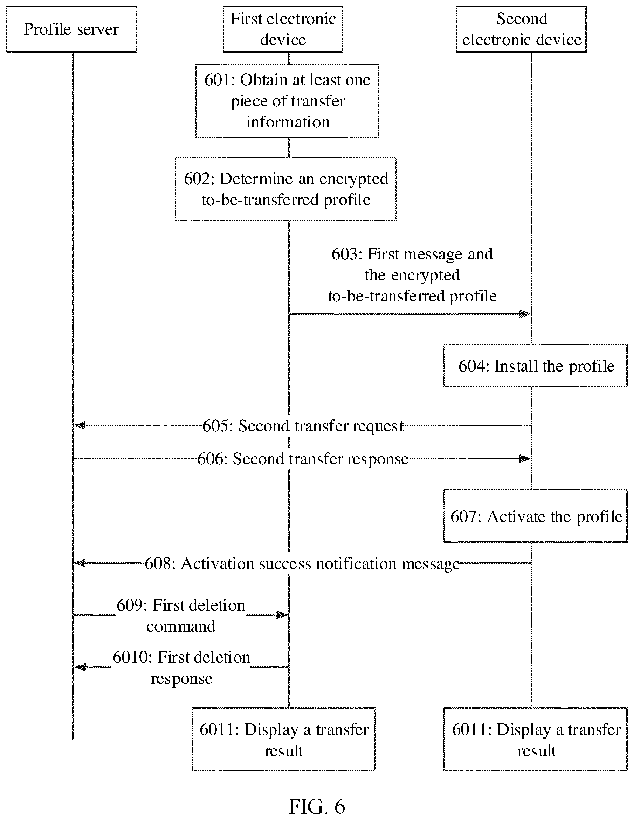

The following uses an example in which the electronic devices are a first electronic device and a second electronic device, where the first electronic device is a to-be-transferred electronic device, and the second electronic device is a target electronic device to which the electronic device is to be transferred. The first electronic device may include at least M profiles of eSIM modules. The second electronic device may support at least M profiles of eSIM modules. The profile transfer method according to embodiments of this application is specifically described. As shown in FIG. 6, the method specifically includes the following steps.

Step 601: A first electronic device determines transfer information of a to-be-transferred profile.

In this step, reference may be made to the manner of determining the second electronic device in FIG. 5a and the manner of determining the transfer information of the to-be-transferred profile in step 501. Details are not described herein again.

Step 602: The first electronic device determines, according to the to-be-transferred profile, to encrypt the to-be-transferred profile.

When it is determined that there are multiple to-be-transferred profiles, each of the to-be-transferred profiles may be encrypted separately. The encryption key may be allocated by the profile server to the first electronic device. In this solution, the profile server further needs to send the key to the second electronic device, so that after receiving the encrypted to-be-transferred profile, the electronic device may decrypt the encrypted to-be-transferred profile by using the key sent by the profile server, to obtain the to-be-transferred profile. The key may be obtained through negotiation between the first electronic device and the profile server. The second electronic device may obtain the key by receiving a notification message sent by the profile server, or obtain an address of the profile server from the first electronic device and further obtain the key. To obtain the key, the first electronic device or the second electronic device can generate and obtain the key only after establishing a secure connection to the profile server and completing corresponding authentication and identification with each other. In another possible implementation, the encryption key may be alternatively sent by the second electronic device to the first electronic device. This is not limited herein. To ensure the security of different profiles, encryption keys may be separately generated for different to-be-transferred profiles, or encryption keys may be generated for different electronic devices. This is not limited herein.

With reference to (a) in FIG. 5c, in this case, the status of the to-be-transferred profile (for example, the card 3) may be changed to deactivated (or disabled), so that the status of the to-be-transferred profile may be updated to transfer preparation completed.

Optionally, in this case, the first electronic device may delete the to-be-transferred profile (for example, delete the ISD-P), or may delete the to-be-transferred profile after confirming that the second electronic device successfully receives the to-be-transferred profile. This is not limited herein. If the profile to be transferred has been deleted, the status of the to-be-transferred profile may be changed to a state of deleted and transfer preparation completed.

Step 603: Send the encrypted to-be-transferred profile and transfer information to the second electronic device.

The first electronic device establishes a local secure connection to the second electronic device, so that the second electronic device obtains an encrypted to-be-transferred profile and profile transfer information.

With reference to (c) in FIG. 5b, the local secure connection established between the first electronic device and the second electronic device may be displayed on the first electronic device and the second electronic device. After successfully receiving the encrypted to-be-transferred profile and the profile transfer information, with reference to (a) in FIG. 5e, the second electronic device may display, on the second electronic device, that the to-be-transferred profile is successfully received.

Step 604: The second electronic device decrypts the encrypted to-be-transferred profile, and installs the to-be-transferred profile.

The new device installs the corresponding profile according to the profile transfer information.

With reference to (a) in FIG. 5b, a prompt interface may be displayed to prompt the user whether to transfer the to-be-transferred profile. The second electronic device may perform step 605 in response to an operation on the activation control. In another possible implementation, after successfully installing the to-be-transferred profile, the second electronic device may perform step 605 without being triggered by a user, so as to reduce user operations.

Step 605: The second electronic device sends a second transfer request to the profile server corresponding to the to-be-transferred profile.

The second transfer request may include TAC and/or EID information of the first electronic device, and TAC and/or EID information of the second electronic device, so that the profile server verifies the activation request. For a specific verification process, refer to the verification process in the foregoing embodiments. Details are not described herein again. Further, the server re-binds a relationship between the EID and the ICCID.

Optionally, the second electronic device may send the second transfer request to the profile server by using an initial network connection profile preset in the eUICC, or send the second transfer request by using a network such as Wi-Fi, or send the second transfer request to the profile server by activating at least one profile. When the at least one profile is pre-activated for sending, an acknowledgment message indicating successful transfer is sent to the profile server corresponding to the profile, and step 607 is not performed.

Step 606: The profile server sends a second transfer response to the second electronic device.

The second transfer response may be used to indicate that the second electronic device may determine activation information of the to-be-transferred profile according to the transfer information of the to-be-transferred profile, so as to activate the to-be-transferred profile according to the activation information. For a specific activation process, refer to the foregoing embodiments. Details are not described herein again.

Step 607: The second electronic device activates the to-be-transferred profile.

For the activation process, refer to the activation process in the foregoing embodiments. Details are not described herein again.

After activating the network stationing function of the primary card, the second electronic device may further notify the profile server, and the profile server may determine a version of the to-be-transferred profile according to the identifier of the second electronic device, to determine whether the to-be-transferred profile needs to be updated. If it is determined that the profile needs to be updated, the profile server triggers an update process of the profile.

Step 608: The second electronic device sends an activation success notification message to the profile server.

Step 609: The profile server sends a first deletion command to the first electronic device.

The first deletion command is used to instruct the first electronic device to delete the to-be-transferred profile.

Step 6010: The first electronic device deletes a to-be-transferred profile and information about the to-be-transferred profile.

In this case, the first electronic device may display, in the first transfer interface, that the status of the to-be-transferred profile is deleted. With reference to the first transfer interface shown in (a) in FIG. 5d, the status of the card 3 in the first transfer interface may be changed to "deleted".

Step 602 to step 6010 are repeated to complete transfer of all to-be-transferred profiles. Alternatively, step 602 to step 603 may be repeated to complete transfer preparation processes of all to-be-transferred profiles. After receiving all to-be-transferred profiles, the second electronic device completes an activation process in sequence according to the second priority.

Step 6011: Display a transfer result of the at least one to-be-transferred profile on the second electronic device.

This step may be displayed in the first transfer interface of the first electronic device, or may be displayed in the second transfer interface of the second electronic device. This is not limited herein. For a specific implementation, refer to step 509. Details are not described herein again.

After the first electronic device determines that the to-be-transferred profile fails to be transferred, refer to the manner of determining that the transfer fails and the manner of recovering the to-be-transferred profile in FIG. 5a.

In another possible implementation, based on a scenario in which the first electronic device has deleted the to-be-transferred profile, after determining that the to-be-transferred profile fails to be transferred, the second electronic device may send a second recovery command to the first electronic device, where the second recovery command is used to instruct the first electronic device to recover the to-be-transferred profile, and the second recovery command includes the to-be-transferred profile.

After receiving the second recovery command sent by the second electronic device, the first electronic device may display that the status of the to-be-transferred profile is transfer failure. Therefore, the first electronic device may recover the to-be-transferred profile based on the received to-be-transferred profile.

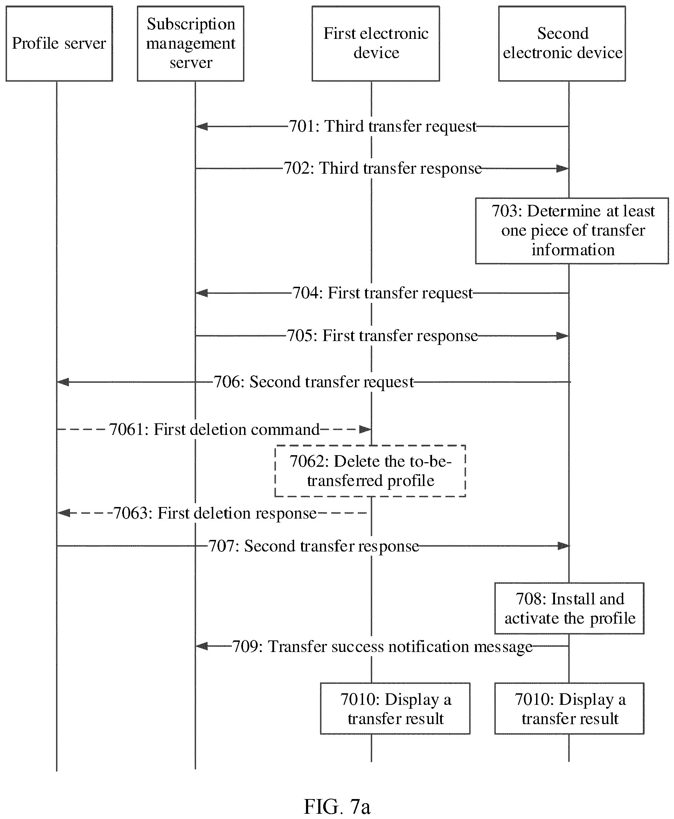

Considering a case in which a transfer scenario cannot be triggered due to a reason such as that the first electronic device may fail to be powered on, or a case in which the second electronic device actively triggers a transfer scenario, based on an example in which the electronic devices are the first electronic device and the second electronic device, the first electronic device is a to-be-transferred electronic device, and the second electronic device is a target electronic device to be transferred. The first electronic device may include at least M profiles of eSIM modules. The second electronic device supports at least M profiles of eSIM modules. The profile transfer method according to embodiments of this application is specifically described. As shown in FIG. 7a, the method specifically includes the following steps.

Step 701: A second electronic device sends a third transfer request to a subscription management server.

The subscription management server may be a server in an operator network, or may be a server configured to register an eSIM module, or may be another server configured to manage the eSIM module. This is not limited herein.

The third transfer request may include an identifier of the second electronic device and user information. The user information may include at least one of the following: a user account, a password, a user number, and the like.

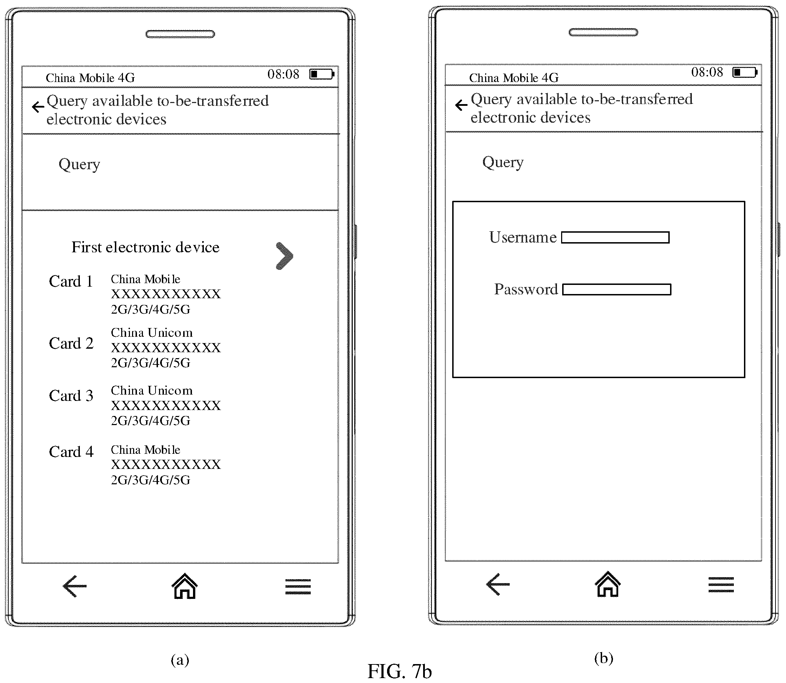

For example, as shown in (a) in FIG. 7b, the second electronic device may display a third transfer interface, where the third transfer interface may be used by the target electronic device to be transferred to search for the first electronic device that can be transferred and a profile that can be transferred on the first electronic device.

For example, as shown in (a) in FIG. 7b, the third transfer interface may include a control for querying a user SIM card. In response to an operation performed by the user on the control for querying a user SIM card, the second electronic device may display an account query interface of a service provider corresponding to a to-be-transferred profile. As shown in (b) in FIG. 7b, the account query interface may include a user name and a password input interface in response to a user name and a password entered by the user, the information about all SIM cards under the account is displayed on the account query page of the carrier. Certainly, the account query interface of the corresponding profile service provider may also be displayed in the third transfer interface. This is not limited herein.

Optionally, the second electronic device may determine, according to the found public land mobile network (Public land mobile network, PLMN) information, a network of a profile service provider nearby, and simultaneously send the third transfer request to a subscription management server of the found profile server provider, or a user manually enters an address of the subscription management server, or manually selects to access the subscription management server, so as to retrieve a profile that has been subscribed to by the old device.

Step 702: The subscription management server determines related information about M profiles of eSIM modules of the first electronic device according to the third transfer request.

The subscription management server may obtain, according to the received third transfer request and user information such as a user account, a password, and a user number, related information of an eSIM profile associated with the user account or the user number.

Under the user account, the profile service provider may manage one or more profiles. With reference to the foregoing example, as shown in (a) in FIG. 7b, is displayed eSIM profile information of the first electronic device returned by each operator server. For example, card 1, card 2, card 3, and card 4.

Step 703: Determine transfer information of at least one to-be-transferred profile in response to an operation command for a third transfer interface.

For a specific manner in which the user selects the at least one to-be-transferred profile, refer to the manner selected in the second transfer interface in step 508. Details are not described herein again. After it is determined that the profile of the first electronic device is the to-be-transferred profile, related information of the profile returned by the operator server may be determined as the transfer information of the to-be-transferred profile.

Step 704: The second electronic device initiates a first transfer request to the subscription management server according to the determined transfer information of the to-be-transferred profile.

The first transfer request may include an identifier of the to-be-transferred profile and an identifier of the second electronic device.

Step 705: The subscription management server verifies the transfer request, determines the to-be-transferred profile, and may, after determining that the verification succeeds, return a first transfer response to the second electronic device, so as to instruct the second electronic device to perform step 706. The file server address may be carried.

Step 706: Send a second transfer request to a profile server according to the at least one piece of transfer information, to obtain and activate the at least one to-be-transferred profile.

Step 707: The profile server returns a second transfer response to the second electronic device.

The profile server returns a download response to the second electronic device, where the download response is used to return, to the second electronic device, a profile corresponding to an identifier of the to-be-transferred profile. Optionally, the download response may further carry profile metadata related information such as state information of the profile, so that the second electronic device installs and activates the profile corresponding to the identifier of the to-be-transferred profile.

For example, the profile server may verify, based on the download request sent by the second electronic device, the to-be-transferred profile, to determine whether the second electronic device is allowed to transfer the to-be-transferred profile.

After the verification succeeds, further, step 7061: The profile server may send a first deletion command of the to-be-transferred profile to the first electronic device. For the deletion command, refer to the deletion command sent by the profile server in FIG. 5a and FIG. 6. Details are not described herein again. Step 7062: After successfully deleting the to-be-transferred profile, step 7063: the first electronic device may send, to the profile server, a first deletion response indicating successful deletion. In this case, the profile server may send the to-be-transferred profile of the first electronic device to the second electronic device, and does not need to additionally generate a profile, so that overheads required by the profile server to generate a profile and storage space occupied for storing a correspondence between a newly generated profile and an identifier of the second electronic device may be reduced. Considering that the first electronic device may not delete the to-be-transferred profile in a timely manner, in this case, the profile server may determine, within a preset time, that the first electronic device does not successfully delete the to-be-transferred profile if the profile server does not receive the deletion response sent by the first electronic device. In this case, the profile server may generate a new to-be-transferred profile for the second electronic device. For example, the profile server may retain the ICCID and the IMSI according to the to-be-transferred profile of the first electronic device, and generate a new to-be-transferred profile in a manner such as changing a key.

Step 708: The second electronic device installs and activates a corresponding to-be-transferred profile according to the received to-be-transferred profile.

For a specific installation process, reference may be made to the implementations in FIG. 3b to FIG. 3d, FIG. 4a, and FIG. 5a. For an activation process, reference may be made to the implementation in FIG. 6. Details are not described herein again.

Step 709: After confirming that the installation succeeds, the second electronic device sends a transfer success response to the subscription management server.

Further, the second electronic device may further update the status of the to-be-transferred profile in the third transfer interface to display that the to-be-transferred profile is successfully transferred.

Step 7010: The subscription management server updates the relationship between the to-be-transferred profile and the second electronic device according to the transfer success response. In this way, the database of the operator server is updated to the subscription management server.

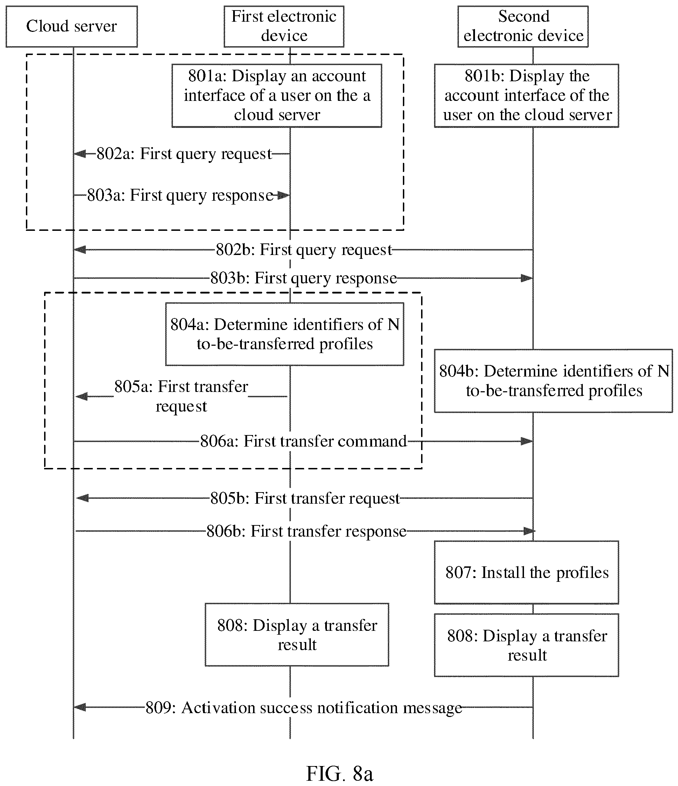

In embodiments of this application, the user may further complete, by using the cloud server and based on an account (for example, a Huawei account) of the electronic device, a process of transferring an eSIM card to another electronic device (for example, a second electronic device) that logs in to the account. As shown in FIG. 8a, the process includes the following steps.

Step 801: In response to an operation command for a login control, an electronic device displays an account interface of a user on the cloud server, where the login control is used by the user to log in to the cloud server.

In a possible implementation, based on a scenario in which the first electronic device triggers transfer, in this case, step 801a: The first electronic device may log in to an account interface of the cloud server, and log in to an account of the user on the cloud server by performing an operation on the login control.

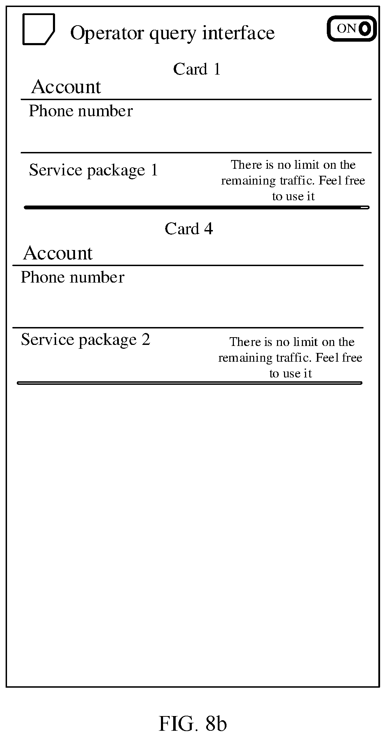

In a possible implementation, as shown in FIG. 8b, based on a transfer scenario triggered by the second electronic device, in this case, step 801b: The second electronic device may log in to an account interface of a cloud server, and log in to an account of a user on the cloud server by performing an operation on a login control.

The user may enable an eSIM service from a network to which the profile belongs by using the first electronic device, and obtain a profile account, so as to establish an association relationship between the profile and the account by using corresponding information of the profile by using the account (for example, a Huawei account) of the user. The cloud server may further record related information of the profile, for example, state information such as download and activation. In another possible implementation, the user may obtain the code number after registering with the profile service provider, or may be a code number resold by a terminal manufacturer (the terminal manufacturer pre-obtains a code number resource from a profile server, and may be bound to an account of the user), and the code number resource may be operated by the cloud server. The terminal manufacturer delivers the profile with the electronic device, and binds the EID to the profile during the delivery of the profile. In this way, the user may directly activate, by using the account of the terminal, an account of a profile service provider corresponding to the eSIM service, to obtain the profile account.

Optionally, the cloud server may return the state information of the to-be-transferred profile of the first electronic device, so that after the profile is transferred to the second electronic device, activation of a state corresponding to the corresponding profile is completed.

Step 802a: The first electronic device sends a first query request to the cloud server in response to an operation command for a first query control, where the first query control is used by the user to query profile information of an eSIM module of the first electronic device.

Step 802b: The second electronic device sends a first query request to the cloud server in response to an operation command for the first query control.

Step 803a: The cloud server returns a first query response to the first electronic device, where the first query response is used to indicate information about M profiles of eSIM modules of the first electronic device.

Step 803b: The cloud server returns a first query response to the second electronic device, where the first query response is used to indicate information about M profiles of eSIM modules of the first electronic device.

The server obtains account information of a user according to the first query request, where the account information of the user includes information about M profiles of electronic subscriber identity modules eSIMs of the first electronic device, and an identifier of the second electronic device.

Therefore, the first electronic device or the second electronic device receives the first query response returned by the cloud server, and displays the information about M profiles of eSIM modules of the first electronic device managed by the cloud server.

If the user queries the cloud server that there may be multiple profiles, the user separately sends the first query request to the multiple profile servers to which the profiles belong.

Step 804a: Determine identifiers of N to-be-transferred profiles in response to an operation command for a first transfer interface, where the first transfer interface is used to determine whether a profile in information about M profiles of the eSIM modules is a to-be-transferred profile, and N is a positive integer less than or equal to M.

Step 804b: Determine identifiers of N to-be-transferred profiles in response to an operation command for a second transfer interface, where the second transfer interface is used to determine whether a profile in information about M profiles of the eSIM modules is a to-be-transferred profile, and N is a positive integer less than or equal to M.

Step 805a: Send a first transfer request to the cloud server, where the first transfer request includes: identifiers of the N to-be-transferred profiles and an identifier of the first electronic device.

Step 805a may include the following step 1 to step 3.

Step 1: The cloud server sends a first deletion command to the first electronic device, where the first deletion command is used to instruct the first electronic device to delete the N to-be-transferred profiles.

Step 2: The first electronic device sends a first deletion response to the cloud server, where the first deletion response is used to indicate whether the first electronic device successfully deletes the N to-be-transferred profiles.

After receiving the first deletion command, the first electronic device deletes the to-be-transferred profile indicated by the first deletion command, where the first deletion message is used to notify the cloud server that deletion of the to-be-transferred profile of the first electronic device is completed. A state of the to-be-transferred profile is displayed as a transfer preparation completed state.

Step 3: The cloud server determines, according to the first deletion response, N profiles corresponding to the identifiers of the N to-be-transferred profiles.

The cloud server uses the K to-be-transferred profiles that are successfully deleted by the first electronic device as K profiles corresponding to the identifiers of the N to-be-transferred profiles, where K is a positive integer less than N. The cloud server changes the status of the K to-be-transferred profiles that are successfully deleted by the first electronic device to deleted. The cloud server generates (N-K) profiles according to identifiers of (N-K) to-be-transferred profiles that are not successfully deleted by the first electronic device. The cloud server sets the status of the N-K to-be-transferred profiles to the N-K profiles of the second electronic device.

Step 806a: The cloud server sends a first transfer command to the second electronic device.

The first transfer command includes N profiles corresponding to the identifiers of the N to-be-transferred profiles, the N to-be-transferred profiles are N profiles in the M profiles of eSIMs, and N is a positive integer less than M.

Step 805b: Send a first transfer request to the cloud server, where the first transfer request includes: identifiers of the N to-be-transferred profiles and an identifier of the first electronic device.

Step 805b may also include step 1 to step 3, and details are not described herein again.

Step 806b: The cloud server sends a first transfer response to the electronic device.

The first transfer response includes profiles corresponding to the identifiers of the N to-be-transferred profiles of the first electronic device.

Step 807: Obtain and activate, according to the first transfer response, profiles corresponding to the identifiers of the N to-be-transferred profiles.

Step 808: The electronic device displays transfer results of the N to-be-transferred profiles in the first transfer response.

Activation results of the N profiles are displayed.

Step 809: The second electronic device sends a transfer result of the first profile to the cloud server.

In a possible implementation, the transfer result is used to indicate that the first profile is successfully transferred. In this case, the cloud server may report a relationship (for example, a binding relationship between an EID and an ICCID) between the second electronic device and the profile to the operator server, so as to update a database of the operator server. In other words, the cloud server may send the registration information of the user, the identifier of the second electronic device, and related information of the successfully transferred profile to the operator network server for archiving.

In another possible implementation, the transfer result is used to indicate that the first profile fails to be transferred, the transfer result includes an identifier of a to-be-transferred profile corresponding to the first profile, and the first profile is one of the N profiles.

Further, the cloud server sends a recovery command to the first electronic device, where the recovery command is used to instruct the first electronic device to recover the to-be-transferred profile, and the recovery command includes the to-be-transferred profile.

The first electronic device receives a recovery command sent by the cloud server, and displays that a status of the to-be-transferred profile is transfer failure. The first electronic device recovers the to-be-transferred profile according to the recovery command. After the recovery succeeds, a status of the to-be-transferred profile may be displayed as recovered.

According to the profile transfer method in embodiments of this application, a terminal cloud manages and controls a profile, and a technical means of obtaining profile information in multiple old devices by using a Huawei account is provided, so as to resolve a problem that the old device cannot be powered on and is temporarily transferred. Users do not need to trigger a transfer action for each profile. Multiple profiles may be transferred at the same time. All eSIM card switching processes may be completed online, and eSIM card activation is automatically completed. This simplifies the eSIM card switching process and improves the eSIM card switching efficiency. In addition, the transfer failure caused by the secondary card not transferred during the primary card transfer may be avoided, thereby improving user experience.

The implementations of this application may be randomly combined to achieve different technical effects.

In the foregoing embodiments of this application, the method according to embodiments of this application is described from a perspective of an electronic device 200 serving as an execution body. To implement the functions in the method according to the foregoing embodiments of this application, the electronic device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

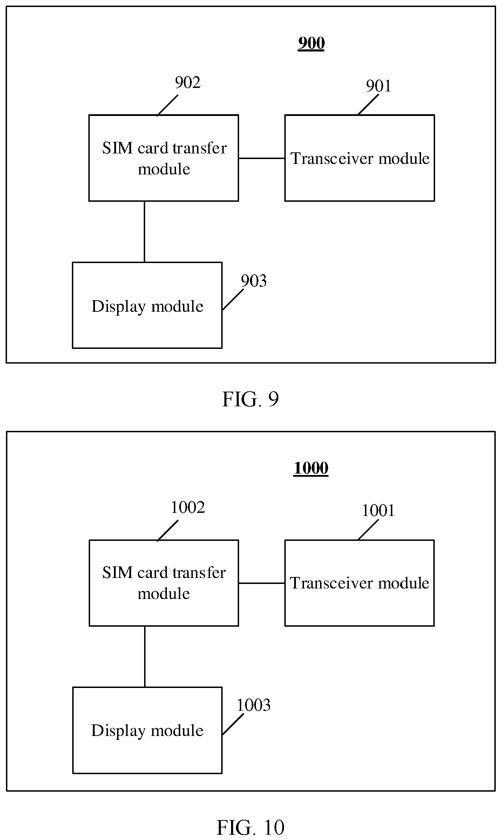

Based on a same concept, FIG. 9 shows an electronic apparatus 900 according to this application. The electronic apparatus 900 includes a transceiver module 901, a SIM card transfer module 902, and a display module 903. For example, the electronic apparatus 900 may be the first electronic device in embodiments of this application. The electronic apparatus 900 may store M profiles of eSIM modules, where M is a positive integer greater than 1. The electronic apparatus 900 includes:

The SIM card transfer module 902 may be configured to: determine at least one to-be-transferred profile in response to an operation command for a first transfer interface, where the first transfer interface is used to display transfer of the M profiles; and send a first message to a second electronic device by using the transceiver module 901, where the first message includes at least one piece of transfer information, and the transfer information includes at least one of the following: an identifier of a to-be-transferred profile, an address of a profile server corresponding to the to-be-transferred profile, or an identifier of the second electronic device; displaying, in the first transfer interface by using the display module 903, that the transfer preparation for the at least one to-be-transferred profile on the first electronic device is completed.

In some embodiments, the first transfer interface further includes a first control. The SIM card transfer module 902 may be configured to determine at least one to-be-transferred profile in response to an operation command for the first control. The first control is used to determine the M profiles as to-be-transferred profiles.

In some embodiments, before sending the first message to the second electronic device by using the transceiver module 901, the SIM card transfer module 902 may further obtain a status of the to-be-transferred profile, where the status includes at least one of the following: an activated state, a deactivated state, a default network connection state, a standby network connection state, and a to-be-transferred state; determine a first priority of the to-be-transferred profile according to the status of the to-be-transferred profile; and determine the at least one piece of transfer information based on the first priority of the to-be-transferred profile.

In some embodiments, the first transfer interface further includes a status control. The status control is configured to control a status of a profile. The SIM card transfer module 902 may be configured to determine a status of the to-be-transferred profile in response to an operation command for the status control.

In some embodiments, the first message further includes a status of at least one to-be-transferred profile.

In some embodiments, before the SIM card transfer module 902 sends the first message to the second electronic device by using the transceiver module 901, for one of the at least one piece of transfer information, the SIM card transfer module 902 is further configured to delete a to-be-transferred profile corresponding to the transfer information of the first electronic device; and display, by using the display module 903, that a status of the to-be-transferred profile is transfer preparation completed.

In some embodiments, the SIM card transfer module 902 sends a first deletion message to the profile server by using the transceiver module 901, where the first deletion message is used to notify the profile server that deletion of the to-be-transferred profile of the first electronic device is completed.

In some embodiments, before the SIM card transfer module 902 sends the first message to the second electronic device by using the transceiver module 901, for one of the at least one piece of transfer information, the SIM card transfer module 902 is further configured to: send a first transfer request to the profile server by using the transceiver module 901, where the first transfer request includes an identifier of the second electronic device and an identifier of the to-be-transferred profile; and receive a first transfer response electronic device from the profile server by using the transceiver module 901.

In some embodiments, the SIM card transfer module 902 displays, on the first electronic device by using the display module 903, that the profile server allows the to-be-transferred profile to be transferred.

In some embodiments, the SIM card transfer module 902 receives, by using the transceiver module 901, a first recovery command sent by the profile server, where the first recovery command is used to instruct the first electronic device to recover the to-be-transferred profile, the first recovery command includes the to-be-transferred profile, and the display module 903 displays that a status of the to-be-transferred profile is transfer failure.

In some embodiments, before the SIM card transfer module 902 sends the first message to the second electronic device by using the transceiver module 901, for one of the at least one piece of transfer information, the SIM card transfer module 902 is further configured to determine an encrypted to-be-transferred profile according to the to-be-transferred profile; and send the encrypted to-be-transferred profile to the second electronic device by using the transceiver module 901.

In some embodiments, before deleting the to-be-transferred profile of the first electronic device, the SIM card transfer module 902 is further configured to receive, by using the transceiver module 901, a first deletion command sent by the profile server, where the first deletion command is used to instruct the first electronic device to delete the to-be-transferred profile.

In some embodiments, the SIM card transfer module 902 receives, by using the transceiver module 901, a second recovery command sent by the second electronic device, where the second recovery command is used to instruct the first electronic device to recover the to-be-transferred profile, the second recovery command includes the to-be-transferred profile, and the SIM card transfer module 902 displays, by using the display module 903, that a status of the to-be-transferred profile is transfer failure.

In another possible implementation, the SIM card transfer module 902 may be configured to: in response to an operation command for a login control, display an account interface of a user on the cloud server by using the display module 903, where the login control is used by the user to log in to the cloud server; and in response to an operation command for a first query control, send a first query request to the cloud server by using the transceiver module 901, where the first query control is used by the user to query profile information of an eSIM module of the first electronic device; receive, by using the transceiver module 901, a first query response returned by the cloud server, and display information about M profiles of eSIM modules of the first electronic device managed by the cloud server; determine identifiers of N to-be-transferred profiles in response to an operation command for a first transfer interface, where the first transfer interface is used to determine whether a profile in the information about the M profiles of the eSIM modules is a to-be-transferred profile, and N is a positive integer less than or equal to M; and send a first transfer request to the cloud server by using the transceiver module 901; the first transfer request includes: identifiers of the N to-be-transferred profiles and an identifier of the first electronic device; and receiving a first transfer response of the cloud server by using the transceiver module 901, and displaying transfer results of the N to-be-transferred profiles in the first transfer response.

In some embodiments, before receiving the first transfer response of the cloud server by using the transceiver module 901, the SIM card transfer module 902 further receives, for one of the M to-be-transferred profiles by using the transceiver module 901, a first deletion command sent by the cloud server, where the first deletion command is used to instruct the first electronic device to delete the to-be-transferred profile; deletes the to-be-transferred profile of the first electronic device; and displays, by using the display module 903, that a status of the to-be-transferred profile is transfer preparation completed; sends a first deletion message to the cloud server by using the transceiver module 901, where the first deletion message is used to notify the cloud server that deletion of the to-be-transferred profile of the first electronic device is completed.

In some embodiments, the SIM card transfer module 902 receives, by using the transceiver module 901, a recovery command sent by the cloud server, where the recovery command is used to instruct the first electronic device to recover the to-be-transferred profile, the recovery command includes the to-be-transferred profile, and the display module 903 displays that a status of the to-be-transferred profile is transfer failure.

It should be noted that, in embodiments of this application, for the transceiver module 901, the SIM card transfer module 902, and the display module 903. During specific implementation, corresponding functions may be integrated into three or more different processors, or may be integrated into two or one processor. This is not limited herein. During specific implementation, the display module 903 may be a touchscreen of the electronic apparatus 900. In addition, the electronic apparatus 900 may not perform display on the display module of the electronic apparatus 900. In this case, the electronic apparatus 900 may connect to an external display device (for example, an all-in-one machine, a television, a vehicle-mounted computer, a notebook computer, or a desktop computer) to perform display on the external display device.

Based on a same concept, FIG. 10 shows an electronic apparatus 1000 according to an embodiment of this application. The electronic apparatus 1000 includes a transceiver module 1001, a SIM card transfer module 1002, and a display module 1003. For example, the electronic apparatus 1000 may be a second electronic device, where the second electronic device supports at least M profiles of electronic subscriber identity modules eSIMs.

The transceiver module 1001 may be configured to receive a first message of a first electronic device, where the first message includes at least one piece of transfer information of the first electronic device, and the transfer information includes at least one of the following: an identifier of a to-be-transferred profile, an identifier of the first electronic device, or an address of a profile server corresponding to the to-be-transferred profile.

The display module 1003 may be configured to display an identifier of the at least one to-be-transferred profile in a second transfer interface, where the second transfer interface is used to display transfer of the at least one to-be-transferred profile, and display that the at least one to-be-transferred profile is transferred on the second electronic device.

The SIM card transfer module 1002 may be configured to obtain and activate the at least one to-be-transferred profile according to the at least one piece of transfer information in response to an operation command for the second transfer interface.

In some embodiments, before obtaining and activating the at least one to-be-transferred profile, the SIM card transfer module 1002 may be further configured to: obtain a status of the at least one to-be-transferred profile, where the status includes at least one of the following: an activated state, a deactivated state, a default network connection state, a standby network connection state, and a to-be-transferred state; and determine a second priority of the at least one to-be-transferred profile according to the status of the at least one to-be-transferred profile; obtain and activate the at least one to-be-transferred profile according to the second priority of the at least one to-be-transferred profile.

In some embodiments, the first message further includes a status of the at least one to-be-transferred profile.

In some embodiments, the second transfer interface further includes a status control, where the status control is configured to control a status of a profile. The SIM card transfer module 1002 may be further configured to: display a status of the at least one to-be-transferred profile in the second transfer interface; and determine the status of the at least one to-be-transferred profile in response to an operation command for the status control.

In some embodiments, the display module 1003 may be configured to display that a status of the at least one to-be-transferred profile is a transfer completed state.

In some embodiments, before obtaining the at least one to-be-transferred profile, the SIM card transfer module 1002 is further configured to send, for one of the at least one to-be-transferred profile, a first transfer request to the profile server according to an address of a profile server corresponding to the to-be-transferred profile by using the transceiver module 1001, where the first transfer request includes an identifier of the first electronic device and an identifier of the to-be-transferred profile; receive, by using the transceiver module 1001, a first transfer response from the profile server, where the first transfer response includes a profile corresponding to the identifier of the to-be-transferred profile; and the display module 1003 may be configured to display the obtained profile corresponding to the identifier of the to-be-transferred profile on the profile server.

In some embodiments, the SIM card transfer module 1002 receives, by using the transceiver module 1001, a first encrypted to-be-transferred profile sent by the first electronic device, where the first encrypted to-be-transferred profile is generated after being encrypted based on the to-be-transferred profile.

In some embodiments, the SIM card transfer module 1002 is configured to send a second transfer request to the profile server according to the address of the profile server corresponding to the to-be-transferred profile by using the transceiver module 1001, where the second transfer request includes an identifier of the first electronic device and an identifier of the to-be-transferred profile; and receive a second transfer response from the profile server by using the transceiver module 1001, where the second transfer response is used to indicate the first profile server to activate the to-be-transferred profile.

In some embodiments, the second transfer response further includes an updated profile corresponding to the identifier of the to-be-transferred profile; and the SIM card transfer module 1002 is further configured to activate the updated profile.

In some embodiments, the SIM card transfer module 1002 is configured to send a recovery command to the first electronic device by using the transceiver module 1001, where the recovery command is used to instruct the first electronic device to recover the to-be-transferred profile, the recovery command includes the to-be-transferred profile, and the display module 1003 displays that a status of the to-be-transferred profile is transfer failure.

In another possible implementation, the SIM card transfer module 1002 may be configured to: in response to an operation command for a login interface, display an account interface of the user on a cloud server by using the display module 1003, where the login interface is used by the user to log in to the cloud server; and send a first query request to the cloud server by using the transceiver module 1001, where the first query request is used to query information about the M profiles of the eSIM modules of the first electronic device managed by the cloud server; receive, by using the transceiver module 1001, a first query response returned by the cloud server, and display profile information of M eSIM modules of the first electronic device managed by the cloud server; and in response to an operation command for a second transfer interface, send a first transfer request to the cloud server by using the transceiver module 1001, where the first transfer request includes identifiers of the N to-be-transferred profiles and an identifier of the first electronic device, the second transfer interface is used to determine whether a profile in the M profiles is a to-be-transferred profile, and N is a positive integer less than or equal to M; receive a first transfer response of the cloud server by using the transceiver module 1001, where the first transfer response includes profiles corresponding to the identifiers of the N to-be-transferred profiles of the first electronic device; obtain and activate, according to the first transfer response, the profiles corresponding to the identifiers of the N to-be-transferred profiles; and display, by using the display module 1003, activation results of the N profiles.

In some possible implementations, the SIM card transfer module 1002 may send activation results of the N profiles to the cloud server by using the transceiver module 1001.

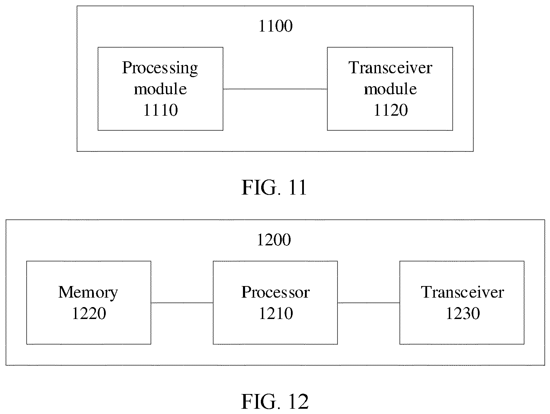

As shown in FIG. 11, an embodiment of this application further provides a communication apparatus. FIG. 11 is a schematic block diagram of a communication apparatus 1100 according to an embodiment of this application. The communication apparatus 1100 may be a communication device, or an apparatus, for example, a chip system, that can support a communication device in implementing a function required in the method. For example, the communication device is a cloud server.

The communication apparatus 1100 includes a processing module 1110 and a transceiver module 1120. For example, the communication apparatus 1100 may be a cloud server, or may be a chip applied to a cloud server, or another combined device, component, or the like that has a function of the cloud server. When the communication apparatus 1100 is a cloud server, the transceiver module 1120 may be a transceiver, and may include an antenna, a radio frequency circuit, and the like. The processing module 1110 may be a processor, for example, a baseband processor, and the baseband processor may include one or more central processing units (central processing units, CPUs). When 1100 is the component having a function of the cloud server, the transceiver module 1120 may be a radio frequency unit, and the processing module 1110 may be a processor, for example, a baseband processor. When 1100 is a chip system, the transceiver module 1120 may be an input/output interface of the chip system (for example, a baseband chip), and the processing module may be a processor of the chip system, and may include one or more central processing units.

The processing module 1110 may be configured to perform all operations, except sending and receiving operations, performed by the cloud server in embodiments shown in FIG. 8a, and/or configured to support another process of the technology described herein. The transceiver module 1120 may be configured to perform all receiving and sending operations performed by the cloud server in embodiments shown in FIG. 8a.

In addition, the transceiver module 1120 may be a function module, and the function module can complete both a sending operation and a receiving operation. For example, the transceiver module 1120 may be configured to perform all sending operations and receiving operations performed by the cloud server in any of the embodiments shown in FIG. 8a. For example, when the sending operation is performed, the transceiver module 1120 may be considered as a sending module, and when the receiving operation is performed, the transceiver module 1120 may be considered as a receiving module. Alternatively, the transceiver module 1120 may be a general term of two function modules. The two function modules are a sending module and a receiving module. The sending module is configured to complete a sending operation. For example, the sending module may be configured to perform all sending operations performed by the cloud server in any of the embodiments shown in FIG. 8a. The receiving module is configured to complete a receiving operation. For example, the receiving module may be configured to perform all receiving operations performed by the cloud server in any of the embodiments shown in FIG. 8a.

For example, the transceiver module 1120 is configured to: obtain account information of a user, where the account information of the user includes: information about M profiles of electronic subscriber identity modules eSIMs of a first electronic device, and an identifier of a second electronic device; receive a first query request, where the first query request is used to query M profile information of the first electronic device; return a first query response, where the first query response is used to indicate the information about M profiles of the first electronic device; and receive a first transfer request, where the first transfer request is used to request to transfer N profiles of the first electronic device; send a first transfer command to the second electronic device, where the first transfer command includes N profiles corresponding to identifiers of the N to-be-transferred profiles, the N to-be-transferred profiles are N profiles in the M profiles, and N is a positive integer less than M.

The processing module 1110 is configured to use N profiles corresponding to the identifiers of the N to-be-transferred profiles as N profiles of the second electronic device.

In some embodiments, the transceiver module 1120 is further configured to: send a first deletion command to the first electronic device, where the first deletion command is used to instruct the first electronic device to delete the N to-be-transferred profiles; receive a first deletion response of the first electronic device, where the first deletion response is used to indicate whether the first electronic device successfully deletes the N to-be-transferred profiles; and the processing module 1110 is configured to determine, according to the first deletion response, N profiles corresponding to the identifiers of the N to-be-transferred profiles.

In some embodiments, the processing module 1110 is configured to use K to-be-transferred profiles that are successfully deleted by the first electronic device as K profiles corresponding to the identifiers of the N to-be-transferred profiles, where K is a positive integer less than N.

In some embodiments, the processing module 1110 is configured to change the status of the K to-be-transferred profiles that are successfully deleted by the first electronic device to deleted.

In some embodiments, the processing module 1110 is configured to generate (N-K) profiles according to identifiers of (N-K) to-be-transferred profiles that are not successfully deleted by the first electronic device.

In some embodiments, the processing module 1110 is configured to set the status of the N-K to-be-transferred profiles to N-K profiles of the second electronic device.

In some embodiments, the transceiver module 1120 is configured to: receive a transfer result of a first profile sent by the second electronic device, where the transfer result is used to indicate that the first profile fails to be transferred, the transfer result includes an identifier of a to-be-transferred profile corresponding to the first profile, and the first profile is one of the N profiles; and send a recovery command to the first electronic device, where the recovery command is used to instruct the first electronic device to recover the to-be-transferred profile; and the recovery command includes the to-be-transferred profile.

It should be understood that, in embodiments of this application, the processing module 1110 may be implemented as a processor or a processor-related circuit component, and the transceiver module 1120 may be implemented as a transceiver or a transceiver-related circuit component.

As shown in FIG. 12, an embodiment of this application further provides a communication apparatus 1200. For example, the communication apparatus 1200 is, for example, a cloud server. For example, the communication apparatus 1200 may be a communication device, a chip system, or the like. The communication apparatus 1200 includes a processor 1210. Optionally, the communication apparatus may further include a memory 1220. Optionally, the communication apparatus may further include a transceiver 1230. The memory 1220 stores a computer command or program, and the processor 1210 may execute the computer command or program stored in the memory 1220. When the command or the program stored in the memory 1220 is executed, the processor 1210 is configured to perform an operation performed by the processing module 1110 in the foregoing embodiments, and the transceiver 1230 is configured to perform an operation performed by the transceiver module 1120 in the foregoing embodiments. Alternatively, the communication apparatus 1200 may not include the memory 1220. For example, the memory is located outside the communication apparatus 1200. When a computer command or program stored in the external memory is executed, the processor 1210 is configured to perform an operation performed by the processing module 1110 in the foregoing embodiments, and the transceiver 1230 is configured to perform an operation performed by the transceiver module 1120 in the foregoing embodiments.

The transceiver 1230 may be a functional unit, and the functional unit can complete both a sending operation and a receiving operation. For example, the transceiver 1230 may be configured to perform all sending operations and receiving operations performed by the cloud server in any of the embodiments shown in FIG. 8a. For example, when the sending operation is performed, the transceiver 1230 may be considered as a transmitter, and when the receiving operation is performed, the transceiver 1230 may be considered as a receiver. Alternatively, the transceiver 1230 may be a general term of two functional units. The two functional units are a transmitter and a receiver. The transmitter is configured to complete a sending operation. For example, the transmitter may be configured to perform all sending operations performed by the cloud server in any of the embodiments shown in FIG. 8a, and the receiver is configured to complete a receiving operation. For example, the receiver may be configured to perform all receiving operations performed by the cloud server in any of the embodiments shown in FIG. 8a.

In addition, if the communication apparatus 1200 is the chip system, the transceiver 1230 may also be implemented by using a communication interface of the chip system. The communication interface is connected to a radio frequency transceiver component in the communication device, to implement information receiving and sending by using the radio frequency transceiver component. The communication interface may be a functional unit, and the functional unit can complete both a sending operation and a receiving operation. For example, the communication interface may be configured to perform all sending operations and receiving operations performed by the cloud server in any of the embodiments shown in FIG. 8a. For example, when the sending operation is performed, the communication interface may be considered as a sending interface, and when the receiving operation is performed, the communication interface may be considered as a receiving interface. Alternatively, the communication interface may be a general term of two functional units. The two functional units are a sending interface and a receiving interface. The sending interface is configured to complete a sending operation. For example, the sending interface may be configured to perform all sending operations performed by the cloud server in any of the embodiments shown in FIG. 8a, and the receiving interface is configured to complete a receiving operation. For example, the receiving interface may be configured to perform all receiving operations performed by the cloud server in any of the embodiments shown in FIG. 8a.

It should be understood that the communication apparatus 1000 or the communication apparatus 1200 according to embodiments of this application may implement functions of the cloud server in any of the embodiments shown in FIG. 8a, and operations and/or functions of the modules in the communication apparatus 1000 or the communication apparatus 1200 are separately used to implement corresponding procedures in any of the embodiments shown in FIG. 8a. For brevity, details are not described herein again.

An embodiment of this application further provides a communication system. The communication system includes an electronic apparatus 900 and an electronic apparatus 1000, and may further include a communication apparatus 1100 or a communication apparatus 1200.

An embodiment of this application further provides a computer storage medium. The computer-readable storage medium is configured to store a computer program, and when the computer program is run on a computer, the computer is enabled to perform the method in any one of the possible implementations in FIG. 5a.

An embodiment of this application further provides a computer storage medium. The computer-readable storage medium is configured to store a computer program, and when the computer program is run on a computer, the computer is enabled to perform the method in any one of the possible implementations in FIG. 6.

An embodiment of this application further provides a computer storage medium. The computer-readable storage medium is configured to store a computer program, and when the computer program is run on a computer, the computer is enabled to perform the method in any one of the possible implementations in FIG. 7a.

An embodiment of this application further provides a computer storage medium. The computer-readable storage medium is configured to store a computer program, and when the computer program is run on a computer, the computer is enabled to perform the method in any one of the possible implementations in FIG. 8a.

An embodiment of this application further provides a computer program product including commands. The computer program product is configured to store a computer program, and when the computer program is run on a computer, the computer is enabled to perform the method in any one of the possible implementations in FIG. 5a to FIG. 8a.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described herein aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed herein, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments of this application, it should be understood that the disclosed systems, apparatuses, and methods may be implemented in another manner. For example, the described apparatus embodiment is merely an example. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several commands for instructing a computer device (which may be a personal computer, a server, or a network device) to perform all or some of the steps of the methods according to embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A profile transfer method, applied to a first electronic device, wherein the first electronic device comprises M profiles of electronic subscriber identity modules eSIMs, and M is a positive integer greater than 1; and the method comprises:
determining at least one to-be-transferred profile in response to an operation command for a first transfer interface, wherein the first transfer interface is used to display transfer of the M profiles;
sending a first message to a second electronic device, wherein the first message comprises at least one piece of transfer information, and the transfer information comprises at least one of the following: an identifier of a to-be-transferred profile, an address of a profile server corresponding to the to-be-transferred profile, or an identifier of the second electronic device; and
displaying, in the first transfer interface, that transfer preparation for the at least one to-be-transferred profile on the first electronic device is completed.

2. The method according to claim 1, wherein the first transfer interface further comprises a first control, and the determining at least one to-be-transferred profile in response to an operation command for a first transfer interface comprises:
determining the at least one to-be-transferred profile in response to an operation command for the first control, wherein the first control is used to determine the M profiles as to-be-transferred profiles.

3. The method according to claim 2, before the sending a first message to a second electronic device, further comprising:
obtaining a status of the to-be-transferred profile, wherein the status comprises at least one of the following: an activated state, a deactivated state, a default network connection state, a standby network connection state, and a to-be-transferred state;
determining a first priority of the to-be-transferred profile according to the status of the to-be-transferred profile; and
determining the at least one piece of transfer information based on the first priority of the to-be-transferred profile.

4. The method according to claim 3, wherein the first transfer interface further comprises a status control, wherein the status control is used to control a status of a profile, and obtaining statuses of the M to-be-transferred profiles comprises:
determining the status of the to-be-transferred profile in response to an operation command for the status control.

5. The method according to claim 3 or 4, wherein the first message further comprises the status of the at least one to-be-transferred profile.

6. The method according to any one of claims 1 to 5, wherein before the sending a first message to a second electronic device, for one of the at least one piece of transfer information, the method further comprises:
deleting a to-be-transferred profile corresponding to the transfer information of the first electronic device; and
displaying that the status of the to-be-transferred profile is transfer preparation completed.

7. The method according to claim 6, wherein the method further comprises:
sending a first deletion message to the profile server, wherein the first deletion message is used to notify the profile server that deletion of the to-be-transferred profile of the first electronic device is completed.

8. The method according to any one of claims 1 to 6, wherein before the sending a first message to a second electronic device, for one of the at least one piece of transfer information, the method further comprises:
sending a first transfer request to the profile server, wherein the first transfer request comprises the identifier of the second electronic device and an identifier of the to-be-transferred profile; and
receiving a first transfer response electronic device from the profile server.

9. The method according to claim 8, wherein the method further comprises:
displaying, on the first electronic device, that the profile server allows the to-be-transferred profile to be transferred.

10. The method according to any one of claims 6 to 9, wherein the method further comprises:
receiving a first recovery command sent by the profile server, wherein the first recovery command is used to instruct the first electronic device to recover the to-be-transferred profile, and the first recovery command comprises the to-be-transferred profile; and
displaying that the status of the to-be-transferred profile is transfer failure.

11. The method according to any one of claims 1 to 6, wherein before the sending a first message to a second electronic device, for one of the at least one piece of transfer information, the method further comprises:
determining an encrypted to-be-transferred profile according to the to-be-transferred profile; and
the method further comprises:
sending the encrypted to-be-transferred profile to the second electronic device.

12. The method according to any one of claims 6 to 11, before deleting the to-be-transferred profile of the first electronic device, further comprising:
receiving a first deletion command sent by the profile server, wherein the first deletion command is used to instruct the first electronic device to delete the to-be-transferred profile.

13. The method according to claim 11 or 12, wherein the method further comprises:
receiving a second recovery command sent by the second electronic device, wherein the second restoration command is used to instruct the first electronic device to recover the to-be-transferred profile, and the second recovery command comprises the to-be-transferred profile; and
displaying that the status of the to-be-transferred profile is transfer failure.

14. A profile transfer method, applied to a first electronic device, wherein the first electronic device comprises M profiles of electronic subscriber identity modules eSIMs, and M is a positive integer greater than 1; and the method comprises:
displaying an account interface of a user on a cloud server in response to an operation command for a login control, wherein the login control is used by the user to log in to the cloud server;
sending a first query request to the cloud server in response to an operation command for a first query control, wherein the first query control is used by the user to query profile information of an eSIM module of the first electronic device;
receiving a first query response returned by the cloud server, and displaying information about the M profiles of eSIM modules of the first electronic device managed by the cloud server;
determining identifiers of N to-be-transferred profiles in response to an operation command for a first transfer interface, wherein the first transfer interface is used to determine whether a profile in the information about the M profiles of the eSIM modules is a to-be-transferred profile, and N is a positive integer less than or equal to M;
sending a first transfer request to the cloud server, wherein the first transfer request comprises: the identifiers of the N to-be-transferred profiles and an identifier of the first electronic device; and
receiving a first transfer response of the cloud server, and displaying transfer results of the N to-be-transferred profiles in the first transfer response.

15. The method according to claim 14, wherein before the receiving a first transfer response of the cloud server, for one of the M to-be-transferred profiles, the method further comprises:
receiving a first deletion command sent by the cloud server, wherein the first deletion command is used to instruct the first electronic device to delete the to-be-transferred profile;
deleting the to-be-transferred profile of the first electronic device;
displaying that a status of the to-be-transferred profile is transfer preparation completed; and
sending a first deletion message to the cloud server, wherein the first deletion message is used to notify the cloud server that deletion of the to-be-transferred profile of the first electronic device is completed.

16. The method according to claim 14 or 15, wherein the method further comprises:
receiving a recovery command sent by the cloud server, wherein the recovery command is used to instruct the first electronic device to recover the to-be-transferred profile, and the recovery command comprises the to-be-transferred profile; and
displaying that the status of the to-be-transferred profile is transfer failure.

17. A profile transfer method, applied to a second electronic device, wherein the second electronic device supports M profiles of electronic subscriber identity modules eSIMs, and M is a positive integer greater than 1; and the method comprises:
receiving a first message of a first electronic device, wherein the first message comprises at least one piece of transfer information of the first electronic device, and the transfer information comprises at least one of the following: an identifier of a to-be-transferred profile, an identifier of the first electronic device, or an address of a profile server corresponding to the to-be-transferred profile;
displaying the identifier of the at least one to-be-transferred profile in a second transfer interface, wherein the second transfer interface is used to display transfer of the at least one to-be-transferred profile;
obtaining and activating the at least one to-be-transferred profile according to the at least one piece of transfer information in response to an operation command for the second transfer interface; and
displaying that transfer of the at least one to-be-transferred profile on the second electronic device is completed.

18. The method according to claim 17, before the obtaining and activating the at least one to-be-transferred profile according to the at least one piece of transfer information, further comprising:
obtaining a status of the at least one to-be-transferred profile, wherein the status comprises at least one of the following: an activated state, a deactivated state, a default network connection state, a standby network connection state, and a to-be-transferred state;
determining a second priority of the at least one to-be-transferred profile according to the status of the at least one to-be-transferred profile; and
obtaining and activating the at least one to-be-transferred profile based on the second priority of the at least one to-be-transferred profile.

19. The method according to claim 18, wherein the first message further comprises the status of the at least one to-be-transferred profile.

20. The method according to claim 18 or 19, wherein the second transfer interface further comprises a status control, the status control is used to control a status of a profile, and the obtaining a status of the at least one to-be-transferred profile further comprises:
displaying the status of the at least one to-be-transferred profile in the second transfer interface; and
determining the status of the at least one to-be-transferred profile in response to an operation command for the status control.

21. The method according to claim 18 or 19, wherein the displaying that transfer of the at least one to-be-transferred profile on the second electronic device is completed comprises:
displaying that the status of the at least one to-be-transferred profile is transfer completed.

22. The method according to any one of claims 17 to 21, wherein before the obtaining the at least one to-be-transferred profile, for one of the at least one to-be-transferred profile, the method further comprises:
sending a first transfer request to the profile server according to the address of the profile server corresponding to the to-be-transferred profile, wherein the first transfer request comprises the identifier of the first electronic device and the identifier of the to-be-transferred profile; and
the obtaining the to-be-transferred profile comprises:
receiving a first transfer response from the profile server, wherein the first transfer response comprises a profile corresponding to the identifier of the to-be-transferred profile; and
displaying the obtained profile corresponding to the identifier of the to-be-transferred profile on the profile server.

23. The method according to any one of claims 17 to 21, wherein the obtaining the at least one to-be-transferred profile, for one of the at least one to-be-transferred profile, further comprises:
receiving a first encrypted to-be-transferred profile sent by the first electronic device, wherein the first encrypted to-be-transferred profile is generated after being encrypted based on the to-be-transferred profile.

24. The method according to claim 23, wherein the activating the at least one to-be-transferred profile, for one of the at least one to-be-transferred profile, comprises:
sending a second transfer request to the profile server according to the address of the profile server corresponding to the to-be-transferred profile, wherein the second transfer request comprises the identifier of the first electronic device and the identifier of the to-be-transferred profile; and
receiving a second transfer response from the profile server, wherein the second transfer response is used to indicate the first profile server to activate the to-be-transferred profile.

25. The method according to claim 24, wherein the second transfer response further comprises an updated profile corresponding to the identifier of the to-be-transferred profile; and
activating the updated profile.

26. The method according to claim 24 or 25, wherein the method further comprises:
sending a recovery command to the first electronic device, wherein the recovery command is used to instruct the first electronic device to recover the to-be-transferred profile, and the recovery command comprises the to-be-transferred profile; and
displaying that the status of the to-be-transferred profile is transfer failure.

27. A profile transfer method, applied to a second electronic device, wherein the second electronic device supports M profiles of electronic subscriber identity modules eSIMs, and M is a positive integer greater than 1; and the method comprises:
displaying an account interface of a user on a cloud server in response to an operation command for a login interface, wherein the login interface is used by the user to log in to the cloud server;
sending a first query request to the cloud server, wherein the first query request is used to query information about the M profiles of eSIM modules of the first electronic device managed by the cloud server;
receiving a first query response returned by the cloud server, and displaying information about the M profiles of eSIM modules of the first electronic device managed by the cloud server;
sending a first transfer request to the cloud server in response to an operation command for a second transfer interface, wherein the first transfer request comprises identifiers of N to-be-transferred profiles and an identifier of the first electronic device, the second transfer interface is used to determine whether a profile in the M profiles is a to-be-transferred profile, and N is a positive integer less than or equal to M;
receiving a first transfer response of the cloud server, wherein the first transfer response comprises profiles corresponding to identifiers of N to-be-transferred profiles of the first electronic device;
obtaining and activating, according to the first transfer response, profiles corresponding to the identifiers of the N to-be-transferred profiles; and
displaying activation results of the N profiles.

28. The method according to claim 27, wherein the method further comprises:
sending the activation results of the N profiles to the cloud server.

29. A profile transfer method, comprising:
obtaining, by a cloud server, account information of a user, wherein the account information of the user comprises information about M profiles of electronic subscriber identity modules eSIMs of a first electronic device, and an identifier of a second electronic device;
receiving, by the cloud server, a first query request, wherein the first query request is used to query information about the M profiles information of the first electronic device;
returning, by the cloud server, a first query response, wherein the first query response is used to indicate information about M profiles of the first electronic device;
receiving, by the cloud server, a first transfer request, wherein the first transfer request is used to request to transfer N profiles of the first electronic device;
sending, by the cloud server, a first transfer command to the second electronic device, wherein the first transfer command comprises N profiles corresponding to identifiers of the N to-be-transferred profiles, the N to-be-transferred profiles are N profiles in the M profiles, and N is a positive integer less than M; and
using, by the cloud server, the N profiles corresponding to identifiers of the N to-be-transferred profiles as N profiles of the second electronic device.

30. The method according to claim 29, wherein the method further comprises:
sending, by the cloud server, a first deletion command to the first electronic device, wherein the first deletion command is used to instruct the first electronic device to delete the N to-be-transferred profiles;
receiving, by the cloud server, a first deletion response of the first electronic device, wherein the first deletion response is used to indicate whether the first electronic device successfully deletes the N to-be-transferred profiles; and
determining, by the cloud server according to the first deletion response, N profiles corresponding to identifiers of the N to-be-transferred profiles.

31. The method according to claim 30, wherein the determining, by the cloud server according to the first deletion response, N profiles corresponding to identifiers of the N to-be-transferred profiles comprises:
using, by the cloud server, K to-be-transferred profiles that are successfully deleted by the first electronic device as K profiles corresponding to identifiers of the N to-be-transferred profiles, wherein K is a positive integer less than N.

32. The method according to claim 31, wherein the method further comprises:
changing, by the cloud server, statuses of the K to-be-transferred profiles that are successfully deleted by the first electronic device to deleted.

33. The method according to claim 30, wherein determining, by the cloud server according to the first deletion response, a profile corresponding to the identifier of the at least one to-be-transferred profile comprises:
generating, by the cloud server, (N-K) profiles according to identifiers of (N-K) to-be-transferred profiles that are not successfully deleted by the first electronic device.

34. The method according to claim 33, wherein the method further comprises:
setting, by the cloud server, statuses of the N-K to-be-transferred profiles as N-K profiles of the second electronic device.

35. The method according to any one of claims 29 to 34, wherein the method further comprises:
receiving, by the cloud server, a transfer result of a first profile sent by the second electronic device, wherein the transfer result is used to indicate that transfer of the first profile fails, the transfer result comprises the identifier of the to-be-transferred profile corresponding to the first profile, and the first profile is one of the N profiles; and
sending, by the cloud server, a recovery command to the first electronic device, wherein the recovery command is used to instruct the first electronic device to recover the to-be-transferred profile, and the recovery command comprises the to-be-transferred profile.

36. An electronic apparatus, comprising a touchscreen, one or more processors, a memory, multiple application programs, and one or more computer programs, wherein
the one or more computer programs are stored in the memory, the one or more computer programs comprise instructions, and when the instructions are executed by the one or more processors, the method according to any one of claims 1 to 16 is implemented.

37. An electronic apparatus, comprising a touchscreen, one or more processors, a memory, multiple application programs, and one or more computer programs, wherein
the one or more computer programs are stored in the memory, the one or more computer programs comprise instructions, and when the instructions are executed by the one or more processors, the method according to any one of claims 17 to 28 is implemented.

38. A communications apparatus, comprising one or more processors, a memory, multiple application programs, and one or more computer programs, wherein
the one or more computer programs are stored in the memory, the one or more computer programs comprise instructions, and when the instructions are executed by the one or more processors, the method according to any one of claims 29 to 35 is implemented.

39. A chip, comprising a processor and an interface circuit, wherein
the processor is coupled to a memory through the interface circuit, and the processor is configured to execute program code in the memory, to implement the method according to any one of claims 1 to 16, or the method according to any one of claims 17 to 28, or the method according to any one of claims 29 to 35.

40. A computer-readable storage medium, wherein the computer-readable storage medium stores a computer program, and when the computer program is run on a computer, the computer is enabled to perform the method according to any one of claims 1 to 16, or the computer is enabled to perform the method according to any one of claims 17 to 28, or the computer is enabled to perform the method according to any one of claims 29 to 35.
